# EUROPEAN PATENT APPLICATION

(11) **EP 4 836 554 A1**
(43) Date of publication of application: **04.11.2026**
(21) Application number: 25751739.1
(22) Date of filing: 08.02.2025
(51) Int. Cl.: H04W 72/04, H04W 74/00

(54) **RESOURCE ALLOCATION METHOD, DEVICE, SYSTEM, STORAGE MEDIUM, AND PRODUCT**

(30) Priority: 08.02.2024 CN 202410178241; 06.06.2024 CN 202410737792
(71) Applicant: Honor Device Co., Ltd., Shenzhen, Guangdong 518040 (CN)
(72) Inventor: CAO, Yongzhao, Shenzhen, Guangdong 518040 (CN)
(74) Representative: Isarpatent
(86) International application number: PCT/CN2025/076554
(87) International publication number: WO 2025/168129

(57) **Abstract**

Embodiments of this application provide a resource allocation method, a device, a system, a storage medium, and a product, and relate to the field of communication technologies. The method includes: sending, by a network device, first indication information to a terminal device. The terminal device may determine a first set of time-frequency domain resources under the indication of the first indication information. The first set of time-frequency domain resources may be a time-frequency domain resource of a target downlink beam. A quantity of resources in the first set of time-frequency domain resources is less than a quantity of resources in a second set of time-frequency domain resources, and the second set of time-frequency domain resources is time-frequency domain resources of all downlink beams. The first set of time-frequency domain resources with a smaller quantity of time-frequency domain resources is used for random access, so that a relatively small quantity of time-frequency domain resources are actually used to perform random access. This reduces a quantity of time-frequency domain resources that need to be detected by the network device and a quantity of blind detections by the network device in a random access process in which the network device needs to perform blind detection on each time-frequency domain resource, thereby implementing effective energy saving of the network device.

## Description

This application claims priorities to Chinese Patent Application No. 202410178241.9, filed with the China National Intellectual Property Administration on February 8, 2024 and entitled "Resource Allocation Method, System, Storage Medium, and Product", and to Chinese Patent Application No. 202410737792.4, filed with the China National Intellectual Property Administration on June 6, 2024 and entitled "Resource Allocation Method, Device, System, Storage Medium, and Product", which are incorporated herein by reference in their entireties.

### TECHNICAL FIELD

This application relates to the technical field of communications, and in particular, to a resource allocation method, a device, a system, a storage medium, and a product.

### BACKGROUND

In a wireless communication system, when accessing a wireless network initially, a terminal device needs to initiate a random access procedure to a network device by using an initial access channel. Before initiating the random access procedure, the terminal device needs to first learn of the time-frequency domain resource allocated by the network device to the terminal device on the initial access channel.

Currently, a network device broadcasts information in different beam directions by using a beamforming (Beam forming) technology, and the broadcast information may be received by a terminal device in each beam coverage area. Each terminal device may determine a random access resource evenly allocated to each beam based on the broadcast information, to obtain a random access resource allocated to an optimal beam selected by the terminal device. Therefore, a random access procedure is initiated on an initial access channel corresponding to the optimal beam.

However, when only the broadcast information is used to allocate time-frequency domain resources, an allocation mode is relatively simple, causing a waste of time-frequency domain resources, and consequently, blind detection by the network device is difficult and energy consumption is relatively large.

### SUMMARY

Embodiments of this application provide a resource allocation method, a device, a system, a storage medium, and a product, to optimize allocation modes of time-frequency domain resources.

An embodiment of this application provides a communication method. The method may be performed by a terminal device, or may be performed by a component (for example, a chip or a circuit) configured in the terminal device. This is not limited in this application.

For example, the method includes: receiving first indication information, where the first indication information is used to indicate a first set of time-frequency domain resources. A quantity of resources in the first set of time-frequency domain resources is less than a quantity of resources in a second set of time-frequency domain resources. The second set of time-frequency domain resources is time-frequency domain resources of all downlink beams. The first set of time-frequency domain resources are a time-frequency domain resource of a target downlink beam. The first set of time-frequency domain resources is used for random access.

It should be understood that all beams may be all beams formed when a network device performs beamforming. The target downlink beam is a beam actually used or delivered by the network device.

Optionally, the first set of time-frequency domain resources may include at least one third time-frequency domain resource. A first quantity may be a quantity of resources of at least one third time-frequency domain resource. The second set of time-frequency domain resources may include at least one fourth time-frequency domain resource, and the second quantity may be a quantity of resources of the at least one fourth time-frequency domain resource. The first quantity is less than the second quantity.

It should be understood that the time-frequency domain resource may be a radio resource in two dimensions: time and frequency in a communication system. The time-frequency domain resource includes time allocation (such as radio frames, subframes, slots, and OFDM (Orthogonal Frequency Division Multiplexing, orthogonal frequency division multiplexing) symbols) and frequency allocation (for example, subcarriers and physical resource blocks) of a radio signal.

It should be understood that the time-frequency domain resource may include a time domain resource and a frequency domain resource. The time domain resource may be a slot in which the terminal device can use an initial access channel, and the time domain resource may also be referred to as a time domain location. The frequency domain resource may be a frequency domain in which the terminal device can use an initial access channel, and the frequency domain resource may also be referred to as a frequency domain location.

It should be understood that the initial access channel may be a RACH (Random Access Channel, random access channel) or a PRACH channel. When the initial access channel is a PRACH channel, the time-frequency domain resource may be a PRACH occasion (a physical random access channel occasion, PO for short).

In the technical solution of this application, on the basis that time-frequency domain resources of all downlink beams are determined, the first indication information may be further received, to determine the first set of time-frequency domain resources, and the first set of time-frequency domain resources may be time-frequency domain resources of the target downlink beam. The quantity of resources in the first set of time-frequency domain resources is less than the quantity of resources in the second set of time-frequency domain resources, the second set of time-frequency domain resources is time-frequency domain resources of all downlink beams. The first set of time-frequency domain resources with a smaller quantity of time-frequency domain resources is used for random access, so that a relatively small quantity of time-frequency domain resources are actually used to perform random access. In a random access process, the network device needs to perform blind detection on the time-frequency domain resources. The reduced quantity of time-frequency domain resources can effectively reduce a quantity of blind detections by the network device, thereby effectively reducing blind detection pressure of the network device, and effectively saving energy.

As an optional implementation, the first indication information may include: a quantity of beams of the target downlink beam and resource configuration information of the target downlink beam. The target downlink beam is a beam actually sent by the network device, the quantity of beams is less than a total quantity of beams, and the total quantity of beams is a quantity of beams of all beams obtained by the network device through beamforming.

Optionally, the first indication information may further include an SSB index of the target downlink beam, so as to determine the quantity of beams of the target downlink beam by using the SSB index.

Optionally, the first indication information may be carried in a SIB1, and the SIB1 needs to be sent by using a beam. Therefore, the network device may further configure scanning periods of different beams, and indicate transmission of the SIB1 by using different scanning periods.

Compared with the prior art, PRACH resources may be increased or decreased according to parameters such as the actual quantity of downlink beams and the resource configuration information, thereby improving an energy-saving gain. Further, the processing unit determines the first set of time-frequency domain resources based on the quantity of beams and the resource configuration information.

In a possible design, the resource configuration information may include a maximum quantity of time-frequency domain resources or a quantity of slots; and times of association between time-frequency domain resources and beams.

A PRACH resource is used as an example herein. For example, the maximum quantity of time-frequency domain resources may be a maximum quantity of resources of a PRACH occasion. The maximum quantity of PRACH resources is used by the terminal device to obtain corresponding PRACH resources.

Preferably, the maximum quantity of resources of the PRACH occasion may be indicated in the SIB1.

Optionally, the first set of time-frequency domain resources may be determined based on the quantity of times of association between the time-frequency domain resource and the beams and the quantity of beams. Alternatively, the first set of time-frequency domain resources is determined based on the maximum quantity of time-frequency domain resources or the quantity of slots and the quantity of beams. Alternatively, the first set of time-frequency domain resources is determined based on the quantity of times of association between the time-frequency domain resources and the beams, the maximum quantity of time-frequency domain resources or the quantity of slots, and the quantity of beams.

In still another possible design, the maximum quantity of time-frequency domain resources or the quantity of slots may be obtained by using a resource list or preset.

The communication method of this application may further include: obtaining a resource list, where the resource list is a list including time-frequency domain resources determined for each target downlink beam; and determining the maximum quantity of time-frequency domain resources or the quantity of slots based on the resource list; or obtaining the maximum quantity or the quantity of slots preset for the time-frequency domain resources.

The resource list, the maximum quantity, or the slot quantity may be indicated by using signaling such as DCI.

In still another optional implementation, the first indication information further includes: a preset target resource state, where the target resource state is a first resource state or a second resource state, the first resource state is a state in which the terminal device uses the first set of time-frequency domain resources, and the second resource state is a state in which the terminal device uses the second set of time-frequency domain resources.

Optionally, when the target resource state is the second resource state, random access is performed by using the second set of time-frequency domain resources.

Optionally, when the target resource state is the first resource state, random access is performed by using the first set of time-frequency domain resources.

Optionally, the quantity of beams may be used to determine the target resource state. For example, when the quantity of first beams is less than 1/2 of the quantity of all beams, a format with a small PO is used, that is, the first set of time-frequency domain resources corresponding to the first resource state is used; otherwise, the other format is used, that is, the second set of time-frequency domain resources corresponding to the second resource state is used. The other format is the format with more POs.

Optionally, a quantity of POs corresponding to the first resource state is less than a quantity of POs corresponding to the second resource state.

In this embodiment, the resource state is related to a quantity of actually delivered beams. A larger quantity of beams and a smaller quantity of beams use different resource states. In addition, the quantity of beams can reflect a busy degree of the network device, so that a time-frequency domain resource is dynamically adjusted based on a requirement. This prevents the network device from performing invalid blind detection, which improves the energy-saving gain.

In still another possible design, the first indication information includes: preamble allocation information and resource allocation information of each target downlink beam, where the target downlink beam is a beam actually sent by the network device.

In the communication method of this application, determining a first set of time-frequency domain resources based on the first indication information specifically includes: determining the first set of time-frequency domain resources based on the preamble allocation information and the resource allocation information of each target downlink beam.

Further, multiple pieces of preamble allocation information and multiple pieces of resource allocation information may be predefined. Some fields in the first indication information may be written into related information of the preamble allocation information of each target downlink beam and related information of the resource allocation information, so that preamble allocation information of each target downlink beam is determined based on the related information of the preamble allocation information of each target downlink beam, and the resource allocation information is determined based on related information of the resource allocation information.

For example, the related information may include: information such as an information identifier, an information address, and/or an information name. Different information may be distinguished between by related information. For example, related information of different resource allocation information is different, and related information of different preamble allocation information is different.

In a possible design, the preamble allocation information includes any one of the following:
a quantity of preambles of each target downlink beam;
a preamble proportion of each target downlink beam, where the preamble proportion is a proportion of a code quantity of preambles of each target downlink beam to a total quantity of preambles; and
the resource allocation information includes any one of the following:
   a quantity of time-frequency domain resources allocated to each target downlink beam; and
   a time-frequency domain resource allocated to each target downlink beam.

The communication method of this application further includes: determining the first set of time-frequency domain resources based on the quantity of preambles of each target downlink beam and the quantity of time-frequency domain resources allocated to each target downlink beam.

Alternatively, the first set of time-frequency domain resources is determined based on the preamble proportion of each target downlink beam and the time-frequency domain resource allocated to each target downlink beam.

Alternatively, the first set of time-frequency domain resources is determined based on the quantity of preambles of each target downlink beam and the time-frequency domain resource allocated to each target downlink beam.

Alternatively, the first set of time-frequency domain resources is determined based on the preamble proportion of each target downlink beam and the quantity of time-frequency domain resources allocated to each target downlink beam.

In the technical solution of this application, the preamble allocation information and the resource allocation information of each target downlink beam are used to adjust a time-frequency domain resource, so that a time-frequency domain resource is flexibly allocated to each target downlink beam, and a time-frequency domain resource allocation manner is improved. A more efficient allocation result is obtained, which effectively avoids blind detection on a non-downlink beam, and improves the energy-saving gain.

In still another optional implementation, the first indication information may be further indicated by using downlink control signaling. The method further includes:
receiving the downlink control signaling, where the downlink control signaling carries the first indication information, and the first indication information includes template indication information;
determining a target resource template from at least one preconfigured resource template based on the template indication information, where the resource template is a time-frequency domain resource preconfigured for each target downlink beam; and determining the first set of time-frequency domain resources based on the target resource template.

Optionally, at least one resource template may be predefined, and each resource template refers to an allocation mode of a time-frequency domain resource. Quantities of time-frequency domain resources of different resource templates may be different, and resource allocation modes may also be different.

Optionally, the first indication information may include, for example, mode index information. The template indication information may be, for example, information including the mode index information. That is, the template index information may be a template index of the target resource template.

In a possible design, the template indication information includes:
a template identifier or a template index, and/or
a quantity of beams of the target downlink beam, where the quantity of beams is used to determine the target resource template from the at least one resource template.

Compared with the prior art, resource reallocation is implemented through template allocation, and resource allocation is performed in a lighter manner, thereby effectively improving a PRACH resource allocation manner.

As still another optional implementation, the first indication information includes: beam information of the target downlink beam;
the first set of time-frequency domain resources are a time-frequency domain resource obtained by excluding, from the second set of time-frequency domain resources, a time-frequency domain resource on which the target downlink beam is not received; or the first set of time-frequency domain resources are a time-frequency domain resource on which the target downlink beam is received in the second set of time-frequency domain resources.

It should be understood that the beam information may be information used to present different beams. The beam information may be, for example, information such as a beam body, a beam index, or an identifier. Different beams have different beam information. A corresponding beam may be determined by using beam information. The beam body may be an actually delivered beam signal.

Optionally, the communication method of this application further includes:
determining, as the first set of time-frequency domain resources, a remaining time-frequency domain resource obtained by excluding, from the second set of time-frequency domain resources, a time-frequency domain resource on which the target downlink beam is not received; or determining, as the first set of time-frequency domain resources, a time-frequency domain resource on which the target downlink beam is received in the second set of time-frequency domain resources.

It should be understood that the first indication information may include the target downlink beam, for example, an SSB index of the target downlink beam. Therefore, a decrease in the target downlink beam, that is, a decrease in a quantity of actual beams, may directly cause a decrease in the time-frequency domain resource. It should be further understood that when PRACH resources of some SSBs are excluded, the network device does not detect these SSBs, thereby further reducing energy consumption.

Before receiving the first indication information, the method may further include: receiving second indication information; and determining the second set of time-frequency domain resources based on the second indication information.

The second set of time-frequency domain resources is time-frequency domain resources of all downlink beams. The time-frequency domain resources of all downlink beams may be determined by using the second indication information. The time-frequency domain resources of all the downlink beams may be evenly allocated to all the downlink beams, so that corresponding time-frequency domain resources are evenly allocated to all the downlink beams by using the second indication information.

The second set of time-frequency domain resources may be time-frequency domain resources of all downlink beams. Quantities of time-frequency domain resources of the downlink beams in the second set of time-frequency domain resources may be equal. For example, if there are eight downlink beams, each downlink beam may have four time-frequency domain resources.

Optionally, receiving, by the terminal device, second indication information may include: receiving, by the terminal device, the second indication information at a first moment. Receiving, by the terminal device, first indication information may include: receiving, by the terminal device, the first indication information at a second moment. The first moment may be earlier than the second moment.

In a second aspect, an embodiment of this application provides a communication method. The method may be executed by a terminal device, or may be executed by a component (for example, a chip or a circuit) configured in the network device. This is not limited in this application.

For example, the method includes: receiving third indication information, where the third indication information is configured to indicate a third set of time-frequency domain resources; and determining a third set of time-frequency domain resources based on the third indication information, where the third set of time-frequency domain resources is different from the second set of time-frequency domain resources, the second set of time-frequency domain resources is time-frequency domain resources of all downlink beams, and the third set of time-frequency domain resources is used for random access.

Optionally, the third indication information may be configured to indicate the target channel configuration information of the time-frequency domain resource. The channel configuration information may be configured to configure a time-frequency domain resource of an initial access channel.

It should be understood that the channel configuration information of the time-frequency domain resource may be related to the quantity of users. Further, the network device may determine the channel configuration information of the time-frequency domain resource of each beam on the initial access channel based on the quantity of users in an area covered by each beam.

The transmission period in the channel configuration information is taken as an example, and the transmission period of the time-frequency domain resource is inversely proportional to the quantity of users. A larger quantity of users indicates more resources required. In this case, a smaller transmission period of the time-frequency domain resource is, a smaller quantity of users is, fewer time-frequency domain resources are required, and a larger transmission period of the time-frequency domain resource is required.

Optionally, the third set of time-frequency domain resources may be determined based on the target channel configuration information and the second set of time-frequency domain resources.

In the technical solution of this application, the network device may indicate the third indication information of different time-frequency domain resources to the user based on different requirements, and configure a new time-frequency domain resource, so that the time-frequency domain resource is more adapted to a use requirement, and flexibility of adjusting the time-frequency domain resource is improved. In addition, the time-frequency domain resource may be re-determined by using the indication of the third indication information, so that more lightweight resource scheduling may be implemented, and time-frequency domain resource scheduling efficiency may be improved.

In an optional implementation, the third set of time-frequency domain resources includes a first time-frequency domain resource and a second time-frequency domain resource, the first time-frequency domain resource belongs to or does not belong to the second set of time-frequency domain resources, and the second time-frequency domain resource does not belong to the second set of time-frequency domain resources.

It may be understood that, as the quantity of users decreases, the network device may re-indicate a new transmission period, to adjust a time-frequency domain resource by using the new transmission period, thereby implementing flexible adjustment of the time-frequency domain resource, and improving utilization of the time-frequency domain resource.

In the technical solution of this application, another time-frequency domain resource other than the second set of time-frequency domain resources is set, for example, a second time-frequency domain resource that does not belong to the second set of time-frequency domain resources, to implement re-divisioning of the time-frequency domain resource by using the third indication information, thereby improving the flexibility of time-frequency domain resource scheduling. As the quantity of users increases, more time-frequency domain resources may be set, so that setting of the time-frequency domain resource is related to the quantity of users, and invalid blind detection of the network device may be avoided, thereby implementing effective energy saving of the network device.

In still another optional implementation, the method further includes at least one of the following:
a transmission period of the third set of time-frequency domain resources is different from a transmission period of the second set of time-frequency domain resources;
a quantity of resources in the third set of time-frequency domain resources is different from a quantity of resources in the second set of time-frequency domain resources; and
a second time-frequency domain resource of the third set of time-frequency domain resources is different from a time-frequency domain resource of the second set of time-frequency domain resources.

Optionally, a first time-frequency domain resource in the third set of time-frequency domain resources is the same as or different from a time-frequency domain resource in the second set of time-frequency domain resources.

Optionally, a transmission period of the third set of time-frequency domain resources is less than a transmission period of the second set of time-frequency domain resources. A transmission period of the third set of time-frequency domain resources may be further greater than a transmission period of the second set of time-frequency domain resources. A quantity of resources in the third set of time-frequency domain resources may be less than a quantity of resources in the second set of time-frequency domain resources. A quantity of resources in the third set of time-frequency domain resources may be greater than a quantity of resources in the second set of time-frequency domain resources.

Through time-frequency domain resource adjustment, a transmission period, a resource quantity, and a time-frequency domain resource of the third set of time-frequency domain resources are changed, so that more time-frequency domain resources are provided, and the third set of time-frequency domain resources are changed. Therefore, a time of scanning a time-frequency domain resource by the network device changes accordingly, so that blind detection of the network device is more scientific, scanning efficiency of the network device is effectively improved, and energy saving is implemented efficiently.

In a possible design, the third indication information is carried in downlink control information DCI, a MAC-CE, or dedicated signaling.

It should be understood that a field may be set in the downlink control information DCI, the MAC-CE, or the dedicated signaling to carry the third indication information.

The following describes in detail a solution of adding a new time-frequency domain resource by using channel configuration information. In a related technology, the time-frequency domain resource may be configured by using a time domain allocation table. To quickly indicate the time-frequency domain resource, the target channel configuration information may be indicated by using the time domain allocation table.

In still another possible design, upon receiving the third indication information, the terminal device may further receive fourth indication information. Further, the terminal device may update the third set of time-frequency domain resources based on the fourth indication information. The updated third set of time-frequency domain resources may be used for random access.

It may be understood that the fourth indication information may be channel configuration information configured for the PRACH. For example, the fourth indication information may be information such as a preamble format, a subframe number/a subframe number.

In addition, the fourth indication information may be carried in DCI, a MAC-CE, or dedicated signaling.

In still another optional implementation, the third indication information is configured to indicate a target index in the time domain allocation table; and the method further includes:
determining periodic channel configuration information corresponding to the target index as the target channel configuration information based on the time domain allocation table; and determining a third set of time-frequency domain resources based on the target channel configuration information.

In this embodiment of this application, a target index is indicated by using the time domain allocation table, and channel configuration information corresponding to the target index is determined as the target channel configuration information, to implement lighter and more flexible channel configuration information adjustment, so as to further indicate a new time-frequency domain resource by using the channel configuration information, thereby improving the adjustment efficiency of time-frequency domain resource.

In a possible design, the third indication information includes a target index, and the target index is any one of the following:
a first index in a time domain allocation table; and
a second index that meets a first constraint condition in the time domain allocation table.

It should be noted that, the target index is indicated by using the time domain allocation table, so that the target channel configuration information may be further determined to implement precise and lightweight indication of the target channel configuration information.

It should be noted that, when the channel configuration information of the PRACH is adjusted, a value of y in the channel configuration information in the target index in the time domain allocation table may be specifically adjusted. If the value of y becomes larger, a period corresponding to the PRACH is prolonged.

In still another possible design, when the target index is the second index, the second index that meets the first constraint condition in the time domain allocation table is any one of the following:

The second index is an index whose preamble format in the time domain allocation table is the first preamble format, and the first preamble format is indicated by the first message.

The second index is an index whose starting symbol in the time domain allocation table is a preset target symbol.

The second index is an index in the time domain allocation table whose subframe number is the same as the subframe number of the third index, and/or whose preamble format is the same as the preamble format of the third index, and the third index is indicated by the second message.

The second index is an index whose period is the same as the target period in the time domain allocation table, the target period is obtained by performing multiple adjustment based on a period of the fourth index, and the fourth index is indicated by the third message.

Optionally, the first message, the second message, or the third message may be any one of a system message, for example, a SIB1, a master information block (Master Information Block, master information block), or a master system information block.

In the technical solution of this application, index indication is performed in an index constraint manner, so that channel configuration information is determined by using an indication index, and a new time-frequency domain resource is further configured by using the channel configuration information, thereby implementing flexible adjustment of the time-frequency domain resource.

In any embodiment of this application, the terminal device may be UE that meets a first communication standard. The terminal device may also be UE that meets a second communication standard. In addition, the terminal device may also be UE that meets the first communication standard and the second communication standard.

For example, the first communication standard may be an existing or existing communication standard. The second communication standard may be a latest communication standard. That is, a publication time of the first communication standard is earlier than a publication time of the second communication standard. For example, the first communication standard may be an R17 standard or an R18 standard, and the second communication standard may be an R19 standard.

Further, the terminal device may support the second set of time-frequency domain resources in the first communications standard, and may support the first set of time-frequency domain resources in the second communications standard.

In this implementation, a PRACH period corresponding to a legacy (legacy) terminal device is designed to be greater than a PRACH period corresponding to a new R19 terminal device, so that a PRACH occasion becomes dense in a same time period, and a PRACH resource of a legacy user is not affected. In addition, more PRACH occasions are provided for new terminal devices, so that PRACH resources are more compatible.

In still another possible design, the time domain allocation table includes at least one of the following: a first table, where the first table includes an existing time domain table and/or a newly added time domain table;
a second table, where the second table is a table that is selected from the first table and corresponding to M first indexes that meet the second constraint condition; and
a third table, where the third table is a table determined by using time domain configuration information.

It should be understood that the foregoing time domain allocation table may be, for example, the first table. The first table may include at least one list item, and the second table may be generated based on at least one list item of the first table. For example, the at least one list item may form an information format of the channel configuration information.

Optionally, the second table may be generated based on at least one list item in the first table. That is, new column information is added to the at least one list item in the first table. The column information may include data corresponding to the at least one list item.

A process where the network device employs the third indication information to instruct the terminal device to acquire the corresponding PRACH resource may specifically include:

The network device selects some content from an existing table for indication. For example, a part whose target channel configuration information is greater than a period threshold is selected, that is, a new table needs to be established for each table, but content is selected from the existing table.

It may be understood that when the time domain allocation table includes the third table, the time domain configuration information is carried in an RRC message or a system message.

Further, when the time domain allocation table includes the second table, the method further includes at least one of the following:
selecting a first index whose period is greater than a period threshold from the first table; and
selecting first indexes with the same subframe number and different periods from the first table.

Optionally, a first index whose period is greater than the period threshold may be selected from the first table, to obtain a second table including channel configuration information corresponding to the first index. Alternatively, first indexes that have the same subframe number and different periods are selected from the first table, to obtain a second table including channel configuration information corresponding to the first index.

In still another possible design, the time domain configuration information includes configuration information corresponding to at least one list item, the configuration information includes at least one value of the corresponding list item, and the method further includes:
selecting a target value for each list item based on at least one value in the configuration information of each list item; and
determining one piece of index content based on the target value respectively corresponding to the at least one list item, where the third table includes a plurality of pieces of index content.

Optionally, the index content may include a newly added index and channel configuration information corresponding to the newly added index. The channel configuration information corresponding to the newly added index may be a target value respectively corresponding to at least one list item.

Optionally, the time domain allocation table includes a plurality of indexes and channel configuration information associated with each index.

Each piece of channel configuration information includes at least one of the following:
A preamble format;
a period, where the period is determined based on y, and y is a modulo operation result obtained by performing a modulo operation by using x as a modulo value; and
a subframe number/subframe number;
a starting symbol;
the number of PRACH slots within a subframe;
the number of time-domain PRACH occasions within a PRACH slot; and
a PRACH duration.

It may be understood that, in actual application, the third set of time-frequency domain information may be determined based on at least one of the foregoing channel configuration information. In this embodiment, a type and a quantity of the at least one piece of information that participates in time-frequency domain resource adjustment are not limited too much.

According to a third aspect, an embodiment of this application provides a communication method. The method may be executed by a network device, or may be executed by a component (for example, a chip or a circuit) configured in the network device. This is not limited in this application.

For example, the method includes:
sending first indication information to a terminal device, where the first indication information is configured to indicate a first set of time-frequency domain resources, and a quantity of resources in the first set of time-frequency domain resources is less than a quantity of resources in the second set of time-frequency domain resources; and the second set of time-frequency domain resources is time-frequency domain resources of all downlink beams, the first set of time-frequency domain resources is time-frequency domain resources of target downlink beams, and the first set of time-frequency domain resources is used for random access.

Optionally, the network device is further configured to: send second indication information to the terminal device, where the second indication information may be configured to determine a second set of time-frequency domain resources, and the second set of time-frequency domain resources may be time-frequency domain resources of all downlink beams.

Optionally, that the network device sends the second indication information to the terminal device may be: The network device broadcasts the second indication information to the terminal device. sending, by the network device, first indication information to the terminal device may include: The network device broadcasts the first indication information to the terminal device.

According to a fourth aspect, an embodiment of this application provides a communication method. The method may be executed by a network device, or may be executed by a component (for example, a chip or a circuit) configured in the network device. This is not limited in this application.

For example, the method includes:
sending third indication information to a terminal device, where the third indication information is configured to indicate a third set of time-frequency domain resources, the third set of time-frequency domain resources is different from a second set of time-frequency domain resources, and the second set of time-frequency domain resources is time-frequency domain resources of all downlink beams; and the third set of time-frequency domain resources are used for random access.

According to a fifth aspect, an embodiment of this application provides a resource allocation apparatus, including modules or units configured to perform the method in the first aspect or any one possible implementations in the first aspect.

According to a sixth aspect, a resource allocation apparatus is provided, including modules or units configured to perform the method in the second aspect or any one possible implementations in the second aspect.

According to a seventh aspect, a resource allocation apparatus is provided, including modules or units configured to perform the method in the third aspect or any one possible implementations in the third aspect.

According to an eighth aspect, a resource allocation apparatus is provided, including modules or units configured to perform the method in the third aspect or any one possible implementations in the third aspect.

According to a ninth aspect, a resource allocation apparatus is provided, including a processor. The processor is coupled to the memory, and may be configured to execute an instruction in the memory, to implement the method in the first aspect to the fourth aspect and any one possible implementations in the first aspect to the fourth aspect. Optionally, the apparatus further includes the memory. Optionally, the apparatus further includes a communication interface. The processor is coupled to the communication interface.

In an implementation, the resource allocation apparatus is a terminal device. When the resource allocation apparatus is a terminal device, the communication interface may be a transceiver, or an input/output interface.

In another implementation, the resource allocation apparatus is a chip configured in the terminal device. When the resource allocation apparatus is the chip configured in the terminal device, the communication interface may be the input/output interface.

Optionally, the transceiver may be a transceiver circuit. Optionally, the input/output interface may be an input/output circuit.

In an implementation, the resource allocation apparatus is a network device. When the resource allocation apparatus is a network device, the communication interface may be a transceiver, or an input/output interface.

In another implementation, the resource allocation apparatus is a chip configured in the network device. When the resource allocation apparatus is the chip configured in the network device, the communication interface may be the input/output interface.

Optionally, the transceiver may be a transceiver circuit. Optionally, the input/output interface may be an input/output circuit.

According to a tenth aspect, a communication apparatus is provided, including a processor. The processor is coupled to a memory, and may be configured to execute an instruction in the memory, to implement the method in any possible implementation in the first aspect to the fourth aspect. Optionally, the apparatus further includes the memory. Optionally, the apparatus further includes a communication interface. The processor is coupled to the communication interface.

In an implementation, the communication apparatus is a network device. When the communication apparatus is the network device, the communication interface may be a transceiver or an input/output interface.

In another implementation, the communication apparatus is a chip configured in a network device. When the communication apparatus is a chip configured in a network device, the communication interface may be an input/output interface.

Optionally, the transceiver may be a transceiver circuit. Optionally, the input/output interface may be an input/output circuit.

According to an eleventh aspect, a processor is provided, including an input circuit, an output circuit, and a processing circuit. The processing circuit is configured to receive a signal through an input circuit, and send a signal through an output circuit, so that the processor performs the method in the first aspect to the fourth aspect and any one possible implementations in the first aspect to the fourth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, a receiver, a signal output by the output circuit may be output to, for example, a sender and sent by the sender, and the input circuit and the output circuit may be the same circuit, where the circuit is separately used as the input circuit and the output circuit at different moments. Specific implementations of the processor and various circuits are not limited in embodiments of this application.

According to a twelfth aspect, a processing apparatus is provided, including a processor and a memory. The processor is configured to read an instruction stored in the memory, receive a signal through a receiver, and send a signal through a sender, to perform the method in the first aspect to the fourth aspect and any one possible implementations in the first aspect to the fourth aspect.

Optionally, there are one or more processors and one or more memories.

Optionally, the memory may be integrated in the processor, or the memory and the processor are separately disposed.

In a specific implementation process, the memory may be a non-transitory (non-transitory) memory, such as a read-only memory (read-only memory, ROM). The memory and the processor may be integrated on a same chip, or may be respectively disposed on different chips. A type of the memory and a manner of disposing the memory and the processor are not limited in this embodiment of this application.

It should be understood that, for a related data interaction process, for example, sending indication information may be a process of outputting indication information from the processor, and receiving capability information may be a process of receiving and inputting capability information by the processor. Specifically, data output by the processor may be output to the transmitter, and input data received by the processor may be from the receiver. The transmitter and the receiver may be collectively referred to as a transceiver.

The processing apparatus in the foregoing thirteenth aspect may be one or more chips. The processor in the processing apparatus may be implemented by hardware or may be implemented by software. When implemented through hardware, the processor may be a logic circuit, an integrated circuit, or the like. When the processor is implemented through software, the processor may be a general-purpose processor, and is implemented by reading software code stored in the memory. The memory may be integrated in the processor, may be located outside the processor, and exists independently.

According to a fourteenth aspect, an embodiment of this application provides a resource allocation system, including: a network device and a terminal device, where the network device and the terminal device respectively include: a processor, a memory, and a transceiver, where the transceiver is configured to send and receive data, the memory is configured to store a code instruction, the processor is configured to run the code instruction, and when executing the code instruction stored in the memory, the processor is configured to instruct the terminal device to perform the method in the first aspect to the fourth aspect and any one possible implementations in the first aspect to the fourth aspect.

According to a fifteenth aspect, an embodiment of this application provides a network device, including: a processor, a memory, and a transceiver, where the memory stores a computer executable instruction; the transceiver is configured to send and receive data; and the processor executes the computer executable instruction stored in the memory, so that the network device performs the method in any one possible implementations in the third aspect or the fourth aspect.

According to a sixteenth aspect, an embodiment of this application provides a terminal device, including a processor, a memory and a transceiver, where the memory is configured to store a computer-executable instruction, the transceiver is configured to receive and send data; and the processor is configured to run the computer-executable instruction stored in the memory, so that the terminal device performs the method in any one possible implementations in the first aspect or the second aspect.

According to a seventeenth aspect, an embodiment of this application provides a computer-readable storage medium, where the computer-readable storage medium stores a computer program or an instruction, and when the computer program or instruction runs on a computer, the computer performs the method in any one possible implementations in the first aspect to the fifteenth aspect and the first aspect to the fourth aspect.

According to an eighteenth aspect, this application provides a chip or a chip system. The chip or the chip system includes at least one processor and a communication interface. The communication interface and the at least one processor are interconnected through a line. The at least one processor is configured to run a computer program or instruction, to perform the method in the first aspect to the fourth aspect and any one possible implementations in the first aspect to the fourth aspect. The communication interface in the chip may be an input/output interface, a pin, a circuit, or the like.

According to a nineteenth aspect, an embodiment of this application provides a computer program product including a computer program. When the computer program is run on a computer, the computer is enabled to perform the method in the first aspect to the fourth aspect and any one possible implementations in the first aspect to the fourth aspect.

In a possible implementation, the chip or the chip system described above in this application further includes memories of each module of the method in at least one formula, and the at least one memory stores an instruction. The memory may be a storage unit, for example, a register or a cache, inside the chip, or may be a storage unit (for example, a read-only memory or a random access memory) of the chip.

It should be understood that, the first aspect to the fourth aspect of this application correspond to the technical solution of the first aspect of this application, and the beneficial effects achieved by each aspect and the corresponding feasible implementations are similar. Details are not described again.

Therefore, according to the resource allocation method, system, storage medium, and product provided in embodiments of this application, the network device instructs the quantity of the users to dynamically adjust the time-frequency domain resource, so that the network device does not need to keep blind detection, and provides a more flexible resource scheduling manner, thereby reducing energy consumption of a base station.

### BRIEF DESCRIPTION OF DRAWINGS

FIG. 1A is an architectural diagram of a communication system to which an embodiment of this application is applied;
FIG. 1B is a diagram of an overall architecture of communication connections between network elements according to an embodiment of this application;
FIG. 2 is a signaling diagram of a resource allocation method according to an embodiment of this application from a perspective of device interaction;
FIG. 3 is a diagram of grouping time-frequency domain resources according to an embodiment of this application;
FIG. 4 is an example diagram of transmission periods of SSB0 and SSB1 according to an embodiment of this application;
FIG. 5 is a signaling diagram of a resource allocation method according to an embodiment of this application;
FIG. 6 is an example diagram of a time-frequency domain resource according to an embodiment of this application;
FIG. 7 is still another signaling diagram of a resource allocation method according to an embodiment of this application;
FIG. 8 is a diagram of a time-frequency domain resource according to an embodiment of this application;
FIG. 9 is still another signaling diagram of a resource allocation method according to an embodiment of this application;
FIG. 10 is still another signaling diagram of a resource allocation method according to an embodiment of this application;
FIG. 11 is still another signaling diagram of a resource allocation method according to an embodiment of this application;
FIG. 12 is a diagram of a resource allocation mode according to an embodiment of this application;
FIG. 13 is another signaling diagram of a resource allocation method according to an embodiment of this application;
FIG. 14 is an example diagram of excluding a time-frequency domain resource according to an embodiment of this application;
FIG. 15 is an example diagram of reclaiming a time-frequency domain resource according to an embodiment of this application;
FIG. 16 is an example diagram of a resource allocation apparatus according to an embodiment of this application;
FIG. 17 is a possible structural diagram of a terminal device according to an embodiment of this application; and
FIG. 18 is a possible structural diagram of a network device according to an embodiment of this application.

### DESCRIPTION OF EMBODIMENTS

To facilitate understanding of the resource allocation method, system, storage medium, and product provided in embodiments of this application, the following describes the resource allocation method, system architecture, and application scenarios provided in embodiments of this application. It may be understood that the system architecture and application scenarios described in the embodiments of this application is to illustrate the technical solutions of the embodiments of this application more clearly, and does not constitute a limitation on the technical solutions provided in the embodiments of this application.

The technical solution of this embodiment of this application may be applied to a communication scenario that may be applied to various communications systems, for example: long term evolution (Long Term Evolution, LTE) system, LTE frequency division duplex (Frequency Division Duplex, FDD) system, LTE time division duplex (Time Division Duplex, TDD), a universal mobile telecommunications system (Universal Mobile Telecommunication System, UMTS)), a worldwide interoperability for microwave access (Worldwide Interoperability for Microwave Access, WiMAX) communication system, future fifth generation (5th Generation, 5G) communication system or new radio access technology (new radio Access Technology, NR), a vehicle-to-other device (vehicle-to-X V2X), where V2X may include vehicle-to-Internet (vehicle to network, V2N)), vehicle-to-vehicle (vehicle to-vehicle, V2V)), vehicle-to-infrastructure (vehicle to infrastructure, V2I), vehicle-to-pedestrian (vehicle to pedestrian, V2P), and workshop communication long term evolution technologies (Long Term Evolution-Vehicle, LTE-V), Internet of Vehicles, machine-type communication (machine type communication, MTC), Internet of Things (Internet of Things, IoT), a machine-to-machine communication long term evolution (Long Term Evolution- Machine, LTE-M), a machine-to-machine (Machine to Machine, M2M), etc.

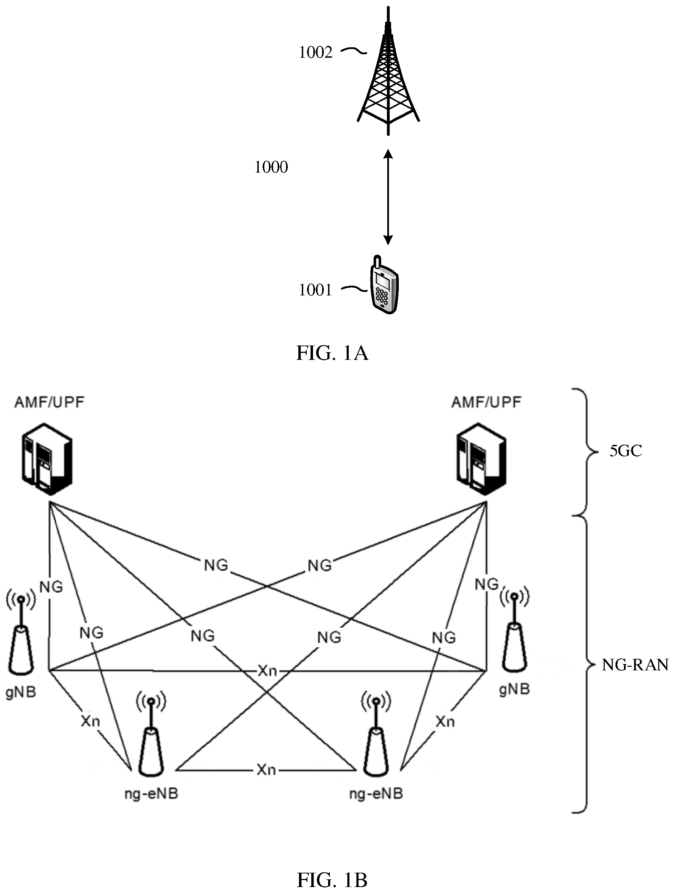

For ease of understanding embodiments of this application, a communication system applicable to the embodiments of this application is first described in detail with reference to FIG. 1A. FIG. 1A is an architectural diagram of a communication system 1000 to which an embodiment of this application is applied. As shown in FIG. 1A, the communication system 1000 may include at least one terminal device, for example, the terminal device 1001 shown in FIG. 1A. The communication system may further include at least one network device, for example, the network device 1002 shown in FIG. 1A. The terminal device 1001 may be mobile or fixed. The network device 1002 may a device that communicates with the terminal device 1001, such as a base station or a base station controller. The network device 1002 may provide communication coverage for a specific geographical area, and may communicate with a terminal device that is located in the covered area (cell).

FIG. 1A exemplarily shows one terminal device and one network device. Optionally, the communication system 1000 may include at least one network device, and another quantity of terminal devices may be included in coverage of the network device, which is not limited in the embodiments of this application.

A plurality of antennas may be configured for each of the foregoing communication devices, for example, the terminal device 1001 or the network device 1002 in FIG. 1A. The plurality of antennas may include at least one emission antenna configured to send a signal and at least one receive antenna configured to receive a signal. In addition, each communication device further additionally includes a transmitter chain and a receiver chain. A person of ordinary skill in the art may understand that each communication device may include a plurality of components (such as a processor, a modulator, a multiplexer, a demodulator, a demultiplexer, or an antenna) related to signal sending and receiving. Therefore, the network device may communicate with the terminal device by using a multi-antenna technology.

Optionally, the wireless communication system 1000 may further include other network entities such as a network controller and a mobility management entity. This is not limited in embodiments of this application.

FIG. 1B is a diagram of an overall architecture of communication connections between network elements according to an embodiment of this application. As shown in FIG. 1B, an eNB is a 4G base station. A gNB is a 5G base station. The ng-eNB is a next-generation evolved NodeB, that is, an evolved NodeB. It interconnects with the 5G core network after the 4G base station is upgraded. The 5GC (5G Core) is a 5G core network, which is responsible for processing and controlling user data and signaling on the 5G network, including an access and mobility management function (AMF) and a user plane function (UPF), and the like. The AMF is responsible for mobility management and access control, including access and mobility management of a terminal user. The AMF is connected to the gB through the NG to implement UE access and mobility management. The UPF is responsible for processing and forwarding user data packets. NG Access Radio Network (NG-RAN) is a next-generation radio access network that can meet the requirements of multi-scenario multi-layer heterogeneous networks. As shown in FIG. 1B, the NG-RAN includes a group of gNBs and ng-eNB that are connected to the 5GC by using an NG interface, and the gNBs and ng-eNB may be interconnected by using an Xn interface. The Xn interface is an interface between NG-RANs, and mainly exists between base stations (for example, a gNB and an ng-eNB).

In this embodiment of this application, the network device may be any device having a wireless transceiving function. The device includes, but is not limited to, an evolved NodeB (evolved NodeB, eNB), a radio network controller (radio network controller, RNC), a node base (node base, NB), a base station controller (base station controller, BSC), a base transceiver station (base transceiver station, BTS), a home base station (such as a home evolved NodeB, or a home nodeB, HNB), a base band unit (base band unit, BBU), an access point (access point, AP) in a wireless fidelity (wireless fidelity, WIFI) system, a radio relay node, a radio backhaul node, a transmission point (transmission point, TP) or a transmission and reception point (transmission and reception point, TRP), may also be 5G, such as an NR, a gNB in a system, or a transmission point (TRP or TP), or one or a group of (including multiple antenna panels) antenna panels of a base station in a 5G system, or may also be a network node that constitutes a gNB or a transmission point, such as a base band unit (BBU), or a distributed unit (distributed unit, DU).

In some deployments, the gNB may include a centralized unit (centralized unit, CU) and the DU. The gNB may further include an active antenna unit (active antenna unit, AAU). The CU implements some functions of the gNB, and the DU implements some functions of the gNB. For example, the CU is responsible for processing a non-real-time protocol and a service, and implements radio resource control (RRC), a packet data convergence layer protocol (PDCP) layer function. The DU is responsible for processing a physical layer protocol and real-time service, and implementing a function at radio link control (radio link control, RLC), media access control (media access control, MAC), and physical (physical, PHY) layers. The AAU implements some physical layer processing functions and related functions of radio frequency processing and an active antenna. Information of the RRC layer eventually becomes information of the PHY layer, or is obtained by converting information of the PHY layer. Therefore, in this architecture, higher layer signaling such as RRC layer signaling may be considered as being sent by the DU or sent by the DU and the AAU. It may be understood that the network device may be a device including one or more of a CU node, a DU node, and an AAU node. In addition, the CU may be classified as an access network device in a radio access network (RAN), or the CU may be classified as an access network device in a core network (CN). This is not limited in this application.

The network device provides a service for a cell, and the terminal device communicates with the cell by using a transmission resource (for example, a frequency domain resource or a spectrum resource) allocated by the network device. The cell may belong to a macro base station (for example, macro eNB or macro gNB), or may belong to a base station corresponding to a small cell (small cell). The small cell herein may include: a metro cell (metro cell), a micro cell (micro cell), a pico cell (pico cell), a femto cell (femto cell), and the like. These small cells have features of small coverage and low send power, and are suitable for providing high-speed data transmission services.

In this embodiment of this application, the terminal device may also be referred to as user equipment (user equipment, terminal device), an access terminal, a subscriber unit, a subscriber station, a mobile station, a mobile station, a remote station, a remote terminal, a mobile device, a user terminal, a terminal, a wireless communication device, a user agent, or a user apparatus. The terminal device in this embodiment of this application may be a mobile phone (mobile phone), a tablet computer (pad), a computer having a transceiving function, a virtual reality (VR) terminal device, an augmented reality (AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (SIP) phone, a wireless local loop (WLL) station, a personal digital assistant (PDA), a handheld device having a wireless communication function, a computing device or another processing device connected to a wireless modem, an in-vehicle device, a wearable device, a terminal device in a 5G network or a terminal device in a future evolved public land mobile network (PLMN), and the like.

The wearable device may also be referred to as a wearable smart device, and is a generic term for wearable devices such as glasses, gloves, watches, clothing, and shoes that are intelligently designed and developed for daily wear by using wearable technologies. The wearable device is a portable device that is directly worn on a human body or integrated into clothing or an accessory of a user. The wearable device is not merely a hardware device, but also implements powerful functions through software support, data exchange, and cloud interaction. Generalized wearable intelligent devices include full-function and large-size devices that can implement all or some functions without depending on smartphones, for example, smart watches or smart glasses, and devices that focus on only one type of application function and need to work with other devices such as smartphones, such as various smart bands or smart jewelry for monitoring physical signs.

In addition, the terminal device may alternatively be a terminal device in an internet of things (internet of things, IoT) system. The IoT is an important part of development of information technology in the future. A main technical feature of the IoT is that an object is connected to a network by using a communication technology, to implement an intelligent network for human-machine interconnection and thing-thing interconnection.

A specific form of the terminal device is not limited in this application.

To clearly describe technical solutions in embodiments of this application, the following briefly describes some terms and technologies in the embodiments of this application.
1. A synchronization signal block (synchronization signal Block, SSB): is configured to implement initial synchronization between a terminal device and a 5G network. The SSB may specifically include a (Primary Synchronization Signal, primary synchronization signal), SSS (Secondary Synchronization Signal, secondary synchronization signal) and PBCH (Physical Broadcast Channel, physical broadcast channel). When the terminal device performs initial synchronization for the 5G network, the terminal device correlates a received signal with a synchronization signal sequence by using a matched filter. In order to support beam scanning, the SSB is organized into a series of trains and periodically sent. The SSB beam (beam) is a beam for sending an SSB signal, or may be a plurality of beams implemented by using a beam sweeping technology. SSB beams are special beams used for synchronization and broadcast functions in 5G networks. SSB beams can better support beam capture technologies and improve signal coverage and network throughput.
2. A system information block 1 (System Information Block Type 1, SIB1): LTE (Long Term Evolution, Long Term Evolution Technology) and a system information block in a 5G network, configured to broadcast important information of a cell. The SIB1 may include related access information of a cell, for example, a cell global identifier, access parameter information, frequency information, and cell restriction information. In this way, the terminal device can correctly access the cell. The terminal device reads the information in SIB1 to learn about the cell configuration and implements correct access and communication. In this case, the terminal device can quickly obtain important information about a cell by broadcasting SIB1, thereby improving network connection efficiency and reliability.
3. The physical random access channel (Physical Random Access Channel, PRACH): is used by the terminal device to randomly initiate an uplink request when accessing the network. The PRACH channel is mainly configured to implement uplink synchronization between a terminal device and a network device. The PRACH has two modes: contention-based random access and non-contention-based random access. In contention-based random access, the terminal device initiates a random access request by sending a preamble (Preamble) index (index), and multiple terminal devices may simultaneously send preambles. In contention-free random access, the terminal device initiates a request by sending a specific contention-free random access request message. Specifically, when the terminal device needs to establish communication with the network device, the terminal device sends the preamble by using the PRACH channel, and then attempts to establish a radio resource control RRC connection to the network device.
4. PRACH procedure: That is, a physical random access channel process is a random access process, and is mainly used by user equipment UE to establish an initial communication connection to a base station. PRACHs play different roles in LTE networks and 5G NR networks. In an LTE network, the PRACH is used as an interface between an asynchronous user and an orthogonal transmission solution for LTE radio access, and is mainly used for network access initialization to implement uplink timing synchronization for a user that has not obtained uplink synchronization or has lost uplink synchronization. The PRACH mainly plays a role of obtaining uplink timing synchronization and allocating a unique identifier to the UE. In addition, the PRACH can be multiplexed as long as it is different from the neighboring cell. In the LTE, there are two PRACH modes: contention-based random access and contention-free random access. In 5G NR, the PRACH is mainly used to carry random access preambles from the UE to the gNB (5G NR base station). Different from LTE, 5G NR random access preambles support two different preamble sequence lengths and use different formats to support different deployment scenarios. The 839 long sequence is used for deploying large cells with FR1 (lower than 6 GHz), and the 139 short sequence is used for deploying small cells including indoor coverage.

The following briefly describes execution steps of the PRACH process.

First, the UE selects a preamble from a predefined set of random access preambles, and transmits the selected preamble to the base station through a PRACH channel. The base station measures a timing advance value of the received preamble, to determine a distance between the UE and the base station. This distance is used to adjust the timing advance value for subsequent communications. Then, the base station replies to the UE by using a random access response message, where the reply content includes information such as a timing advance adjustment value and a temporary identifier of the UE. The UE establishes a radio resource control (RRC) connection to the base station to complete an initial access process.

Optionally, when the base station replies to the UE by using the random access response message, if multiple UE simultaneously send random access preambles, a conflict resolution mechanism is used to resolve the conflict and allocate a resource to each UE. After the conflict resolution succeeds, the UE establishes a radio resource control (RRC) connection to the base station, and completes an initial access process. In this way, the UE may effectively request to access the LTE network and establish communication with the base station, thereby ensuring a reliable connection of the UE in the network.

The following describes technical solutions in embodiments of this application with reference to the accompanying drawings in the embodiments of this application.

Currently, allocation of a time-frequency domain resource of an initial access channel (for example, a PRACH channel) is generally completed by a base station. Specifically, the base station may first determine a plurality of beams, and allocate a corresponding SSB to each beam. Then, the base station may evenly allocate the time-frequency domain resource of the initial access channel to each SSB, and establish a mapping relationship between each SSB and the allocated time-frequency domain resource of the initial access channel. Generally, the mapping relationship may be sent to the terminal device in by using broadcast information. The terminal device determines a time-frequency domain resource of the initial access channel based on the broadcast information, and requests the base station to perform random access by using the initial access channel on the time-frequency domain resource.

Specifically, the base station determines a plurality of beams by using a beamforming technology, and broadcasts the foregoing information to a terminal device in each beam coverage area, so that each terminal device can use an initial access channel on an allocated time-frequency domain resource. However, the base station needs to perform beam scanning on the plurality of beams, to receive an access request initiated by the terminal in each beam direction, where the access request carries a preamble of the terminal device.

As a result, the base station needs to scan each time-frequency domain resource in each beam direction, and a user may not necessarily exist on the scanned time-frequency domain resource, causing a waste of time-frequency domain resources. In addition, a large amount of electric power resources need to be consumed in a scanning process, causing a waste of electric power resources.

According to research, in a scanning process of the base station, the quantity of users associated with some beams is small or no user exists, but the base station still needs to scan a signal in a direction of the beam, thereby increasing energy consumption of the base station. In addition, the second indication information may generally be carried in the SIB1, but the SIB1 is a system-level message, with a relatively long transmission period. Therefore, a configuration period of the time-frequency domain resource allocation information of the initial access channel is excessively long, and is not flexible enough. Therefore, an embodiment of this application provides a resource allocation method, and a main inventive idea of the method is as follows:

To reduce energy consumption of the base station, the base station on the initial access channel may re-indicate the time-frequency domain resource of the initial access channel to the terminal device, to implement flexible scheduling of the time-frequency domain resource, so that allocation of the time-frequency domain resource is more suitable for a user requirement, and scanning pressure of the base station can be reduced, thereby reducing energy consumption of the base station. In addition, in a manner of directly sending the indication information to the terminal device, a lightweight time-frequency domain resource adjustment indication or control is implemented, and configuration flexibility of adjusting the time-frequency domain resource of the initial access channel is improved.

The following describes in detail the method provided in the embodiment of this application with reference to accompanying drawings.

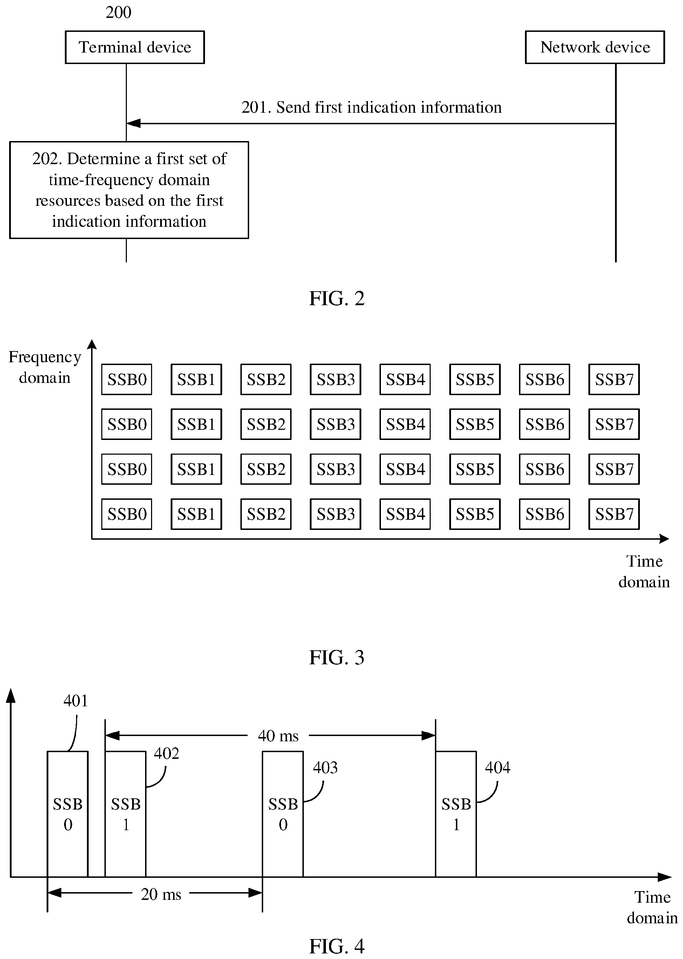

FIG. 2 is a flowchart of a resource allocation method 200 according to an embodiment of this application from a perspective of device interaction. As shown in FIG. 2, the method 200 may include step 201 to step 202. The steps in the method 200 are described in detail below.

Step 201: The network device sends first indication information to the terminal device. Correspondingly, the terminal device receives the first indication information. The first indication information may be configured to indicate the first set of time-frequency domain resources.

Optionally, the sending, by the network device, first indication information to the terminal device may include: The network device broadcasts the first indication information to the terminal device.

Optionally, the first indication information may specifically include related information of the target downlink beam. For example, a quantity of beams of the target downlink beam and resource configuration information of the target downlink beam. The target downlink beam may be a downlink beam actually sent by the network device. The SIB1 downlink beam in this embodiment may be a target downlink beam.

Optionally, the first indication information may be carried in RRC signaling, a MAC-CE signaling, DCI, an SSB, an SIB1, or a system message.

Step 202: The terminal device determines a first set of time-frequency domain resources based on first indication information.

The quantity of resources in the first set of time-frequency domain resources is less than the quantity of resources in the second set of time-frequency domain resources, the second set of time-frequency domain resources is time-frequency domain resources of all downlink beams, and the first set of time-frequency domain resources is time-frequency domain resources of the target downlink beam. The first set of time-frequency domain resources is used for random access.

It should be understood that all beams may be all beams formed when a network device performs beamforming. The target downlink beam is a beam actually used or delivered by the network device.

Optionally, the first set of time-frequency domain resources may include at least one third time-frequency domain resource. The first quantity may be a quantity of at least one third time-frequency domain resource. The second set of time-frequency domain resources may include at least one fourth time-frequency domain resource. The second quantity may be a quantity of at least one fourth time-frequency domain resource. The first quantity is less than the second quantity.

The target downlink beam may be an actual downlink beam in all downlink beams. For example, assuming that all beams are represented by using SSB0-SSB7, and actual downlink beams are SSB1, SSB3, SSB5, and SSB7, the SSB1, SSB3, SSB5, and SSB7 are target downlink beams.

It may be understood that the quantity of beams of the target downlink beam is less than or equal to the quantity of beams of all downlink beams.

It should be understood that the time-frequency domain resource may be a radio resource in two dimensions: time and frequency in a communications system. The time-frequency domain resource includes time allocation of a radio signal. (such as radio frames, subframes, slots, and OFDM (Orthogonal Frequency Division Multiplexing, orthogonal frequency division multiplexing) symbols) location and allocation (for example, subcarriers and physical resource blocks) location on frequency.

It should be understood that the time-frequency domain resource may include a time domain resource and a frequency domain resource. The time domain resource may be a slot in which the terminal device can use an initial access channel, and the time domain resource may also be referred to as a time domain location. The frequency domain resource may be a frequency domain in which the terminal device can use an initial access channel, and the frequency domain resource may also be referred to as a frequency domain location. The network device, for example, a base station, may perform blind detection at a time domain location and a frequency domain location of the time-frequency domain resource, to obtain a signal carried by the time-frequency domain resource.

It should be understood that the initial access channel may be a random access channel (Random Access Channel, random access channel) or a PRACH channel. When the initial access channel is a PRACH channel, the time-frequency domain resource may be a PRACH occasion (physical random access channel occasion, PO for short).

In a mobile communication system such as LTE or 5G new radio (New Radio, NR), a PRACH channel is a physical channel used for a random access process. The PRACH occasion refers to a time window or an opportunity in which a terminal device or user equipment (User Equipment, user equipment) can send a random access preamble (preamble) on a PRACH channel. These POs are preconfigured and planned, so as to ensure that the terminal device accesses the network in an orderly manner, so as to avoid an access conflict.

In a possible design, before step 201, the communication method of this application may further include the following steps:
The network device sends the second indication information to the terminal device. Correspondingly, the terminal device may receive the second indication information.

In a possible design, the second indication information may be broadcast information. The second indication information may specifically include preamble information, the quantity of beams of all downlink beams, and a time-frequency domain resource corresponding to the initial access channel.

The terminal device determines the second set of time-frequency domain resources based on the second indication information. The second set of time-frequency domain resources is time-frequency domain resources of all downlink beams.

Optionally, the determining, by the terminal device, the second set of time-frequency domain resources based on the second indication information may specifically include: evenly allocating a time-frequency domain resource to each downlink beam based on the second indication information and based on the quantity of beams. For example, time-frequency domain resources are evenly allocated based on the quantity of beams of all downlink beams, to obtain at least one time-frequency domain resource of each downlink beam. The quantity of resources of at least one time-frequency domain resource of each downlink beam is greater than or equal to the quantity of resources of a time-frequency domain resource of the target downlink beam. The quantity of time-frequency domain resources actually allocated to a downlink beam is reduced from a beam dimension.

It may be understood that the second set of time-frequency domain resources may include a time-frequency domain resource allocated to each downlink beam. The first set of time-frequency domain resources may include a time-frequency domain resource allocated to each actual downlink target downlink beam.

The quantity of beams of the target downlink beam is less than or equal to the quantity of beams of all downlink beams. By reducing actual downlink beams and reducing the quantity of time-frequency domain resources of each target downlink beam, the quantity of resources in the first set of time-frequency domain resources may be less than the quantity of resources in the second set of time-frequency domain resources.

As described above, time-frequency domain resources may be evenly allocated to all downlink beams based on the second indication information and the quantity of beams, to obtain the second set of time-frequency domain resources.

It should be understood that the second indication information may carry information such as the quantity of preambles, the quantity of beams of the network device, and mapping information of a time-frequency domain. The mapping information of the time-frequency domain may be a mapping parameter of the initial access channel in the time-frequency domain, and the mapping parameter may be, for example, a first parameter and a second parameter.

The first parameter may indicate the quantity of PRACH occasions in frequency domain. The second parameter may indicate the quantity of SSBs that may be mapped to a PRACH occasion, and also indicate the quantity of preamble indexes that may be mapped to a single SSB.

For ease of understanding, FIG. 3 is a diagram of grouping time-frequency domain resources. As shown in FIG. 3, by taking a time domain as a horizontal axis and a frequency domain a vertical axis for example, there are eight SSB beams, and SSB indexes associated with the beams are respectively represented as SSB0-SSB7. If the quantity of preambles is 64, and the first parameter is equal to 4, there are four PRACH occasions in frequency domain, and the second parameter is equal to 1/4, that is, it is indicated that one SSB may be mapped to four PRACH occasions.

Optionally, that the network device sends the second indication information to the terminal device may be that the network device broadcasts the second indication information to the terminal device. Specifically, the network device may broadcast the second indication information to a terminal device within the coverage of each beam.

For example, the network device may broadcast, in a transmission period of the SSB0, the second indication information to a terminal device within a beam coverage area of the SSB0. Then, in a transmission period of the SSB1, the second indication information is broadcast to a terminal device in the beam coverage area of the SSB1. By analogy, each beam is broadcast once, and a broadcast period is completed.

FIG. 4 shows an example diagram of transmission periods of SSB0 and SSB1. As shown in FIG. 4, a transmission period of the network device on the SSB0 is 20 ms, and after the broadcasting of the SSB0 beam 401 ends, the network device may broadcast a next SSB0 beam 402 20 ms later. The transmission period of the SSB1 is 40 ms. After the SSB1 beam 403 is broadcast, a next SSB1 beam 404 may be broadcast 40 ms later. Certainly, in actual application, the target downlink beam and the transmission period of the target downlink beam may be set based on an actual requirement. The embodiment shown in FIG. 4 is merely an example, and does not constitute any limitation.

Optionally, the second indication information may be carried in radio resource control (Radio Resource Control, RRC) signaling, a media access control-control element Medium Access Control-Control Element, MAC-CE signaling, downlink control information (Downlink Control Information, DCI), SSB, SIB1, or a system message.

Optionally, receiving, by the terminal device, second indication information may include: receiving, by the terminal device, the second indication information at a first moment. Receiving, by the terminal device, first indication information may include: receiving, by the terminal device, the first indication information at a second moment. The first moment may be earlier than the second moment.

Optionally, before the first set of time-frequency domain resources is configured, the terminal device may perform random access by using the second set of time-frequency domain resources. After configuring the first set of time-frequency domain resources, the terminal device may perform random access by using the first set of time-frequency domain resources.

It may be understood that, in a random access process, the terminal device sends a signal on each time-frequency domain resource, and the network device needs to perform blind detection on each time-frequency domain resource. As the quantity of time-frequency domain resources decreases, the quantity of times of blind detection required by the network device may be effectively reduced. Blind detection power consumption of the network device may be effectively reduced.

It should be understood that performing, by the terminal device, random access by using the first set of time-frequency domain resources may specifically refer to, determining, by the terminal device, the target time-frequency domain resource of the terminal device based on the first set of time-frequency domain resources. The access request is sent to the network device on the target time-frequency domain resource by using the PRACH channel. The access request may carry a preamble.

Optionally, the first indication information may further carry energy saving information. The terminal device receives the energy saving information in the first indication information, and determines to enter the energy saving state based on the energy saving information. In response to entering the energy saving state, random access is performed by using the first set of time-frequency domain resources.

It should be understood that performing, by the terminal device, random access by using the second set of time-frequency domain resources may specifically refer to selecting a target time-frequency domain resource from the second set of time-frequency domain resources, and initiating a random access request to the network device on the target time-frequency domain resource by using an initial access channel. By taking the initial access channel which is a PRACH channel as an example, the terminal device may send the preamble to the network device on the target time-frequency domain resource by using the PRACH channel.

In the technical solution of this application, on the basis that time-frequency domain resources of all downlink beams are determined, the first indication information may be further received, to determine the first set of time-frequency domain resources, and the first set of time-frequency domain resources may be time-frequency domain resources of the target downlink beam. The quantity of resources in the first set of time-frequency domain resources is less than the quantity of resources in the second set of time-frequency domain resources, the second set of time-frequency domain resources is time-frequency domain resources of all downlink beams. The first set of time-frequency domain resources with a smaller quantity of time-frequency domain resources is used for random access, so that a relatively small quantity of time-frequency domain resources are actually used to perform random access. In a random access process, the network device needs to perform blind detection on the time-frequency domain resources. The reduced quantity of time-frequency domain resources can effectively reduce a quantity of blind detections by the network device, thereby effectively reducing blind detection pressure of the network device, and effectively saving energy.

Furthermore, in addition to directly reducing the quantity of time-frequency domain resources, the channel configuration information of the initial access channel may be adjusted. That is, when the quantity of users is relatively large, channel configuration information that can provide a relatively high scanning frequency may be set, so as to ensure that all terminal devices access the wireless network. However, when the quantity of users is relatively small, channel configuration information that can provide a relatively low scanning frequency may be set. The scanning pressure of the network device can be reduced while ensuring that all terminal devices are scanned. In a manner of dynamically adjusting a scanning frequency, flexible scheduling of a time-frequency domain resource may also be implemented.

Further, the scanning frequency is associated with the channel configuration information of the time-frequency domain resource. Therefore, the scanning frequency of the network device may be adjusted by adjusting the channel configuration information of the time-frequency domain resource, thereby implementing efficient scanning, and achieving efficient and flexible scheduling of the time-frequency domain resource while ensuring normal access of a user, thereby achieving an energy saving objective of the network device.

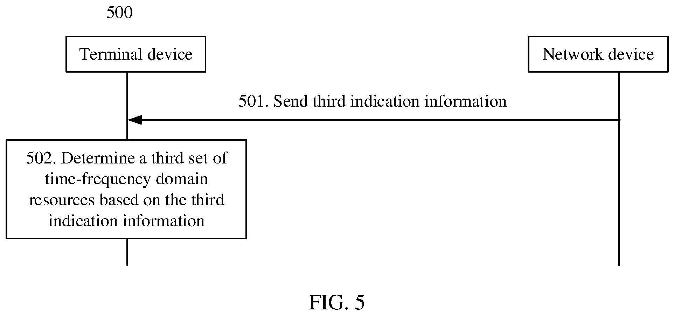

FIG. 5 is a flowchart of a resource allocation method 500 according to an embodiment of this application from a perspective of device interaction. As shown in FIG. 5, the method 500 may include step 501 to step 502. The steps in the method 500 are described in detail below.

Step 501: A network device sends third indication information to a terminal device. Correspondingly, the terminal device may receive the third indication information. The third indication information is configured to indicate the third set of time-frequency domain resources.

It may be understood that the third indication information may be related information that can determine the channel configuration information that needs to be used. The related information refers to information such as an index of the channel configuration information and a value corresponding to one or more list items.

For example, the related information may be the target index. In this case, the third indication information may be the target index, and the network device may determine, by using the target index, that the channel configuration information associated with the target index is the target channel configuration information.

For another example, the related information may be a preamble format. For example, the value of the preamble format is 1. It may be determined that the channel configuration information whose preamble format is 1 is the target channel configuration information.

As described above, the third indication information may be configured to determine the target channel configuration information of the time-frequency domain resource. The channel configuration information may be configured to configure a time-frequency domain resource of an initial access channel. The third set of time-frequency domain resources is a time-frequency domain resource determined by using the target channel configuration information, and may be specifically a time-frequency domain resource obtained after the time-frequency domain resource of the initial access channel is configured by using the target channel configuration information. Optionally, the target channel configuration information may be configured to adjust a time-frequency domain resource on the initial access channel. For example, the target channel configuration information may include a target transmission period, and the target transmission period may be specifically a period after a period adjustment is performed on a time-frequency domain resource of the PRACH channel.

It should be understood that the channel configuration information of the time-frequency domain resource may be related to the quantity of users. Further, the network device may determine the channel configuration information of the time-frequency domain resource of each beam on the initial access channel based on the quantity of users in an area covered by each beam.

For example, a correspondence between the quantity of users and channel configuration information may be preset, and channel configuration information corresponding to the quantity of users in the correspondence is queried based on the quantity of users in each beam coverage area.

It may be understood that the correspondence between the quantity of users and the channel configuration information may mean that the quantity of users is associated with one piece of channel configuration information.

That is, the user quantity a1 may be associated with one piece of channel configuration information a2, where a1 may be a value, an interval, or a range, and a2 may be a value, an interval, or a range.

In actual application, there may be multiple correspondences between the quantity of users and the channel configuration information, and each correspondence may be configured to indicate a mapping association between the quantity of users and the channel configuration information.

Further, if the quantity of users in the coverage area of the beam SSB0 is 100, the quantity of target users that matches the quantity of users 100 may be queried from the plurality of correspondences, so as to determine the target correspondence corresponding to the quantity of target users, and determine the target channel configuration information of the time-frequency domain resource of the SSB0 based on the channel configuration information in the target correspondence.

Optionally, before sending the third indication information to the terminal device, the network device is further configured to: generate the third indication information based on the target channel configuration information determined for the quantity of real-time users of the send beam. The third indication information may be sent by using a send beam.

The transmission period in the channel configuration information is taken as an example, and the transmission period of the time-frequency domain resource is inversely proportional to the quantity of users. A larger quantity of users indicates more resources required. In this case, a smaller transmission period of the time-frequency domain resource is, a smaller quantity of users is, fewer time-frequency domain resources are required, and a larger transmission period of the time-frequency domain resource is required.

Optionally, the third indication information may be carried in a radio resource control RRC message, a system message, downlink control information DCI, a MAC-CE, or dedicated signaling.

It should be understood that a field may be set in the downlink control information DCI, the MAC-CE, or the dedicated signaling to carry the third indication information. The system message may be, for example, an SIB or a MIB message. This is not limited in this embodiment.

Optionally, the third indication information may be target channel configuration information, the target channel configuration information may be configured to determine the target index, and the target index may be implicitly indicated by directly carrying the target channel configuration information by using signaling or a message. Alternatively, the third indication information may be a target index, and the target channel configuration information corresponding to the target index is determined by using the target index carried in signaling or a message, to implement explicit indication of the target index.

Step 502: The terminal device determines a third set of time-frequency domain resources based on the third indication information, where the third set of time-frequency domain resources is different from the second set of time-frequency domain resources, and the second set of time-frequency domain resources is time-frequency domain resources of all downlink beams. The third set of time-frequency domain resources is used for random access.

Optionally, performing, by the terminal device, step 502 may specifically refer to determining a third set of time-frequency domain resources based on the target channel configuration information and the second set of time-frequency domain resources.

Further, the third set of time-frequency domain resources is determined based on the target transmission period in the target channel configuration information and the transmission period of the second set of time-frequency domain resources.

Further, the third set of time-frequency domain resources is determined based on the target subframe number/subframe number in the target channel configuration information and the second indication information.

Optionally, the second indication information may include the quantity of beams, the quantity of preambles, and time-frequency domain information. The time-frequency domain resource may be re-allocated to the initial access channel by using the target subframe number/subframe number and the second indication information, to obtain the third set of time-frequency domain resources.

Further, the third set of time-frequency domain resources is determined based on the target preamble format in the target channel configuration information and the second indication information.

Optionally, the time-frequency domain resource may be re-allocated to the initial access channel by using the target preamble format and the second indication information, to obtain the third set of time-frequency domain resources.

Further, the third set of time-frequency domain resources is determined based on the target subframe number/subframe number in the target channel configuration information and the second indication information.

Optionally, the time-frequency domain resource may be re-allocated to the initial access channel by using the target subframe number/subframe number and the second indication information, to obtain the third set of time-frequency domain resources.

By determining the third set of time-frequency domain resources by using the target transmission period in the target channel configuration information as an example, a transmission period of the second set of time-frequency domain resources is twice the target transmission period. In this case, the quantity of resources in the third set of time-frequency domain resources is half of the second set of time-frequency domain resources. If the transmission period of the second set of time-frequency domain resources is one half of the target transmission period, the quantity of resources of the third set of time-frequency domain resources is twice the quantity of the second set of time-frequency domain resources.

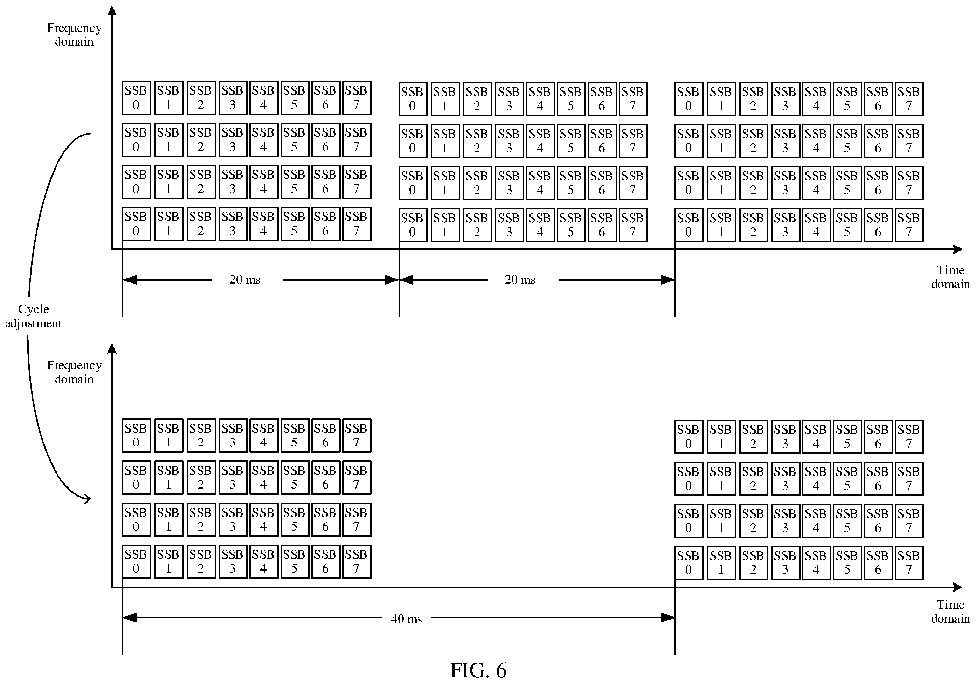

The following describes in detail the technical solution of this application by using an adjustment period as an example. FIG. 6 shows an example diagram of a time-frequency domain resource. Refer to FIG. 6, it is assumed that a period of the second set of time-frequency domain resources is 20 ms, and a period of the third set of time-frequency domain resources is 40 ms. The second set of time-frequency domain resources are time-frequency domain resources shown in FIG. 3. A period of the third set of time-frequency domain resources is 40 ms. Because other information remains unchanged but the period changes, in a same time period, the quantity of PRACH occasions in the third set of time-frequency domain resources is half of the quantity of PRACH occasions in the second set of time-frequency domain resources. When the third set of time-frequency domain resources are used, because the quantity of PRACH occasions is reduced, the network device may perform scanning at a relatively small quantity of time-frequency domain locations and frequency-domain locations, thereby effectively reducing the quantity of time-frequency domain resources to be scanned, thereby implementing effective energy saving.

To obtain the second set of time-frequency domain resources, before the third indication information is received, the communication method provided by this application further includes the following steps:
The network device sends the second indication information to the terminal device. Correspondingly, the terminal device may receive the second indication information, where the second indication information is configured to indicate the second set of time-frequency domain resources.

The terminal device determines the second set of time-frequency domain resources based on the second indication information.

In the technical solution of this application, the network device may indicate the third indication information of different time-frequency domain resources to the user based on different requirements, and configure a new time-frequency domain resource, so that the time-frequency domain resource is more adapted to a use requirement, and flexibility of adjusting the time-frequency domain resource is improved. In addition, the time-frequency domain resource may be re-determined by using the indication of the third indication information, so that more lightweight resource scheduling may be implemented, and time-frequency domain resource scheduling efficiency may be improved.

In a possible design, the third set of time-frequency domain resources includes a first time-frequency domain resource and a second time-frequency domain resource, and the first time-frequency domain resource belongs to or does not belong to the second set of time-frequency domain resources. The second time-frequency domain resource does not belong to the second set of time-frequency domain resources.

It may be understood that the first time-frequency domain resource and the second time-frequency domain resource may be divided based on a location of the time-frequency domain resource.

The first time-frequency domain resource belongs to the second set of time-frequency domain resources, which may mean that the time-frequency domain resource of the second set of time-frequency domain resources includes the first time-frequency domain resource. In a possible design, the time-frequency domain resource of the second set of time-frequency domain resources may be the first time-frequency domain resource.

The first time-frequency domain resource does not belong to the second set of time-frequency domain resources, which may mean that the time-frequency domain resource of the second set of time-frequency domain resources does not include the first time-frequency domain resource.

The second time-frequency domain resource does not belong to the second set of time-frequency domain resources, which may mean that the time-frequency domain resource of the second set of time-frequency domain resources does not include the second time-frequency domain resource.

It should be understood that, at an initial startup stage of the network device, a relatively small number of terminal devices request access. In this case, a relatively long period may be set, so that the network device provides a relatively small number of PRACH occasions, so as to reduce invalid scanning of the network device. As time increases, a relatively large number of terminal devices request access. In this case, a relatively short period may be set, so that the network device can provide more PRACH occasions, and more terminal devices can obtain corresponding PRACH occasions to perform random access.

Correspondingly, in still another possible design, the second set of time-frequency domain resources includes at least one fourth time-frequency domain resource. The fifth time-frequency domain resource in the at least one fourth time-frequency domain resource belongs to the third set of time-frequency domain resources, and the sixth time-frequency domain resource in the at least one fourth time-frequency domain resource does not belong to the third set of time-frequency domain resources. In this case, a time-frequency domain resource of the third set of time-frequency domain resources is less than a time-frequency domain resource of the second set of time-frequency domain resources.

That is, as the quantity of users increases, the target transmission period may be set to be greater than the transmission period of the second set of time-frequency domain resources, thereby reducing the quantity of time-frequency domain resources. In this case, the quantity of resources of the third time-frequency domain resource is less than the quantity of resources of the second set of time-frequency domain resources.

It may be understood that, as the quantity of users decreases, the network device may re-indicate a new transmission period, to adjust a time-frequency domain resource by using the new transmission period, thereby implementing flexible adjustment of the time-frequency domain resource, and improving utilization of the time-frequency domain resource.

In the technical solution of this application, another time-frequency domain resource other than the second set of time-frequency domain resources is set, for example, a second time-frequency domain resource that does not belong to the second set of time-frequency domain resources, to implement re-divisioning of the time-frequency domain resource by using the third indication information, thereby improving the flexibility of time-frequency domain resource scheduling. As the quantity of users increases, more time-frequency domain resources may be set, so that setting of the time-frequency domain resource is related to the quantity of users, and invalid blind detection of the network device may be avoided, thereby implementing effective energy saving of the network device.

As described above, the network device may perform periodic adjustment based on the quantity of users. In the foregoing embodiment, as the quantity of users changes, different channel configuration information may be set, so as to reduce overall scanning pressure of the network device and achieve effective energy saving. Adjustment of the channel configuration information may generate a corresponding third set of time-frequency domain resources.

It may be understood that the resource allocation effect/result of the third set of time-frequency domain resources further includes at least one of the following:
a transmission period of the third set of time-frequency domain resources is different from a transmission period of the second set of time-frequency domain resources;
the quantity of resources in the third set of time-frequency domain resources is different from the quantity of resources in the second set of time-frequency domain resources; and
a second time-frequency domain resource of the third set of time-frequency domain resources is different from a time-frequency domain resource of the second set of time-frequency domain resources.

Optionally, a first time-frequency domain resource in the third set of time-frequency domain resources is the same as or different from a time-frequency domain resource in the second set of time-frequency domain resources.

Optionally, a transmission period of the third set of time-frequency domain resources is less than a transmission period of the second set of time-frequency domain resources. A transmission period of the third set of time-frequency domain resources may be further greater than a transmission period of the second set of time-frequency domain resources. A quantity of resources in the third set of time-frequency domain resources may be less than a quantity of resources in the second set of time-frequency domain resources. A quantity of resources in the third set of time-frequency domain resources may be greater than a quantity of resources in the second set of time-frequency domain resources.

Optionally, the transmission period of the third set of time-frequency domain resources may also be referred to as a target transmission period.

In the technical solution of this application, the time-frequency domain resource is adjusted, so that the transmission period, the resource quantity, and the time-frequency domain resource of the third set of time-frequency domain resources are changed, so that more time-frequency domain resources are provided, and the third set of time-frequency domain resources are changed. Therefore, the time of scanning a time-frequency domain resource by the network device changes accordingly, so that blind detection of the network device is more scientific, scanning efficiency of the network device is effectively improved, and energy saving is implemented efficiently.

By taking a PRACH channel as an example, when a PRACH resource is acquired, the terminal device may initiate a PRACH resource obtaining request to the network device, and add a corresponding preamble to the request. Then, the terminal device selects an SSB beam with a relatively good current signal, and sends, to the network device by using the SSB beam, a PRACH resource obtaining request that carries a preamble.

It should be further understood that a manner in which the second indication information instructs the terminal device to obtain the PRACH resource in the current time domain period based on the received SIB1 downlink beam or the adjusted PRACH period is not limited in this application.

Further, the terminal device obtains the corresponding PRACH resource based on the second indication information.

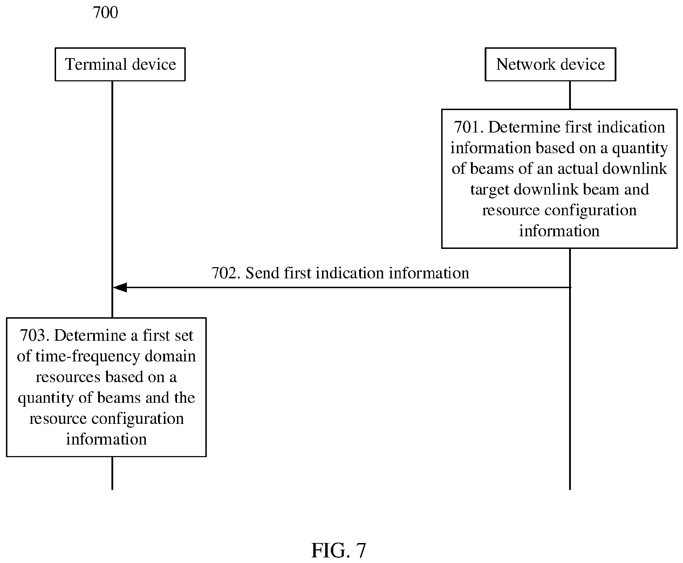

Different implementations are described in detail below with reference to FIG. 7 to FIG. 15. In any one of the following Embodiment I to Embodiment VII, the network device has delivered the second indication information, and the terminal device has determined the second set of time-frequency domain resources based on the second indication information. Details are not described herein again.

### (1) Embodiment I

It may be understood that, before sending the first indication information, the network device needs to first determine which beam is actually used, and determine the first indication information based on the actually used beam and the configuration information of the actually used beam. To enable the first indication information to more accurately indicate the first set of time-frequency domain resources, in a possible design, the first indication information may include: the quantity of beams of the target downlink beam and resource configuration information of the target downlink beam.

FIG. 7 is still another signaling diagram of a resource allocation method according to an embodiment of this application. A process in which the network device instructs, by using the first indication information, a terminal device to obtain a corresponding PRACH resource may specifically include the following steps:
Step 701: The network device determines first indication information based on the quantity of beams of an actual downlink target downlink beam and resource configuration information of the target downlink beam.

The target downlink beam is a beam actually sent by the network device, the quantity of beams is less than a total quantity of beams, and the total quantity of beams is a quantity of beams of all beams obtained by the network device through beamforming.

Optionally, the first indication information may further include an SSB index of the target downlink beam, so as to determine the quantity of beams of the target downlink beam by using the SSB index.

For example, assuming that the SSB indexes carried in the first indication information are the SSB1, the SSB3, the SSB5, and the SSB7, it may be determined that beams corresponding to the SSB1, the SSB3, the SSB5, and the SSB7 are the target downlink beams. The quantity of beams of the target downlink beam is 4.

Step 702: The network device sends the first indication information to the terminal device, and correspondingly, the terminal device may receive the first indication information.

Optionally, the first indication information may be carried in a SIB1, and the SIB1 needs to be sent by using a beam. Therefore, the network device may further configure scanning periods of different beams, and indicate transmission of the SIB1 by using different scanning periods.

It should be understood that before the network device sends the SIB1, the network device may determine the beam indication information. The beam indication information may be configured to indicate transmission of the SIB1.

The beam referencing information may specifically refer to configuring scanning periods of different SSB beams or whether a downlink beam of the SIB1 is sent in a current time domain period of each SSB, so as to indicate transmission of the SIB1. It should be understood that, when the scanning period of the beam corresponding to the SSB or whether the downlink beam of the SIB1 is sent in the current time domain period of each SSB, the configuration may be specifically implemented in the following manner: First, a new public identifier DCI may be introduced and scrambled by using a predefined wireless network temporary identifier RNTI. Then, the DCI indicates the content related to representing "a scanning period of a beam corresponding to each SSB" or indicates a content related to representing "whether a downlink beam of the SIB1 is sent in a current time domain period of each SSB". Second, existing DCI 1-0 is multiplexed, that is, downlink scheduling allocation information used in the 5G NR (New Radio), and RNTI (SI-RNTI) applicable to all cells are used for scrambling. Then, one bit value is configured to indicate "whether a downlink beam of the SIB1 is sent in a current time domain period of each SSB" or a scanning period of a beam corresponding to each SSB.

That is, the beam indication information may be carried in DCI or DCI 1-0. The beam indication information may be configured to indicate scanning periods of different SSB beams or whether a downlink beam of the SIB1 is sent in a current time domain period of each SSB.

It should be further understood that the network device may configure, in the SIB1 or the common channel PDCCH, a scanning period of a beam corresponding to each SSB or whether a downlink beam of the SIB1 is sent in a current time domain period of each SSB.

As described above, the first indication information may include the quantity of beams of the target downlink beam and resource configuration information.

Step 703: The terminal device determines a first set of time-frequency domain resources based on the quantity of beams and the resource configuration information.

When the first indication information is a content related to the downlink beam of the SIB1, that is, when the first indication information is carried in the SIB1, the first indication information includes the quantity of downlink first beams of the SIB1 in the current time domain period. The first quantity of beams is the quantity of the target downlink beams. The first quantity of beams is the quantity of beams carried in the SIB1 in the current time domain period.

Certainly, when the first indication information is carried in other signaling, such as RRC signaling, MAC-CE signaling, DCI, SSB, or a system message, related content included in the other signaling is the same as that included in the SIB1, and a difference between different signaling lies in a signaling format.

In an embodiment, the resource configuration information may include at least one of the following:
a maximum quantity of time-frequency domain resources or a quantity of slots; and a quantity of times of association between time-frequency domain resources and beams.

It should be understood that the maximum quantity of time-frequency domain resources may be a maximum quantity of time-frequency domain resources in the first set of time-frequency domain resources. A slot is a basic unit in a time division multiplexing system that is configured to allocate to different users or services in a shared communication channel. The quantity of slots may be the quantity of slots that can be used.

It should be understood that the quantity of times of association of the time-frequency domain resource and the beam may be the quantity of times of association of one SSB. That is, the SBB is associated several times. Assume that the quantity of times of association is equal to 1, one SSB is associated once. For example, if the quantity of times of association is 2, one SSB can be associated twice.

Optionally, determining, by the terminal device, a first set of time-frequency domain resources based on the quantity of beams and resource configuration information may include: The terminal device determines the first set of time-frequency domain resources based on the quantity of beams and the maximum quantity of time-frequency domain resources or the quantity of slots, or determines the first set of time-frequency domain resources based on the quantity of beams and the quantity of times of association.

For example, the maximum quantity of time-frequency domain resources may be the maximum quantity of resources of the PRACH occasion. The maximum quantity of PRACH resources is used by the terminal device to obtain corresponding PRACH resources.

Preferably, the maximum quantity of resources of the PRACH occasion may be indicated in the SIB1.

Based on this, the network device may form the first indication information based on the quantity of downlink first beams in the SIB1 in the current time domain period and the resource configuration information, so as to send the first indication information to the terminal device.

It may be understood that the quantity of times of association between the SSB beam and the PRACH in the energy saving state may be further indicated by using the SIB1, for example, is 1.

Optionally, in each PRACH time domain period, the terminal device re-allocates PRACH resources evenly based on the actually indicated quantity of first beams on which the downlink SIB1 is sent, to obtain the first set of time-frequency domain resources.

Optionally, the network device may further dynamically indicate a maximum quantity/quantity of PRACH occasions in one time domain period. In this case, the PRACH resource pool is limited to a limited slot.

In a possible design, to obtain the maximum quantity of time-frequency domain resources or the quantity of slots, the resource allocation method provided in embodiments of this application further includes:
obtaining a resource list, where the resource list is a list formed by a time-frequency domain resource determined for each target downlink beam; and determining a maximum quantity of time-frequency domain resources or a quantity of slots based on the resource list; or,
obtaining a maximum quantity or a quantity of slots preset for the time-frequency domain resource.

Optionally, different PO values may be used under different quantities of first beams based on a resource list PO list dynamically indicated by the quantity of beams, or a specific value may be indicated by using DCI or a MACCE so as to obtain the maximum quantity or the quantity of slots preset for the time-frequency domain resource.

Further, the network device may determine the maximum quantity of time-frequency domain resources or the quantity of slots based on the quantity of POs in the resource list PO list. Alternatively, the network device may read the maximum quantity or the slot quantity from the DCI or the MAC-CE.

It should be understood that the maximum quantity of time-frequency domain resources may be the maximum quantity of PRACH occasions. The quantity of slots of the time-frequency domain resource may be the quantity of PRACH occasions.

It should be understood that the foregoing indication manner is merely an example, and should not constitute any limitation on this application.

It should be further understood that, when the PRACH resource is re-allocated evenly based on the actually indicated quantity of first beams for transmission in the downlink SIB1 and the resource configuration information, the PRACH resource is re-allocated evenly based on a sequence of code domain, frequency domain, and time domain.

For example, when one SSB corresponds to one PRACH occasion, the terminal device allocates the PRACH resource in frequency domain. If a frequency domain allocation result cannot meet a requirement, the terminal device further allocates the PRACH resource in time domain. In this way, even re-allocation is completed to obtain a corresponding PRACH resource.

For another example, when the plurality of SSBs correspond to one PRACH occasion, the terminal device first performs code domain allocation in the PRACH occasion, and then further performs frequency domain allocation based on a code domain allocation result. If the frequency domain allocation result cannot meet a requirement, the terminal device further performs time domain allocation. In this way, even re-allocation is completed to obtain a corresponding PRACH resource.

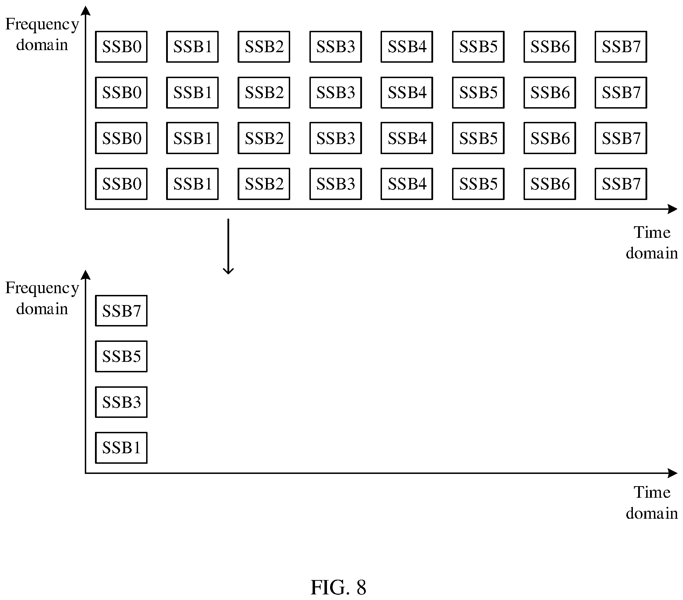

It should be further understood that, during allocation, the quantity of times of association between the SSB beam and the PRACH resource in the energy saving state and/or the quantity of PRACH occasions in the current slot period may be used, to implement flexible adjustment of the time-frequency domain resource. FIG. 8 is a diagram of a time-frequency domain resource according to an embodiment of this application. As shown in FIG. 3, in the second set of time-frequency domain resources indicated by the second indication information, the quantity of beams is 8, and the quantity of PRACH occasions corresponding to each SSB is 4, that is, there are 32 PRACH occasions shown in FIG. 3 in the second set of time-frequency domain resources.

As shown in FIG. 8, in the first indication information, the quantity of beams of the target downlink beam, that is, the quantity of first beams, is 4, the target downlink beams are SSB1/SSB3/SSB5/SSB7, and the quantity of times of association between each target downlink beam and a time-frequency domain resource is 1, and/or when the maximum quantity/maximum quantity/slot quantity of PRACH occasions in the time domain period is 4, a corresponding allocation situation is shown in FIG. 8.

Refer to FIG. 8, the quantity of target downlink beams is 4, and specifically sent target downlink beams are SSB1/SSB3/SSB5/SSB7.

If the quantity of times of association between each target downlink beam and the time-frequency domain resource is 1, one target downlink beam may be mapped to one PRACH occasion. Therefore, four PRACH occasions are required to map four target downlink beams. When the network device supports frequency division multiplexing, and one slot is mapped to four frequency domain resources, the four PRACH occasions may be in PRACH occasions that have a same slot but are different in frequency domain. A mapping result may be an SSB1/SSB3/SSB5/SSB7 shown in FIG. 8.

If the maximum quantity/maximum quantity/slot quantity of PRACH occasions is 4, there are four PRACH occasions to map four SSBs, and a mapping result is that one PRACH occasion maps one SSB. The mapping result may be an SSB1/SSB3/SSB5/SSB7 shown in FIG. 8.

It may be understood that the first set of time-frequency domain resources may be recovered from the second set of time-frequency domain resources, that is, for unused PRACH occasion resources that exist after initial allocation, the network device reclaims the unused PRACH occasion resource in a sequence of time domain, frequency domain, and code domain. That is, the network device may perform detection on a PO to which an SSB is allocated, and no detection is performed on a PO to which an SSB is not allocated, which can effectively reduce a quantity of scanning times of the network device, and reduce energy consumption of the network device.

It should be understood that an execution method for recycling unused PRACH resources in a sequence of time domain, frequency domain, and code domain is similar to the foregoing execution method for allocating unused PRACH resources in a sequence of code domain, frequency domain, and time domain, but a sequence is different, and details are not described herein again. In this way, the quantity of PRACH resources occupied in time domain can be reduced, and an energy saving effect can be improved.

In Embodiment I, resources can be better saved. In a case of a relatively light load, users are unevenly distributed, and some downlink beams do not need to be sent. In this case, corresponding PRACH resources are also not required. In this way, energy consumption on a base station side can be reduced.

Compared with the prior art, in Embodiment I, PRACH resources may be increased or decreased according to parameters such as an actual number of downlink beams, thereby improving an energy saving gain.

### (2) Embodiment II

It may be understood that, before sending the first indication information, the network device needs to first determine which beam is actually used, and determine the first indication information based on the actually used beam and the configuration information of the actually used beam. Optionally, the first indication information may be carried in a SIB1, and the SIB1 needs to be sent by using a beam. Therefore, the network device may further configure scanning periods of different beams, and indicate transmission of the SIB1 by using different scanning periods.

It should be understood that before the network device sends the SIB1, the network device may determine the beam indication information. The beam indication information may be configured to indicate transmission of the SIB1. For related content of the beam indication information, reference may be made to the foregoing description. Details are not described herein again.

To enable the first indication information to more accurately indicate the first set of time-frequency domain resources, the time-frequency domain resources may be adjusted in a manner of a preset rule. The following describes in detail a real-time manner of adjusting a time-frequency domain resource according to different rules.

### Rule I: Sample predefined resource states to adjust time-frequency domain resources

In a possible design, the first indication information may further include: a predetermined target resource state.

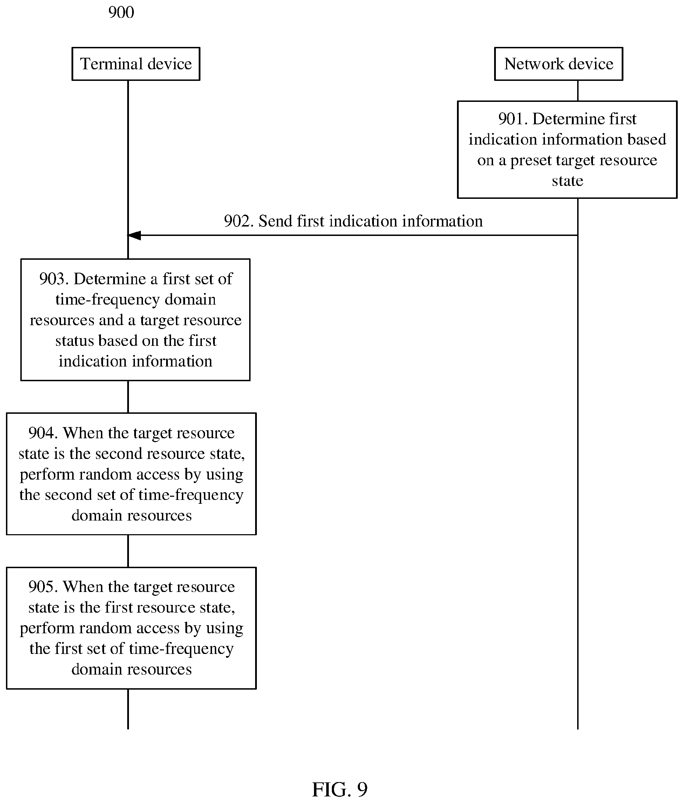

FIG. 9 is still another signaling diagram of a resource allocation method according to an embodiment of this application. A process in which the network device instructs, by using the first indication information, a terminal device to obtain a corresponding PRACH resource may specifically include the following steps:
Step 901: The network device determines first indication information based on a preset target resource state.

The target resource state is a first resource state or a second resource state, the first resource state refers to a state in which the terminal device uses the first set of time-frequency domain resources, and the second resource state refers to a state in which the terminal device uses the second set of time-frequency domain resources.

It may be understood that, in addition to carrying the target resource state, the first indication information may further carry other information, for example, the quantity of beams of the target downlink beam and resource configuration information of the target downlink beam, or preamble allocation information and resource allocation information of each target downlink beam; or template indication information, beam information of a target downlink beam, or the like. The first set of time-frequency domain resources may be determined by using any one of the foregoing other information.

Optionally, two resource states may be preconfigured, which are respectively a first resource state and a second resource state.

It should be understood that the target downlink beam may be configured to indicate one of the two resource states, and the used resource type is specifically determined based on a quantity of beams in the SIB. For example, when the quantity of first beams is less than 1/2 of the quantity of all beams, a format with a small PO is used, that is, the first set of time-frequency domain resources corresponding to the first resource state is used; otherwise, the other format is used, that is, the second set of time-frequency domain resources corresponding to the second resource state is used. The other format is the format with more POs.

Optionally, a quantity of POs corresponding to the first resource state is less than a quantity of POs corresponding to the second resource state.

Step 902: The network device sends the first indication information to the terminal device, and correspondingly, the terminal device may receive the first indication information.

Optionally, the first indication information may be carried in a SIB1, and the SIB1 needs to be sent by using a beam. Therefore, the network device may further configure scanning periods of different beams, and indicate transmission of the SIB1 by using different scanning periods.

It should be understood that a specific execution method for sending the SIB1 in this step is similar to the execution method described in step 602, and details are not described herein again.

Step 903: A first set of time-frequency domain resources and a target resource state are determined based on the first indication information.

Step 904: When the target resource state is the second resource state, random access is performed by using the second set of time-frequency domain resources.

Step 905: When the target resource state is the first resource state, random access is performed by using the first set of time-frequency domain resources.

It should be noted that, in the technical solution of this application, different resource states are set in a manner of sampling, so that different quantities of time-frequency domain resources are planned for different resource states. Adjusting the time-frequency domain resources by using the resource states can improve flexibility and convenience of resource adjustment. In addition, the resource state is related to the quantity of actually delivered beams. A larger quantity of beams and a smaller quantity of beams use different resource states. In addition, the quantity of beams can reflect a busy degree of the network device, so that a time-frequency domain resource is dynamically adjusted based on a requirement. This prevents the network device from performing invalid blind detection, and improving the energy saving gain.

### Rule II: Time-frequency domain resource adjustment is performed by means of sampling resource allocation.

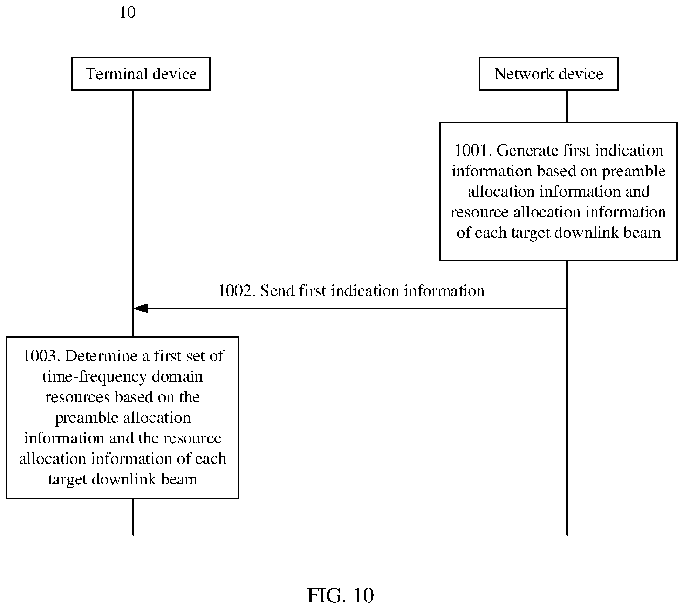

FIG. 10 is still another signaling diagram of a resource allocation method 10 according to an embodiment of this application.

In step 1001, the network device may generate the first indication information based on the preamble allocation information and the resource allocation information of each target downlink beam.

In step 1002, the network device sends the first indication information to the terminal device. Correspondingly, the terminal device may receive the first indication information. The first indication information may be configured to indicate the first set of time-frequency domain resources.

Optionally, the first indication information includes: preamble allocation information and resource allocation information of each target downlink beam, where the target downlink beam is a beam actually sent by the network device.

It should be understood that the resource allocation information may be resource allocation information of each preamble.

Step 1003: A first set of time-frequency domain resources is determined based on preamble allocation information and resource allocation information of each target downlink beam.

It should be understood that the preamble allocation information may be related information about a preamble allocated to each target downlink beam.

The resource allocation information may be related information about a time-frequency domain resource actually allocated to each target downlink beam.

It should be understood that the first indication information may indicate preamble allocation information and resource allocation information of each target downlink beam.

For example, the first indication information may explicitly indicate preamble allocation information and resource allocation information of each target downlink beam. Alternatively, the first indication information may implicitly indicate preamble allocation information and resource allocation information of each target downlink beam.

Further, a field in the first indication information may be directly written into the preamble allocation information and the resource allocation information of each target downlink beam, so as to explicitly read the preamble allocation information and the resource allocation information of each target downlink beam from the first indication information.

Further, multiple pieces of preamble allocation information and multiple pieces of resource allocation information may be predefined. Some fields in the first indication information may be written into related information of the preamble allocation information of each target downlink beam and related information of the resource allocation information, so that preamble allocation information of each target downlink beam is determined based on the related information of the preamble allocation information of each target downlink beam, and the resource allocation information is determined based on related information of the resource allocation information.

For example, the related information may include: information such as an information identifier, an information address, and/or an information name. Different information may be distinguished between by related information. For example, related information of different resource allocation information is different, and related information of different preamble allocation information is different.

Further, the preamble allocation information includes any one of the following:
a quantity of preambles of each target downlink beam;
a preamble proportion of each target downlink beam, where the preamble proportion is a proportion of a code quantity of preambles of each target downlink beam to a total quantity of preambles; and
the resource allocation information includes any one of the following:
   a quantity of time-frequency domain resources allocated to each target downlink beam; and
   a time-frequency domain resource allocated to each target downlink beam.

Optionally, the first indication information configured by the network device includes: the beam bitmap indication of the PRACH actually needs to be configured and the bitmap indication needs to be sent to the terminal device.

The bitmap indication refers to the first indication information.

Based on rule II, the first indication information includes, for example, the following item: (1) the quantity or percentage of preambles of beams corresponding to each SSB, and the time domain resource and the frequency domain resource. (2) The quantity or percentage of preambles of beams corresponding to each SSB, and the quantity of PRACH occasions.

For example, the terminal device may determine the third set of time-frequency domain resources based on the quantity or percentage of preambles of beams corresponding to each SSB, and the time domain resource and the frequency domain resource. Alternatively, the terminal device may determine the third set of time-frequency domain resources by determining the quantity or percentage of preambles of beams corresponding to each SSB and the quantity of PRACH occasions.

Optionally, eight bits are used to respectively correspond to eight beams, and only when each bit is 1, a corresponding quantity of PRACH preambles or a percentage of PRACH preambles and a quantity of preamble occasions are allocated later, for example, the N1bit is directly used to indicate the quantity or percentage of preambles. Then, the N2bit is used to indicate a quantity of occasions, and the quantity of occasions may also be in a form of a fraction, indicating that multiple beams share one occasion.

In the technical solution of this application, the preamble allocation information and the resource allocation information of each target downlink beam are used to adjust a time-frequency domain resource, so that a time-frequency domain resource is flexibly allocated to each target downlink beam, and a time-frequency domain resource allocation manner is improved. A more efficient allocation result is obtained, which effectively avoids blind detection on a non-downlink beam, and improves the energy-saving gain.

### Rule III: time-frequency domain resources are adjusted by using a predefined sampling template

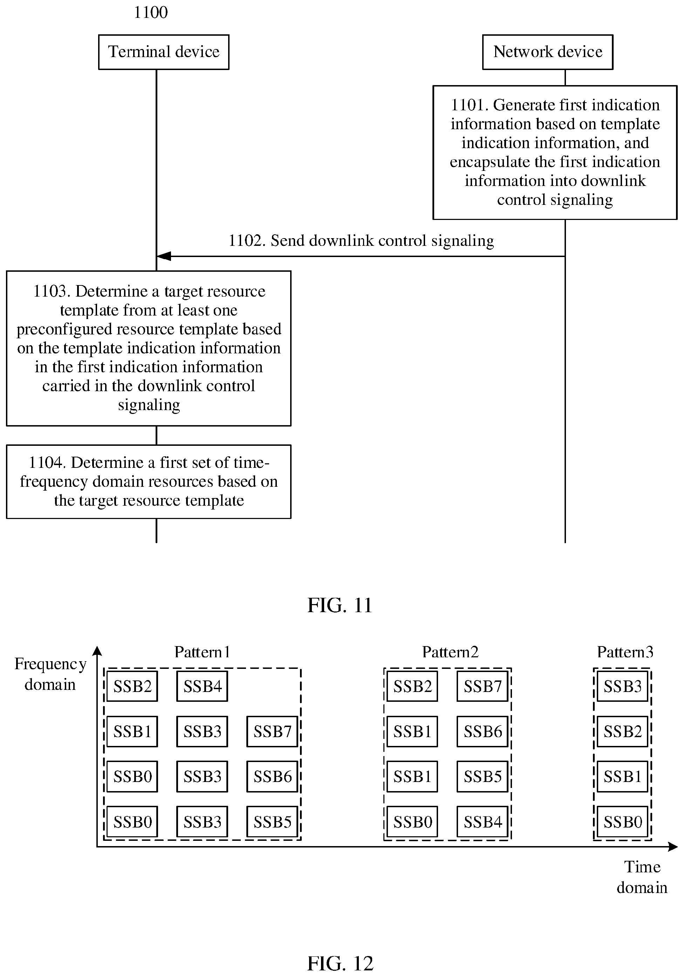

FIG. 11 is still another signaling diagram of a resource allocation method according to an embodiment of this application. The resource allocation method 1100 may include the following steps:
In step 1101, the network device may generate first indication information based on the template indication information, and encapsulate the first indication information into downlink control signaling.

In step 1102, the network device sends the downlink control signaling to the terminal device. Correspondingly, the terminal device may receive the downlink control signaling.

In step 1103, the terminal device determines the target resource template from the at least one preconfigured resource template based on the template indication information in the first indication information carried in the downlink control signaling, where the resource template is a time-frequency domain resource preconfigured for each target downlink beam.

Step 1104: The terminal device determines the first set of time-frequency domain resources based on the target resource template.

It may be understood that the foregoing receiving the first indication information may include: receiving downlink control signaling, where the downlink control signaling carries first indication information, and the first indication information includes template indication information.

The foregoing determining the first set of time-frequency domain resources based on the first indication information may include: determining a target resource template from at least one preconfigured resource template based on the template indication information, where the resource template is a time-frequency domain resource preconfigured for each target downlink beam; and determining the first set of time-frequency domain resources based on the target resource template.

It should be understood that, to quickly adjust the time-frequency domain resource by using the first indication information, at least one resource template may be predefined in a resource template manner, and each resource template refers to an allocation manner of a time-frequency domain resource. Quantities of time-frequency domain resources of different resource templates may be different, and resource allocation modes may also be different.

The resource template may include at least one time-frequency domain resource and an SSB index allocated to each video source resource.

Optionally, the first indication information may include, for example, mode index information. The template indication information may be, for example, information including the mode index information. That is, the template index information may be a template index of the target resource template.

It should be further understood that, when indicating the mode index information, the network device needs to first preconfigure the mode or send the mode to the terminal by using other signaling. As shown in FIG. 12, three resource templates (patterns) are preconfigured, and index information corresponding to the three patterns is respectively as follows: The index of pattern1 is 00, the index of pattern2 is 01, and the index of pattern3 is 10. Then, an index of a corresponding pattern1, a pattern2, or a pattern3 is indicated in the DCI/MAC CE/RRC.

Each pattern corresponds to the following two types of information: (1) the quantity or percentage of preambles of beams corresponding to each SSB, and the time domain resource and a frequency domain resource, or (2) the quantity or percentage of preambles of beams corresponding to each SSB, and the quantity of PRACH occasions.

In pattern 3 in FIG. 12, quantities of PRACH occasions in SS0, SS1, SS2, and SS3 corresponding to pattern 3 are all integers. The quantity or the percentage of preambles of beams corresponding to each SSB is not shown in FIG. 12. For example, if the PRACH occasion is a fraction, the PRACH occasion is shared based on the quantity or the percentage of preambles of a beam corresponding to the SSB.

Rule IV: time-frequency domain resources are adjusted by combining a predefined template with the number of beams.

In a possible design, the template indication information includes any one of the following:
a template identifier or a template index;
a quantity of beams of the target downlink beam, where the quantity of beams is used to determine the target resource template from the at least one resource template.

Specifically, each pattern may be corresponding to the bit value bitmap indicated by the downlink beam of the SIB or the quantity of first beams indicated by the bitmap. For example, when the quantity of indicated first beams is 4, pattern 3 is used, and specific beam indexes are corresponding to indexes indicated in the bitmap in ascending order.

It should be further understood that the foregoing indication may be indicated in DCI, a MAC CE, or an RRC, and this application is not limited.

Optionally, the terminal device sequentially allocates the PRACH resource based on the first indication information and indexes of beams corresponding to each SSB, to obtain the corresponding PRACH resource.

Optionally, when the PRACH resource is allocated based on the first indication information and the index sequence of the beams corresponding to each SSB, the PRACH resource is allocated based on an ascending order of the indexes of the beams corresponding to each SSB.

It should be understood that, when the PRACH resource is allocated, the PRACH resource is allocated sequentially in a manner of code domain, frequency domain, and time domain.

In Embodiment II, PRACH resources are flexibly allocated according to user distribution under each beam.

It should be noted that, compared with the prior art, resource reallocation is implemented in Embodiment II through template allocation, and resource allocation is performed in a lighter manner, thereby effectively improving a PRACH resource allocation manner.

### (3) Embodiment III

It may be understood that, before sending the first indication information, the network device needs to first determine which beam is actually used, and determine the first indication information based on the actually used beam, that is, the target downlink beam.

Optionally, the first indication information may be carried in a SIB1, and the SIB1 needs to be sent by using a beam. Therefore, the network device may further configure scanning periods of different beams, and indicate transmission of the SIB1 by using different scanning periods.

It should be understood that before the network device sends the SIB1, the network device may determine the beam indication information. The beam indication information may be configured to indicate transmission of the SIB1. For related content of the beam indication information, reference may be made to the foregoing description. Details are not described herein again.

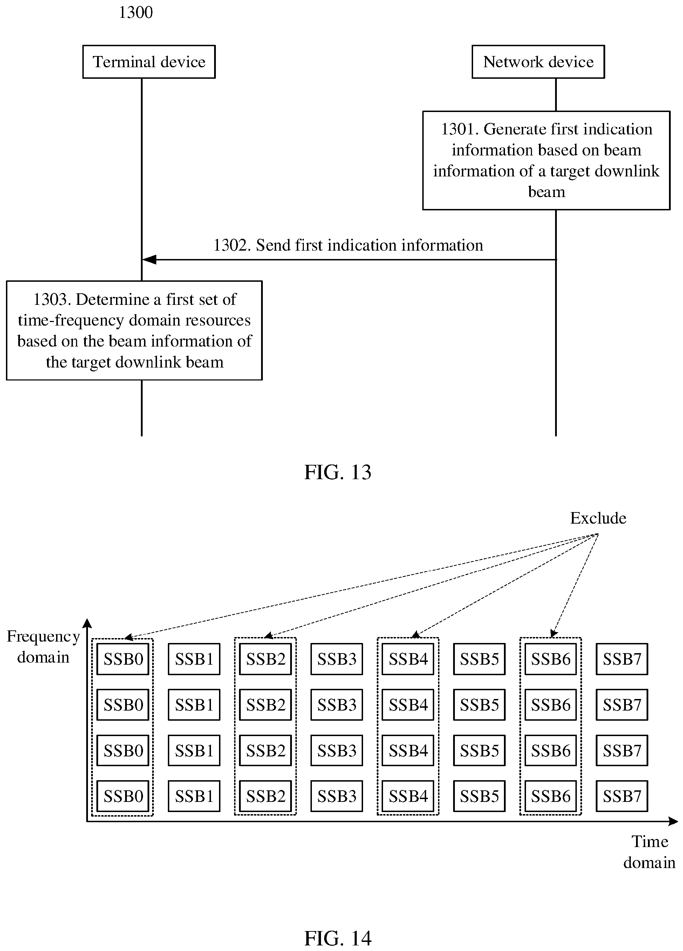

FIG. 13 is a signaling diagram of a resource allocation method according to an embodiment of this application. A difference from the foregoing embodiments lies in that the resource allocation method 1300 may include the following steps:
Step 1301: The network device generates first indication information based on beam information of a target downlink beam.
Step 1302: The network device sends the first indication information to the terminal device, and correspondingly, the terminal device may receive the first indication information. The first indication information may be configured to indicate the first set of time-frequency domain resources.

It may be understood that the beam information may be information used to characterize different beams. The beam information may be, for example, information such as a beam body, a beam index, or an identifier. Different beams have different beam information. A corresponding beam may be determined by using beam information. The beam body may be an actually delivered beam signal.

Step 1303: The terminal device determines a first set of time-frequency domain resources based on beam information of the target downlink beam.

The following describes in detail the determining of the first set of time-frequency domain resources based on the beam information of the target downlink beam.

It should be understood that the first indication information may include beam information of the target downlink beam, for example, an SSB index of the target downlink beam. Therefore, a decrease in the target downlink beam, that is, a decrease in a quantity of actual beams, may directly cause a decrease in the time-frequency domain resource.

Optionally, the first set of time-frequency domain resources are time-frequency domain resources remaining after no time-frequency domain resource of the target downlink beam is received in the second set of time-frequency domain resources.

Alternatively, the first set of time-frequency domain resources is a time-frequency domain resource on which the target downlink beam is received in the second set of time-frequency domain resources.

Optionally, the terminal device may be configured to determine, as the first set of time-frequency domain resources, a time-frequency domain resource on which no time-frequency domain resource of the target downlink beam is received is excluded from the second set of time-frequency domain resources. Alternatively, a time-frequency domain resource on which the target downlink beam is received in the second set of time-frequency domain resources is determined as the first set of time-frequency domain resources.

Similarly, by taking the target downlink beams which are SSB1/SSB3/SSB5/SSB7 as an example, when other parameters remain unchanged, the quantity of beams is changed from 8 to 4. In this case, time-frequency domain resources of other beams SSB0/SSB2/SSB4/SSB6 other than the target downlink beam are directly excluded, the time-frequency domain resource corresponding to the SSB1/SSB3/SSB5/SSB7 is the first set of time-frequency domain resources.

For a time-frequency domain resource on which no SSB0/ SSB2/ SSB4/SSB6 is sent in the second set of time-frequency domain resources, resource exclusion may be performed.

Optionally, determining, by the terminal device, a first set of time-frequency domain resources based on the target downlink beam may include: a time-frequency domain resource corresponding to the target downlink beam in the second set of time-frequency domain resources is determined based on a time-frequency domain resource of each downlink beam in the second set of time-frequency domain resource. The first set of time-frequency domain resources is determined based on a time-frequency domain resource of the target downlink beam in the second set of time-frequency domain resources. The following describes this scenario in detail with reference to FIG. 14.

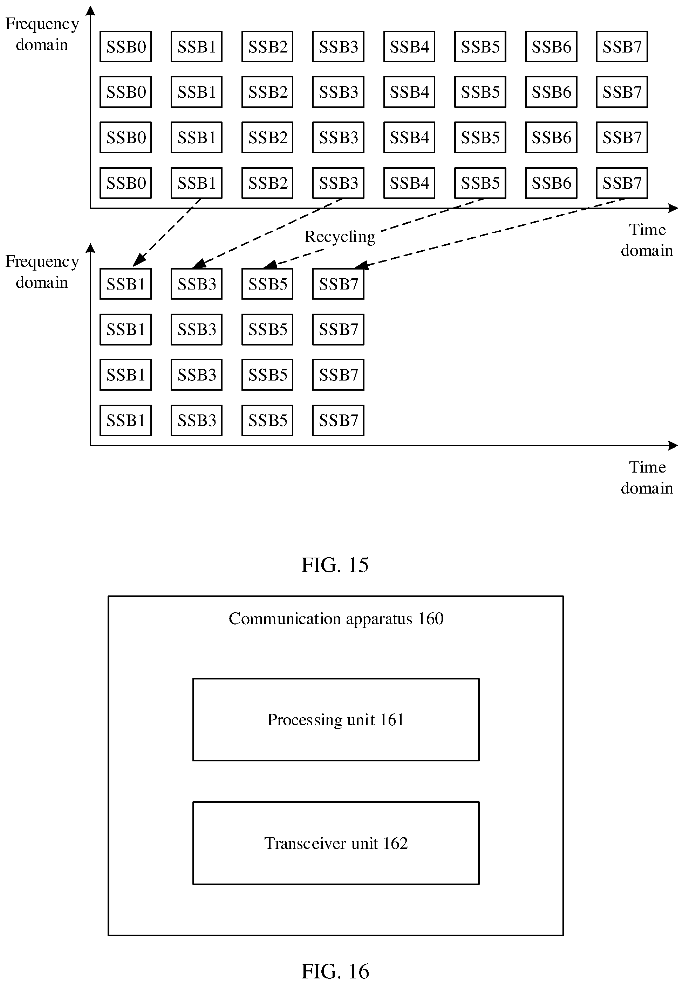

Optionally, determining, by the terminal device, a first set of time-frequency domain resources based on the target downlink beam may include: a time-frequency domain resource corresponding to the target downlink beam in the second set of time-frequency domain resources is determined based on a time-frequency domain resource of each downlink beam in the second set of time-frequency domain resource. The time-frequency domain resource of the target downlink beam in the second set of time-frequency domain resources is translated forward in time domain, to obtain the first set of time-frequency domain resources at which the translation ends. The following describes this scenario in detail with reference to FIG. 15.

It should be understood that, when no resource is reclaimed on the time-frequency domain resource for which the downlink beam is not sent, the network device may switch to the low power consumption mode, the blind detection disabling mode, or the sleep mode on the corresponding time-frequency domain resource, to reduce energy consumption. It should be understood that, for the terminal device, the quantity of first downlink beams of the SIB1 sent in the current time domain period is first determined, and a corresponding PRACH resource is obtained based on the quantity of first downlink beams of the SIB1 sent. For the network device, the SSB corresponding to the downlink beam of the SIB1 which is not sent is excluded.

As shown in FIG. 14, the SSB0/SSB2/SSB4/SSB6 of the second set of time-frequency domain resources is an SSB in which the downlink beam of the SIB1 is not sent, that is, excluded. If the PRACH resource is excluded, the PRACH resource is not used, does not take effect, or enters the sleep state. That is, it may be determined that the time-frequency domain resource corresponding to the SSB1/SSB3/SSB5/SSB7 is the first set of time-frequency domain resources, and the first set of time-frequency domain resources may be subjected to blind detection normally by the network device, so that the terminal device can normally perform random access.

It should be further understood that resource reclamation is performed on the time-frequency domain resource on which the downlink beam is not sent, for example, a time-frequency domain resource corresponding to the SSB0/SSB2/SSB4/SSB6, to obtain the first set of time-frequency domain resources obtained after resource reclamation.

As shown in FIG. 15, compared with the time-frequency domain resource allocation manner shown in FIG. 3, PRACH resources corresponding to other SSBs are excluded after adjustment, and the SSB1/SSB3/SSB5/SSB7 is translated forward in time domain according to an exclusion result, so as to complete recycling of SSB0/SSB2/SSB4/SSB6 time-frequency domain resources. Therefore, the SSB1/SSB3/SSB5/SSB7 is placed ahead in time domain as much as possible, so that the network device can enter deep sleep when no detection is required.

It should be further understood that when PRACH resources of some SSBs are excluded, the network device does not detect these SSBs, thereby further reducing energy consumption.

Embodiment III can reduce a resource detection amount of PRACHs, and improve an energy saving gain on a base station side.

It should be noted that, compared with the prior art, the present invention excludes that a PRACH resource corresponding to a downlink beam is not sent, thereby reducing the resource detection amount of PRACHs, and improving the energy saving gain.

In the foregoing Embodiments I to III, the quantity of time-frequency domain resources is adjusted. The following describes in detail a solution of adding a new time-frequency domain resource by using channel configuration information by using Embodiment IV to Embodiment VII.

As described above, the third indication information may be configured to indicate the target channel configuration information of the time-frequency domain resource. In a related technology, the time-frequency domain resource may be configured by using a time domain allocation table. To quickly indicate the time-frequency domain resource, the target channel configuration information may be indicated by using the time domain allocation table.

Further, the method further includes: The terminal device determines the channel configuration information corresponding to the target index as the target channel configuration information based on the time domain allocation table

In this embodiment of this application, a target index is indicated by using the time domain allocation table, and channel configuration information corresponding to the target index is determined as the target channel configuration information, to implement lighter and more flexible channel configuration information adjustment, so as to further indicate a new time-frequency domain resource by using the channel configuration information, thereby improving the adjustment efficiency of time-frequency domain resource.

As described above, the target index indicated by using the time domain allocation table may be an index directly indicated, or may be an index indicated under a constraint condition.

Further, the third indication information may include a target index, and the target index may be any one of the following:
a first index in the time domain allocation table; and
a second index that meets a first constraint condition in the time domain allocation table.

It should be noted that, the target index is indicated by using the time domain allocation table, so that the target channel configuration information may be further determined to implement precise and lightweight indication of the target channel configuration information.

An embodiment of this application is described in detail below by using an example in which the initial access channel is a PRACH channel.

### (4) Embodiment IV

In Embodiment IV, how to indicate the first index or the second index by using the time domain allocation table is described.

A process where the network device employs the third indication information to instruct the terminal device to acquire the corresponding PRACH resource may specifically include:

The network device indicates a PRACH period change by using common DCI information (English: Group common DCI)/MAC CE signaling/dedicated DCI information). The purpose of the period change is to better adapt to a quantity of users in a network, so as to correspond to a proper quantity of resources.

Optionally, the time domain allocation table may include a plurality of indexes, and channel configuration information associated with each index.

Each piece of channel configuration information may include at least one of the following:
a preamble format;
a period, where the period is determined based on y, and y is a modulo operation result obtained by performing a modulo operation by using x as a modulo value; and
a subframe number/subframe number;
a starting symbol;
the number of PRACH slots within a subframe;
the number of time-domain PRACH occasions within a PRACH slot; and
a PRACH duration.

It may be understood that, for a modulo operation performed by using x as the modulus value, the operation result is y, which may be represented by using the following formula n_{f} mod x = y.

It may be understood that, in actual application, the third set of time-frequency domain information may be determined based on at least one of the foregoing channel configuration information. In this embodiment, a type and a quantity of the at least one piece of information that participates in time-frequency domain resource adjustment are not limited too much.

It is mentioned above that time-frequency domain resource adjustment is performed by using a period, a subframe number/subframe number, a preamble format, and the like. Examples are not described herein.

Five manners of indicating the target index by using the time domain allocation table are described below:

Optionally first, the target index may be the first index in the time domain allocation table.

The channel configuration information of the PRACH is adjusted in a table. For example, the channel configuration information is a period, and N1 bits may be used to indicate a PRACH whose period changes. This table is a time domain table in 38.211, as shown in Table 1.

It should be understood that the foregoing time domain allocation table may be, for example, a first table, and the first table may be shown in Table 1. When the N1 bits are used to indicate the PRACH whose period changes, the configuration index of the PRACH channel corresponding to the adjusted PRACH period in the first table may be indicated, that is, the first index. The first index may be any index in the time domain allocation table. The first table may include at least one list item, and the second table may be generated based on at least one list item of the first table. For example, the at least one list item may form an information format of the channel configuration information. As shown in Table 1, the at least one list item may specifically include at least one of the following:
a PRACH configuration index;
a preamble format;
a modulo operation performed by using x as a modulus value, where an operation result is y, n_{f} mod x = y; subframe number/subframe number;
a starting symbol;
the number of PRACH slots within a subframe;
the number of time-domain PRACH occasions within a PRACH slot; and
a PRACH duration.

**Table 1**

| PRACH configuration index ${N}_{t}^{RA , slot}$ ${N}_{dur}^{RA}$ | Preamble format | ***n***_{f} mod ***x*** = ***y*** | | subframe number | starting symbol | Number of PRACH slots within a subframe | , number of time-domain PRACH occasions within a PRACH slot | PRACH duration |
|---|---|---|---|---|---|---|---|---|
| | | *x* | *y* | | | | | |
| 0 | 0 | 16 | 1 | 1 | 0 | - | - | 0 |
| 1 | 0 | 16 | 1 | 4 | 0 | - | - | 0 |
| 2 | 0 | 16 | 1 | 7 | 0 | - | - | 0 |
| 3 | 0 | 16 | 1 | 9 | 0 | - | - | 0 |
| 4 | 0 | 8 | 1 | 1 | 0 | - | - | 0 |
| 5 | 0 | 8 | 1 | 4 | 0 | - | - | 0 |
| 6 | 0 | 8 | 1 | 7 | 0 | - | - | 0 |
| 7 | 0 | 8 | 1 | 9 | 0 | - | - | 0 |
| 8 | 0 | 4 | 1 | 1 | 0 | - | - | 0 |
| 9 | 0 | 4 | 1 | 4 | 0 | - | - | 0 |
| 10 | 0 | 4 | 1 | 7 | 0 | - | - | 0 |
| 11 | 0 | 4 | 1 | 9 | 0 | - | - | 0 |
| 12 | 0 | 2 | 1 | 1 | 0 | - | - | 0 |
| 13 | 0 | 2 | 1 | 4 | 0 | - | - | 0 |
| 14 | 0 | 2 | 1 | 7 | 0 | - | - | 0 |
| 15 | 0 | 2 | 1 | 9 | 0 | - | - | 0 |
| 16 | 0 | 1 | 0 | 1 | 0 | - | - | 0 |
| 17 | 0 | 1 | 0 | 4 | 0 | - | - | 0 |
| 18 | 0 | 1 | 0 | 7 | 0 | - | - | 0 |
| 19 | 0 | 1 | 0 | 1,6 | 0 | - | - | 0 |
| 20 | 0 | 1 | 0 | 2,7 | 0 | - | - | 0 |
| 21 | 0 | 1 | 0 | 3,8 | 0 | - | - | 0 |
| 22 | 0 | 1 | 0 | 1,4,7 | 0 | - | - | 0 |
| 23 | 0 | 1 | 0 | 2,5,8 | 0 | - | - | 0 |
| 24 | 0 | 1 | 0 | 3,6,9 | 0 | - | - | 0 |
| 25 | 0 | 1 | 0 | 0,2,4,6,8 | 0 | - | - | 0 |
| 26 | 0 | 1 | 0 | 1,3,5,7,9 | 0 | - | - | 0 |
| 27 | 0 | 1 | 0 | 0,1,2,3,4, 5,6,7,8,9 | 0 | - | - | 0 |
| 28 | 1 | 16 | 1 | 1 | 0 | - | - | 0 |
| 29 | 1 | 16 | 1 | 4 | 0 | - | - | 0 |
| 30 | 1 | 16 | 1 | 7 | 0 | - | - | 0 |
| 31 | 1 | 16 | 1 | 9 | 0 | - | - | 0 |
| 32 | 1 | 8 | 1 | 1 | 0 | - | - | 0 |
| 33 | 1 | 8 | 1 | 4 | 0 | - | - | 0 |
| 34 | 1 | 8 | 1 | 7 | 0 | - | - | 0 |
| 35 | 1 | 8 | 1 | 9 | 0 | - | - | 0 |
| 36 | 1 | 4 | 1 | 1 | 0 | - | - | 0 |
| 37 | 1 | 4 | 1 | 4 | 0 | - | - | 0 |
| 38 | 1 | 4 | 1 | 7 | 0 | - | - | 0 |
| 39 | 1 | 4 | 1 | 9 | 0 | - | - | 0 |
| 40 | 1 | 2 | 1 | 1 | 0 | - | - | 0 |
| 41 | 1 | 2 | 1 | 4 | 0 | - | - | 0 |
| 42 | 1 | 2 | 1 | 7 | 0 | - | - | 0 |
| 43 | 1 | 2 | 1 | 9 | 0 | - | - | 0 |
| 44 | 1 | 1 | 0 | 1 | 0 | - | - | 0 |
| 45 | 1 | 1 | 0 | 4 | 0 | - | - | 0 |
| 46 | 1 | 1 | 0 | 7 | 0 | - | - | 0 |
| 47 | 1 | 1 | 0 | 1,6 | 0 | - | - | 0 |
| 48 | 1 | 1 | 0 | 2,7 | 0 | - | - | 0 |
| 49 | 1 | 1 | 0 | 3,8 | 0 | - | - | 0 |
| 50 | 1 | 1 | 0 | 1,4,7 | 0 | - | - | 0 |
| 51 | 1 | 1 | 0 | 2,5,8 | 0 | - | - | 0 |
| 52 | 1 | 1 | 0 | 3,6,9 | 0 | - | - | 0 |
| 53 | 2 | 16 | 1 | 1 | 0 | - | - | 0 |
| 54 | 2 | 8 | 1 | 1 | 0 | - | - | 0 |
| 55 | 2 | 4 | 0 | 1 | 0 | - | - | 0 |
| 56 | 2 | 2 | 0 | 1 | 0 | - | - | 0 |
| 57 | 2 | 2 | 0 | 5 | 0 | - | - | 0 |
| 58 | 2 | 1 | 0 | 1 | 0 | - | - | 0 |
| 59 | 2 | 1 | 0 | 5 | 0 | - | - | 0 |
| 60 | 3 | 16 | 1 | 1 | 0 | - | - | 0 |
| 61 | 3 | 16 | 1 | 4 | 0 | - | - | 0 |
| 62 | 3 | 16 | 1 | 7 | 0 | - | - | 0 |
| 63 | 3 | 16 | 1 | 9 | 0 | - | - | 0 |
| 64 | 3 | 8 | 1 | 1 | 0 | - | - | 0 |
| 65 | 3 | 8 | 1 | 4 | 0 | - | - | 0 |
| 66 | 3 | 8 | 1 | 7 | 0 | - | - | 0 |
| 67 | 3 | 4 | 1 | 1 | 0 | - | - | 0 |
| 68 | 3 | 4 | 1 | 4 | 0 | - | - | 0 |
| 69 | 3 | 4 | 1 | 7 | 0 | - | - | 0 |
| 70 | 3 | 4 | 1 | 9 | 0 | - | - | 0 |
| 71 | 3 | 2 | 1 | 1 | 0 | - | - | 0 |
| 72 | 3 | 2 | 1 | 4 | 0 | - | - | 0 |
| 73 | 3 | 2 | 1 | 7 | 0 | - | - | 0 |
| 74 | 3 | 2 | 1 | 9 | 0 | - | - | 0 |
| 75 | 3 | 1 | 0 | 1 | 0 | - | - | 0 |
| 76 | 3 | 1 | 0 | 4 | 0 | - | - | 0 |
| 77 | 3 | 1 | 0 | 7 | 0 | - | - | 0 |
| 78 | 3 | 1 | 0 | 1,6 | 0 | - | - | 0 |
| 79 | 3 | 1 | 0 | 2,7 | 0 | - | - | 0 |
| 80 | 3 | 1 | 0 | 3,8 | 0 | - | - | 0 |
| 81 | 3 | 1 | 0 | 1,4,7 | 0 | - | - | 0 |
| 82 | 3 | 1 | 0 | 2,5,8 | 0 | - | - | 0 |
| 83 | 3 | 1 | 0 | 3,6,9 | 0 | - | - | 0 |
| 84 | 3 | 1 | 0 | 0,2,4,6,8 | 0 | - | - | 0 |
| 85 | 3 | 1 | 0 | 1,3,5,7,9 | 0 | - | - | 0 |
| 86 | 3 | 1 | 0 | 0,1,2,3,4, 5,6,7,8,9 | 0 | - | - | 0 |
| 87 | A1 | 16 | 0 | 4,9 | 0 | 1 | 6 | 2 |
| 88 | A1 | 16 | 1 | 4 | 0 | 2 | 6 | 2 |
| 89 | A1 | 8 | 0 | 4,9 | 0 | 1 | 6 | 2 |
| 90 | A1 | 8 | 1 | 4 | 0 | 2 | 6 | 2 |
| 91 | A1 | 4 | 0 | 4,9 | 0 | 1 | 6 | 2 |
| 92 | A1 | 4 | 1 | 4,9 | 0 | 1 | 6 | 2 |
| 93 | A1 | 4 | 0 | 4 | 0 | 2 | 6 | 2 |
| 94 | A1 | 2 | 0 | 4,9 | 0 | 1 | 6 | 2 |
| 95 | A1 | 2 | 0 | 1 | 0 | 2 | 6 | 2 |
| 96 | A1 | 2 | 0 | 4 | 0 | 2 | 6 | 2 |
| 97 | A1 | 2 | 0 | 7 | 0 | 2 | 6 | 2 |
| 98 | A1 | 1 | 0 | 4 | 0 | 1 | 6 | 2 |
| 99 | A1 | 1 | 0 | 1,6 | 0 | 1 | 6 | 2 |
| 100 | A1 | 1 | 0 | 4,9 | 0 | 1 | 6 | 2 |
| 101 | A1 | 1 | 0 | 1 | 0 | 2 | 6 | 2 |
| 102 | A1 | 1 | 0 | 7 | 0 | 2 | 6 | 2 |
| 103 | A1 | 1 | 0 | 2,7 | 0 | 2 | 6 | 2 |
| 104 | A1 | 1 | 0 | 1,4,7 | 0 | 2 | 6 | 2 |
| 105 | A1 | 1 | 0 | 0,2,4,6,8 | 0 | 2 | 6 | 2 |
| 106 | A1 | 1 | 0 | 0,1,2,3,4, 5,6,7,8,9 | 0 | 2 | 6 | 2 |
| 107 | A1 | 1 | 0 | 1,3,5,7,9 | 0 | 2 | 6 | 2 |
| 108 | A1/B1 | 2 | 0 | 4,9 | 0 | 1 | 7 | 2 |
| 109 | A1/B1 | 2 | 0 | 4 | 0 | 2 | 7 | 2 |
| 110 | A1/B1 | 1 | 0 | 4 | 0 | 1 | 7 | 2 |
| 111 | A1/B1 | 1 | 0 | 1,6 | 0 | 1 | 7 | 2 |
| 112 | A1/B1 | 1 | 0 | 4,9 | 0 | 1 | 7 | 2 |
| 113 | A1/B1 | 1 | 0 | 1 | 0 | 2 | 7 | 2 |
| 114 | A1/B1 | 1 | 0 | 7 | 0 | 2 | 7 | 2 |
| 115 | A1/B1 | 1 | 0 | 1,4,7 | 0 | 2 | 7 | 2 |
| 116 | A1/B1 | 1 | 0 | 0,2,4,6,8 | 0 | 2 | 7 | 2 |
| 117 | A2 | 16 | 1 | 2,6,9 | 0 | 1 | 3 | 4 |
| 118 | A2 | 16 | 1 | 4 | 0 | 2 | 3 | 4 |
| 119 | A2 | 8 | 1 | 2,6,9 | 0 | 1 | 3 | 4 |
| 120 | A2 | 8 | 1 | 4 | 0 | 2 | 3 | 4 |
| 121 | A2 | 4 | 0 | 2,6,9 | 0 | 1 | 3 | 4 |
| 122 | A2 | 4 | 0 | 4 | 0 | 2 | 3 | 4 |
| 123 | A2 | 2 | 1 | 2,6,9 | 0 | 1 | 3 | 4 |
| 124 | A2 | 2 | 0 | 1 | 0 | 2 | 3 | 4 |
| 125 | A2 | 2 | 0 | 4 | 0 | 2 | 3 | 4 |
| 126 | A2 | 2 | 0 | 7 | 0 | 2 | 3 | 4 |
| 127 | A2 | 1 | 0 | 4 | 0 | 1 | 3 | 4 |
| 128 | A2 | 1 | 0 | 1,6 | 0 | 1 | 3 | 4 |
| 129 | A2 | 1 | 0 | 4,9 | 0 | 1 | 3 | 4 |
| 130 | A2 | 1 | 0 | 1 | 0 | 2 | 3 | 4 |
| 131 | A2 | 1 | 0 | 7 | 0 | 2 | 3 | 4 |
| 132 | A2 | 1 | 0 | 2,7 | 0 | 2 | 3 | 4 |
| 133 | A2 | 1 | 0 | 1,4,7 | 0 | 2 | 3 | 4 |
| 134 | A2 | 1 | 0 | 0,2,4,6,8 | 0 | 2 | 3 | 4 |
| 135 | A2 | 1 | 0 | 0,1,2,3,4, 5,6,7,8,9 | 0 | 2 | 3 | 4 |
| 136 | A2 | 1 | 0 | 1,3,5,7,9 | 0 | 2 | 3 | 4 |
| 137 | A2/B2 | 2 | 1 | 2,6,9 | 0 | 1 | 3 | 4 |
| 138 | A2/B2 | 2 | 0 | 4 | 0 | 2 | 3 | 4 |
| 139 | A2/B2 | 1 | 0 | 4 | 0 | 1 | 3 | 4 |
| 140 | A2/B2 | 1 | 0 | 1,6 | 0 | 1 | 3 | 4 |
| 141 | A2/B2 | 1 | 0 | 4,9 | 0 | 1 | 3 | 4 |
| 142 | A2/B2 | 1 | 0 | 1 | 0 | 2 | 3 | 4 |
| 143 | A2/B2 | 1 | 0 | 7 | 0 | 2 | 3 | 4 |
| 144 | A2/B2 | 1 | 0 | 1,4,7 | 0 | 2 | 3 | 4 |
| 145 | A2/B2 | 1 | 0 | 0,2,4,6,8 | 0 | 2 | 3 | 4 |
| 146 | A2/B2 | 1 | 0 | 0,1,2,3,4, 5,6,7,8,9 | 0 | 2 | 3 | 4 |
| 147 | A3 | 16 | 1 | 4,9 | 0 | 1 | 2 | 6 |
| 148 | A3 | 16 | 1 | 4 | 0 | 2 | 2 | 6 |
| 149 | A3 | 8 | 1 | 4,9 | 0 | 1 | 2 | 6 |
| 150 | A3 | 8 | 1 | 4 | 0 | 2 | 2 | 6 |
| 151 | A3 | 4 | 0 | 4,9 | 0 | 1 | 2 | 6 |
| 152 | A3 | 4 | 0 | 4 | 0 | 2 | 2 | 6 |
| 153 | A3 | 2 | 1 | 2,6,9 | 0 | 2 | 2 | 6 |
| 154 | A3 | 2 | 0 | 1 | 0 | 2 | 2 | 6 |
| 155 | A3 | 2 | 0 | 4 | 0 | 2 | 2 | 6 |
| 156 | A3 | 2 | 0 | 7 | 0 | 2 | 2 | 6 |
| 157 | A3 | 1 | 0 | 4 | 0 | 1 | 2 | 6 |
| 158 | A3 | 1 | 0 | 1,6 | 0 | 1 | 2 | 6 |
| 159 | A3 | 1 | 0 | 4,9 | 0 | 1 | 2 | 6 |
| 160 | A3 | 1 | 0 | 1 | 0 | 2 | 2 | 6 |
| 161 | A3 | 1 | 0 | 7 | 0 | 2 | 2 | 6 |
| 162 | A3 | 1 | 0 | 2,7 | 0 | 2 | 2 | 6 |
| 163 | A3 | 1 | 0 | 1,4,7 | 0 | 2 | 2 | 6 |
| 164 | A3 | 1 | 0 | 0,2,4,6,8 | 0 | 2 | 2 | 6 |
| 165 | A3 | 1 | 0 | 0,1,2,3,4, 5,6,7,8,9 | 0 | 2 | 2 | 6 |
| 166 | A3 | 1 | 0 | 1,3,5,7,9 | 0 | 2 | 2 | 6 |
| 167 | A3/B3 | 2 | 1 | 2,6,9 | 0 | 2 | 2 | 6 |
| 168 | A3/B3 | 2 | 0 | 4 | 0 | 2 | 2 | 6 |
| 169 | A3/B3 | 1 | 0 | 4 | 0 | 1 | 2 | 6 |
| 170 | A3/B3 | 1 | 0 | 1,6 | 0 | 1 | 2 | 6 |
| 171 | A3/B3 | 1 | 0 | 4,9 | 0 | 1 | 2 | 6 |
| 172 | A3/B3 | 1 | 0 | 1 | 0 | 2 | 2 | 6 |
| 173 | A3/B3 | 1 | 0 | 7 | 0 | 2 | 2 | 6 |
| 174 | A3/B3 | 1 | 0 | 1,4,7 | 0 | 2 | 2 | 6 |
| 175 | A3/B3 | 1 | 0 | 0,2,4,6,8 | 0 | 2 | 2 | 6 |
| 176 | A3/B3 | 1 | 0 | 0,1,2,3,4, 5,6,7,8,9 | 0 | 2 | 2 | 6 |
| 177 | B1 | 16 | 0 | 4,9 | 0 | 1 | 7 | 2 |
| 178 | B1 | 16 | 1 | 4 | 0 | 2 | 7 | 2 |
| 179 | B1 | 8 | 0 | 4,9 | 0 | 1 | 7 | 2 |
| 180 | B1 | 8 | 1 | 4 | 0 | 2 | 7 | 2 |
| 181 | B1 | 4 | 0 | 4,9 | 0 | 1 | 7 | 2 |
| 182 | B1 | 4 | 1 | 4,9 | 0 | 1 | 7 | 2 |
| 183 | B1 | 4 | 0 | 4 | 0 | 2 | 7 | 2 |
| 184 | B1 | 2 | 0 | 4,9 | 0 | 1 | 7 | 2 |
| 185 | B1 | 2 | 0 | 1 | 0 | 2 | 7 | 2 |
| 186 | B1 | 2 | 0 | 4 | 0 | 2 | 7 | 2 |
| 187 | B1 | 2 | 0 | 7 | 0 | 2 | 7 | 2 |
| 188 | B1 | 1 | 0 | 4 | 0 | 1 | 7 | 2 |
| 189 | B1 | 1 | 0 | 1,6 | 0 | 1 | 7 | 2 |
| 190 | B1 | 1 | 0 | 4,9 | 0 | 1 | 7 | 2 |
| 191 | B1 | 1 | 0 | 1 | 0 | 2 | 7 | 2 |
| 192 | B1 | 1 | 0 | 7 | 0 | 2 | 7 | 2 |
| 193 | B1 | 1 | 0 | 2,7 | 0 | 2 | 7 | 2 |
| 194 | B1 | 1 | 0 | 1,4,7 | 0 | 2 | 7 | 2 |
| 195 | B1 | 1 | 0 | 0,2,4,6,8 | 0 | 2 | 7 | 2 |
| 196 | B1 | 1 | 0 | 0,1,2,3,4, 5,6,7,8,9 | 0 | 2 | 7 | 2 |
| 197 | B1 | 1 | 0 | 1,3,5,7,9 | 0 | 2 | 7 | 2 |
| 198 | B4 | 16 | 0 | 4,9 | 0 | 2 | 1 | 12 |
| 199 | B4 | 16 | 1 | 4 | 0 | 2 | 1 | 12 |
| 200 | B4 | 8 | 0 | 4,9 | 0 | 2 | 1 | 12 |
| 201 | B4 | 8 | 1 | 4 | 0 | 2 | 1 | 12 |
| 202 | B4 | 4 | 0 | 4,9 | 0 | 2 | 1 | 12 |
| 203 | B4 | 4 | 0 | 4 | 0 | 2 | 1 | 12 |
| 204 | B4 | 4 | 1 | 4,9 | 0 | 2 | 1 | 12 |
| 205 | B4 | 2 | 0 | 4,9 | 0 | 2 | 1 | 12 |
| 206 | B4 | 2 | 0 | 1 | 0 | 2 | 1 | 12 |
| 207 | B4 | 2 | 0 | 4 | 0 | 2 | 1 | 12 |
| 208 | B4 | 2 | 0 | 7 | 0 | 2 | 1 | 12 |
| 209 | B4 | 1 | 0 | 1 | 0 | 2 | 1 | 12 |
| 210 | B4 | 1 | 0 | 4 | 0 | 2 | 1 | 12 |
| 211 | B4 | 1 | 0 | 7 | 0 | 2 | 1 | 12 |
| 212 | B4 | 1 | 0 | 1,6 | 0 | 2 | 1 | 12 |
| 213 | B4 | 1 | 0 | 2,7 | 0 | 2 | 1 | 12 |
| 214 | B4 | 1 | 0 | 4,9 | 0 | 2 | 1 | 12 |
| 215 | B4 | 1 | 0 | 1,4,7 | 0 | 2 | 1 | 12 |
| 216 | B4 | 1 | 0 | 0,2,4,6,8 | 0 | 2 | 1 | 12 |
| 217 | B4 | 1 | 0 | 0,1,2,3,4,5,6,7,8,9 | 0 | 2 | 1 | 12 |
| 218 | B4 | 1 | 0 | 1,3,5,7,9 | 0 | 2 | 1 | 12 |
| 219 | C0 | 8 | 1 | 4 | 0 | 2 | 7 | 2 |
| 220 | C0 | 4 | 1 | 4,9 | 0 | 1 | 7 | 2 |
| 221 | C0 | 4 | 0 | 4 | 0 | 2 | 7 | 2 |
| 222 | C0 | 2 | 0 | 4,9 | 0 | 1 | 7 | 2 |
| 223 | C0 | 2 | 0 | 1 | 0 | 2 | 7 | 2 |
| 224 | C0 | 2 | 0 | 4 | 0 | 2 | 7 | 2 |
| 225 | C0 | 2 | 0 | 7 | 0 | 2 | 7 | 2 |
| 226 | C0 | 1 | 0 | 4 | 0 | 1 | 7 | 2 |
| 227 | C0 | 1 | 0 | 1,6 | 0 | 1 | 7 | 2 |
| 228 | C0 | 1 | 0 | 4,9 | 0 | 1 | 7 | 2 |
| 229 | C0 | 1 | 0 | 1 | 0 | 2 | 7 | 2 |
| 230 | C0 | 1 | 0 | 7 | 0 | 2 | 7 | 2 |
| 231 | C0 | 1 | 0 | 2,7 | 0 | 2 | 7 | 2 |
| 232 | C0 | 1 | 0 | 1,4,7 | 0 | 2 | 7 | 2 |
| 233 | C0 | 1 | 0 | 0,2,4,6,8 | 0 | 2 | 7 | 2 |
| 234 | C0 | 1 | 0 | 0,1,2,3,4, 5,6,7,8,9 | 0 | 2 | 7 | 2 |
| 235 | C0 | 1 | 0 | 1,3,5,7,9 | 0 | 2 | 7 | 2 |
| 236 | C2 | 16 | 1 | 4,9 | 0 | 1 | 2 | 6 |
| 237 | C2 | 16 | 1 | 4 | 0 | 2 | 2 | 6 |
| 238 | C2 | 8 | 1 | 4,9 | 0 | 1 | 2 | 6 |
| 239 | C2 | 8 | 1 | 4 | 0 | 2 | 2 | 6 |
| 240 | C2 | 4 | 0 | 4,9 | 0 | 1 | 2 | 6 |
| 241 | C2 | 4 | 0 | 4 | 0 | 2 | 2 | 6 |
| 242 | C2 | 2 | 1 | 2,6,9 | 0 | 2 | 2 | 6 |
| 243 | C2 | 2 | 0 | 1 | 0 | 2 | 2 | 6 |
| 244 | C2 | 2 | 0 | 4 | 0 | 2 | 2 | 6 |
| 245 | C2 | 2 | 0 | 7 | 0 | 2 | 2 | 6 |
| 246 | C2 | 1 | 0 | 4 | 0 | 1 | 2 | 6 |
| 247 | C2 | 1 | 0 | 1,6 | 0 | 1 | 2 | 6 |
| 248 | C2 | 1 | 0 | 4,9 | 0 | 1 | 2 | 6 |
| 249 | C2 | 1 | 0 | 1 | 0 | 2 | 2 | 6 |
| 250 | C2 | 1 | 0 | 7 | 0 | 2 | 2 | 6 |
| 251 | C2 | 1 | 0 | 2,7 | 0 | 2 | 2 | 6 |
| 252 | C2 | 1 | 0 | 1,4,7 | 0 | 2 | 2 | 6 |
| 253 | C2 | 1 | 0 | 0,2,4,6,8 | 0 | 2 | 2 | 6 |
| 254 | C2 | 1 | 0 | 0,1,2,3,4, 5,6,7,8,9 | 0 | 2 | 2 | 6 |
| 255 | C2 | 1 | 0 | 1,3,5,7,9 | 0 | 2 | 2 | 6 |

In Table 1, the PRACH Configuration Index is a configuration index of a PRACH channel. Preamble format is the preamble format. y is configured to determine a period corresponding to the PRACH resource, and y is an operation result obtained by performing a modulus operation by modulo x. Subframe number is the subframe number. Starting symbol is the starting symbol. Number of PRACH slots within a subframe is the number of PRACH slots in a subframe. ${N}_{t}^{RA , slot}$ That is, number of time-domain PRACH occasions within a PRACH slot is the number of PRACH attempts in the time domain in the PRACH slot. ${N}_{dur}^{RA}$, that is, PRACH duration is the PRACH duration.

It should be noted that, when the channel configuration information of the PRACH is adjusted, a value of y in Table 1 may be specifically adjusted. If the value of y becomes larger, a period corresponding to the PRACH is prolonged.

That is, when the channel configuration information of the PRACH is adjusted, a value of y in the channel configuration information in the target index in the time domain allocation table may be specifically adjusted. If the value of y becomes larger, a period corresponding to the PRACH is prolonged.

It should be further noted that, when the channel configuration information of the PRACH is adjusted, the subframe number/subframe number, the preamble format, and/or the time domain quantity in the mark 1 may be specifically adjusted.

In the solution of this application, the channel configuration information of the time-frequency domain resource may be adjusted in a lighter manner by using an index indication manner, so that an adjustment manner for sending the channel configuration information is more convenient and accurate.

Optionally II, the target index is a second index that meets a first constraint condition in the time domain allocation table.

Further, the second index that meets the first constraint condition in the time domain allocation table may be:
The second index is an index whose preamble format in the time domain allocation table is the first preamble format, and the first preamble format is indicated by the first message.

Optionally, the first message may be a system message, for example, any one of a SIB1 and a master system information block (Master Information Block, master system information block).

The terminal device may be configured to obtain, from the time domain allocation table, an index whose preamble format is the first preamble format, and determine the obtained index as the second index.

For example, the SIB1 may carry the second index. Specifically, N2 bits may be used to indicate adjustment of time periods in a format corresponding to the PRACH indicated by the SIB1 in each table, and a specific sequence is sorted based on a sequence in a same format in the table.

It should be understood that the format corresponding to the PRACH is a preamble format corresponding to the PRACH. When N2 bits are used to indicate adjustment of the time period in the format corresponding to the PRACH indicated by the SIB1 in each table, an index whose preamble format is the first value may be selected from configuration indexes of the PRACH channel corresponding to the adjusted PRACH period in the first table. That is, the preamble format in the first index is an index of the first value.

That is, a n_{f} mod x = y column as in Table 1 is considered.

The first value may be the same as a value corresponding to a preamble format that is previously sent to the terminal device in the index. This optional solution may reduce the quantity of bits.

In the technical solution of this application, the preamble format is used for conditional constraint, so that preamble formats corresponding to two pieces of channel configuration information are the same, so that impact of time-frequency domain resource adjustment on the preamble can be avoided, and negative impact of time-frequency domain resource adjustment can be reduced, which enables efficient and accurate resource update.

Optional III: The target index is a second index that meets a first constraint condition in the time domain allocation table.

Further, the second index that meets the first constraint condition in the time domain allocation table may be:
The second index is an index in which the starting symbol in the time domain allocation table is a preset target symbol.

Optionally, the terminal device may be configured to obtain, from the time domain allocation table, an index whose starting symbol is the preset target symbol, and determine the obtained index as the second index.

N3 bits are used to indicate the combination of other columns. For example, a condition that a starting symbol=a second value is added for constraint, and the quantity of bits is further reduced.

It should be understood that, when N3 bits are used to indicate a combination of other columns, an index whose start character is the second value may be selected from the configuration indexes of the PRACH channel corresponding to the adjusted PRACH period in the first table. That is, the starting symbol in the second index is an index under the second value.

The second value may be 0 or another value. In this optional solution, the quantity of bits may be further reduced.

Optionally, the second index that meets the first constraint condition in the time domain allocation table may be:
The second index is an index in the time domain allocation table whose subframe number is the same as the subframe number of the third index, and/or whose preamble format is the same as the preamble format of the third index, and the third index is indicated by the second message.

Optionally, the second message may be a system message, for example, any one of a SIB1 and a master system information block (Master Information Block, master system information block).

Further, the terminal device may be configured to obtain, from the time domain allocation table, an index whose subframe number is the same as the subframe number of the third index, and/or whose preamble format is the same as the preamble format of the third index, and determine the obtained index as the second index.

Based on an index in the indication table in the existing SIB1 as a reference, the table is restricted to a same subframe number Subframe number and/or a same preamble format Preamble format for indication.

It should be understood that the foregoing table may be Table 1.

An index in the indication table in the existing SIB1 may also be referred to as a second index.

In the technical solution of this application, a preamble is used for constraint, and an index with a same preamble format is used as a second index, and the preamble format needs to comply with certain design principles and specifications to ensure system performance and reliability. That is, time-frequency domain resources can be flexibly adjusted without affecting system running stability.

In any embodiment of this application, the terminal device may be UE that meets a first communication standard. The terminal device may also be UE that meets a second communication standard. In addition, the terminal device may also be UE that meets the first communication standard and the second communication standard.

For example, the first communication standard may be an existing or existing communication standard. The second communication standard may be a latest communication standard. That is, a publication time of the first communication standard is earlier than a publication time of the second communication standard. For example, the first communication standard may be an R17 standard or an R18 standard, and the second communication standard may be an R19 standard.

Further, the terminal device may support the second set of time-frequency domain resources in the first communications standard, and may support the first set of time-frequency domain resources in the second communications standard.

In this implementation, a PRACH period corresponding to a legacy (legacy) terminal device is designed to be greater than a PRACH period corresponding to a new R19 terminal device, so that a PRACH occasion becomes dense in a same time period, and a PRACH resource of a legacy user is not affected. In addition, more PRACH occasions are provided for new terminal devices, so that PRACH resources are more compatible.

Further, if the same subframe number is used as the constraint condition of the index, the related content of the legacy terminal and the latest R19 terminal may not change, so that adjustment of the time-frequency domain resource does not affect normal running of the system.

Optionally IV, the target index is a second index that meets a first constraint condition in the time domain allocation table.

Further, the second index that meets the first constraint condition in the time domain allocation table may be: The second index is an index whose period is the same as the target period in the time domain allocation table, the target period is obtained by performing multiple adjustment based on a period of the fourth index, and the fourth index is indicated by the third message.

Optionally, the third message may be a system message, for example, any one of a SIB1 and a master system information block (Master system Information Block, master system information block).

Further, the terminal device may be configured to search for the time domain allocation table for an index whose period is the same as the target period, where the target period is obtained by performing multiple adjustment based on a period of the fourth index, and the fourth index is indicated by the third message.

Based on an index in the indication table in the existing SIB1 as a reference, the index is constrained to be an index that increases in multiples in an upward or downward period of a current period. For example, one or two indexes. The period multiplier growth means that the target channel configuration information is a multiple of the period corresponding to the current index. For example, the current period is 10 ms, and the target channel configuration information is 20 ms.

For example, assuming that the period is 10 s, index filtering is performed by using the 10 ms period to obtain an intermediate index corresponding to the 10 ms period, and the second index corresponding to the 20 ms period is queried upward or downward by using the intermediate index as a reference.

An index in the indication table in the existing SIB1 may also be referred to as a second index.

In addition, the first indication information may further indicate the query direction. For example, 0 may represent an upward query, and 1 represents a downward query. Certainly, the method is merely an example, and does not constitute a specific limitation.

For example, when the index that increases exponentially in an upward or downward period of the current period is indicated, 0 may be used to indicate the index that increases exponentially in the current period, and 1 is used to indicate the index that increases exponentially in the current period. Alternatively, 1 is used to indicate an index that increases by multiples in the current period, and 0 is used to indicate an index that increases by multiples in the current period. This is not limited in this application.

It should be understood that, in this implementation, when the PRACH period does not change much, an index for increasing costs upward or downward in the current period may be indicated, so that indication can be simplified, and the quantity of bits can be further reduced.

For example, if x in the original PRACH period is 8, the index that increases by multiples in the current period is the first index whose x is 16 in the table that is found based on the previous index. Similarly, the index that increases by multiples in the current period is the first index whose x is 4 that is found in the table and that is based on a previous index.

In Embodiment IV, a change of a PRACH resource in a time domain period may be indicated more lightly by using an index indication manner, thereby improving an energy saving effect of the network device.

As described above, how to use the time domain allocation table is described in detail in embodiments, and how to obtain the time domain allocation table is described in detail in Embodiments V to VII below.

### (5) Embodiment V

In Embodiment V, the time domain allocation table may include: a first table, where the first table includes an existing time domain table and/or a newly added time domain table.

The first table may be the foregoing Table 1. The newly added time domain table may be a newly added table based on a table format of the first table.

The newly added time domain table may be generated based on at least one list item in the first table. That is, new column information is added based on the first table. The column information may include data corresponding to at least one list item.

A process in which the network device instructs, by using the first indication information, the terminal device to obtain the corresponding PRACH resource may specifically include:
The network device supplements, to an existing table, channel configuration information corresponding to a longer PRACH period. Specifically, the supplementary PRACH period may be indicated separately, or indicated in a mixed manner in an existing table, for example, a longer frame period is increased, that is, x, for example, x=32, 48, or the like.

It should be understood that, in this implementation, the third indication information is a configuration index of the PRACH channel corresponding to the adjusted channel configuration information supplemented on the basis of the first table, and the index is referred to as a third index.

It should be understood that the channel configuration information supplemented in the existing table is valid only for the terminal device of R19.

As shown in Table 2, channel configuration information is added on the basis of Table 1, and the added part may be separately indicated, or may be mixed indicated in Table 1.

**Table 2**

| PRACH configuration index | Preamble format | n_"fr" " mod " x=y | subframe number | starting symbol | Number of PRACH slots within a subframe | , number of time-doma in PRACH occasions within a PRACH slot | PRACH duration | PRACH configuration index |
|---|---|---|---|---|---|---|---|---|
| 256 | C2 | 32 | 0 | 0,2,4,6,8 | 0 | 2 | 2 | 6 |
| 257 | A1 | 32 | 0 | 0,1,2,3,4, 5,6,7,8,9 | 0 | 2 | 2 | 6 |
| 258 | B1 | 32 | 0 | 1,3,5,7,9 | 0 | 2 | 2 | 6 |
| 259 | B1 | 48 | 0 | 1,3,5,7,9 | 0 | 2 | 2 | 6 |

Optionally, a legacy terminal may be adapted by adding a constraint. An index that can be configured for power saving of the legacy terminal can only support a period-related indicator x greater than M. For example, M is 8 or 16, and the unit is frame, that is, 10 ms.

M is a first preset period threshold. That is, the adjusted PRACH period in the third index is greater than the first preset period threshold.

In Embodiment V, a change of a PRACH resource in a time domain period may also be indicated more lightly, so as to improve an energy saving effect of the network device.

### (6) Embodiment VI

In Embodiment VI, in a possible design, the time domain allocation table may include:
a second table, where the second table refers to a table corresponding to M first indices selected from the first table that satisfy the second constraint condition. In an optional embodiment, when the time domain allocation table includes the second table, the time domain allocation table further includes at least one of the following:
selecting a first index whose period is greater than a period threshold from the first table; and
selecting first indexes with the same subframe number and different periods from the first table.

Optionally, the second table may be generated based on at least one list item in the first table. That is, new column information is added to the at least one list item in the first table. The column information may include data corresponding to the at least one list item.

Optionally, a first index whose period is greater than the period threshold may be selected from the first table, to obtain a second table including channel configuration information corresponding to the first index. Alternatively, first indexes that have the same subframe number and different periods are selected from the first table, to obtain a second table including channel configuration information corresponding to the first index.

A process where the network device employs the third indication information to instruct the terminal device to acquire the corresponding PRACH resource may specifically include:
The network device selects some content from an existing table for indication. For example, a part whose target channel configuration information is greater than a period threshold is selected, that is, a new table needs to be established for each table, but content is selected from the existing table.

The re-established table may be referred to as a second table. That is, the second table is the configuration index of the PRACH channel whose PRACH period is greater than the second preset period threshold determined from the first table. The second preset period threshold may be 40 ms, 80 ms, or the like.

In this case, the index indicated in the third indication information is a configuration index of the PRACH channel corresponding to the adjusted PRACH period in the second table, which may also be referred to as a fourth index.

Optionally, the condition selected from the existing table may be indicated by the network device. For example, the network device indicates indices corresponding to a row in the column of n_{f} mod x = ywhose x is different but subframe=1.

As shown in Table 3, a new table is created based on Table 1, and rows with different x and same subframe number in n_{f} mod x = y column are selected from Table 1.

**Table 3**

| PRACH configuration index | Preamble format | ***n***_{f} mod ***x*** = ***y*** | | subframe number | starting symbol | Number of PRACH slots within a subframe | ${N}_{t}^{RA , slot}$, number of time-domain PRACH occasions within a PRACH slot | ${N}_{dur}^{RA}$PRACH duration |
|---|---|---|---|---|---|---|---|---|
| | | *x* | *y* | | | | | |
| 0 | 0 | 16 | 1 | 1 | 0 | - | - | 0 |
| 1 | 0 | 16 | 1 | 4 | 0 | - | - | 0 |
| 2 | 0 | 16 | 1 | 7 | 0 | - | - | 0 |
| 3 | 0 | 16 | 1 | 9 | 0 | - | - | 0 |
| 4 | 0 | 8 | 1 | 1 | 0 | - | - | 0 |
| 5 | 0 | 8 | 1 | 4 | 0 | - | - | 0 |
| 6 | 0 | 8 | 1 | 7 | 0 | - | - | 0 |

In Embodiment VI, a change of the PRACH channel in the channel configuration information may also be indicated more lightly, so as to improve an energy saving effect of the network device.

### (7) Embodiment VII

In a possible design, the time domain allocation table may include:
a third table, where the third table is a table determined by using time domain configuration information.

In an optional embodiment, when the time domain allocation table includes the third table, the time domain configuration information is carried in an RRC message or a system message.

Optionally, the terminal device is further configured to receive an RRC message or a system message, and acquire the time domain configuration information from the RRC message or the system message.

Optionally, the terminal device is further configured to determine a plurality of pieces of index content based on the time domain configuration information, and determine a third table corresponding to the plurality of pieces of index content.

Further, on the basis of any one of the foregoing embodiments, the time domain configuration information includes configuration information corresponding to at least one list item, the configuration information includes at least one value of the corresponding list item, and the method further includes:
selecting a target value for each list item based on at least one value in the configuration information of each list item; and
determining one piece of index content based on the target value respectively corresponding to the at least one list item, where the third table includes a plurality of pieces of index content.

Optionally, the index content may include a newly added index and channel configuration information corresponding to the newly added index. The channel configuration information corresponding to the newly added index may be a target value respectively corresponding to at least one list item.

The newly added index refers to an index newly set for the third table. Each time an index content is generated, a new index may be added. The newly added index is an index obtained by sequentially adding 1 to the last index in the third table.

In Embodiment VII, a process in which the network device instructs, by using the third indication information, a terminal device to acquire the corresponding PRACH resource may specifically include:
The network device indicates, by using an RRC message, a type and a quantity of preamble formats, a type and a quantity of PRACH periods, and the like, to form a candidate set, and each piece of data in the candidate set is combined to form a new table. The new table includes indexes corresponding to each PRACH period.

Therefore, each index in the candidate set is determined based on the following information, and the time domain configuration information includes at least one of the following:
a type and a quantity of preamble formats; subframe number/subframe number; type and number of PRACH periods; type and quantity of subframe numbers/subframe numbers.

For example, if the preamble format configured in the RRC message is prach format 0/1/A1/C1, it may be determined that the preamble format needs to be indicated by 2 bits. If the PRACH period is 40ms/80ms/160ms, 2 bits are required to indicate the period. If the subframe number/subframe number indication in a period is 1/2/5/7/9, the value of the subframe number/subframe number needs to be indicated by 3 bits.

For example, the target channel configuration information may be carried by using DCI, MAC-CE, or dedicated signaling. For example, DCI is used to carry the following information: selecting an index content including a preamble format A1, a PRACH period 40 ms, and a subframe number/subframe number 1, allocating an index to the index content, and storing the allocated index and the index content as a row of records in the third table.

It should be understood that, when the RRC message is configured, the RRC message may be separately configured by using a List.

The index indicated in the third indication information is an index corresponding to the channel configuration information determined by using the candidate set. The index may be indicated by using DCI information.

As described above, the third indication information may be configured to indicate the target index of the time domain allocation table. When the time domain allocation table is the third table, the third indication information may be target channel configuration information, and the target index in the third table is implicitly indicated by using the target channel configuration information.

For example, the DCI information carries the third indication information, the target channel configuration information may be carried by using the DCI information, and the target index is implicitly indicated by using the target channel configuration information carried in the DCI.

In Embodiment VII, a change of a PRACH resource in a time domain period may also be indicated more lightly, so as to improve an energy saving effect of the network device.

Further, based on any one of the foregoing embodiments, after the determining the third set of time-frequency domain resources based on the third indication information, the communication method of this application further includes:
updating the third set of time-frequency domain resources based on the fourth indication information, where the updated time-frequency domain resources are used for random access.

Optionally, the fourth indication information may be carried in DCI, MAC-CE, or dedicated signaling.

Optionally, updating the third set of time-frequency domain resources may be specifically increasing or decreasing a time-frequency domain resource in the third set of time-frequency domain resources.

It may be understood that the third indication information may be configured to determine the target channel configuration information.

Further, the fourth indication information may carry to-be-updated information, and the to-be-updated information may be respective update information of one or more list items.

Optionally, the method further includes: updating the target channel configuration information corresponding to the third indication information based on the to-be-updated information carried in the fourth indication information to acquire the latest target channel configuration information, and update the third set of time-frequency domain resources based on the latest channel configuration information. An updated time-frequency domain resource of the third set of time-frequency domain resources may be referred to as a fourth set of time-frequency domain resources. The fourth set of time-frequency domain resources may be used to perform random access, and the third set of time-frequency domain resources are stopped.

It may be understood that dynamic update of the target channel configuration information is implemented by indicating the to-be-updated information by using the fourth indication information, and then dynamic update of the time-frequency domain resource is implemented by dynamically updating the target channel configuration information, thereby improving time-frequency domain resource update efficiency.

For example, after the third table is indicated by using the RRC, the target channel configuration information may be further indicated by using third indication information carried in the DCI. For example, the DCI carries a piece of index content whose preamble format is A1, a PRACH period is 40 ms, and a subframe number/subframe number is 1.

On this basis, the terminal device may further receive new DCI, where the new DCI carries updated channel configuration information. For example, the new DCI may carry a subframe number/subframe number 9. Therefore, the subframe number/subframe number in the target channel configuration information is modified to 9 to acquire a piece of new channel configuration information, that is: The preamble format is A1, the PRACH period is 40 ms, and the subframe number/subframe number is 9. Therefore, the third set of time-frequency domain resources are updated by using the new channel configuration information.

In the technical solution of this application, the third set of time-frequency domain resources are updated by using additional fourth indication information, so that the time-frequency domain resources are dynamically updated, and time-frequency domain resource update efficiency is improved.

The method provided in embodiments of this application is described in detail above with reference to FIG. 2 to FIG. 15. The apparatus provided in embodiments of this application will be described in detail below with reference to FIG. 16.

FIG. 16 is a block diagram of a resource allocation apparatus 160 according to an embodiment of this application. As shown in FIG. 16, the resource allocation apparatus 160 may include a processing unit 161 and a transceiver unit 162.

In a possible design, the resource allocation apparatus 160 may implement an operation corresponding to the terminal device in the foregoing method embodiment. For example, the resource allocation apparatus may be a terminal device, or a component, such as a chip or a circuit, configured in the terminal device.

The resource allocation apparatus 160 may implement a corresponding operation of the terminal device in the method embodiment shown in FIG. 2. For example, the transceiver unit 162 may be configured to perform step 201 in the method 200, and the processing unit 161 may be configured to perform step 202 in the method 200. In addition, the units in the resource allocation apparatus 160 and the foregoing other operations and/or functions are respectively configured to implement corresponding procedures in the method embodiment shown in FIG. 2.

Specifically, when the resource allocation apparatus 160 is configured to perform the method 200 in FIG. 2, the transceiver unit 162 may be configured to receive the first indication information. The first indication information may be configured to indicate the first set of time-frequency domain resources.

The processing unit 161 is configured to determine a first set of time-frequency domain resources based on the first indication information, where the quantity of resources in the first set of time-frequency domain resources is less than the quantity of resources in the second set of time-frequency domain resources, and the second set of time-frequency domain resources is time-frequency domain resources of all downlink beams. The first set of time-frequency domain resources is a time-frequency domain resource of the target downlink beam, and the first set of time-frequency domain resources is used for random access.

In another possible design, the resource allocation apparatus 160 may implement an operation corresponding to the network device in the foregoing method embodiment. For example, the resource allocation apparatus may be a network device or a component, such as a chip or a circuit, configured in the network device.

The resource allocation apparatus 160 may implement a corresponding operation of the network device in the method embodiment shown in FIG. 2.

Specifically, when the resource allocation apparatus 160 is configured to perform the method 200 in FIG. 2, the transceiver unit 162 may be configured to send second indication information to the terminal device, where the second indication information is configured to indicate the second set of time-frequency domain resources. The processing unit 161 may be configured to determine the second set of time-frequency domain resources based on the second indication information. The second set of time-frequency domain resources is time-frequency domain resources of all downlink beams.

It should be understood that the time-frequency domain resource may include a time domain resource and a frequency domain resource. The time domain resource may be a slot in which the terminal device can use an initial access channel, and the time domain resource may also be referred to as a time domain location. The frequency domain resource may be a frequency domain in which the terminal device can use an initial access channel, and the frequency domain resource may also be referred to as a frequency domain location.

It should be understood that the initial access channel may be a random access channel (Random Access Channel, random access channel) or a PRACH channel. When the initial access channel is a PRACH channel, the time-frequency domain resource may be a PRACH occasion (physical random access channel occasion, PO for short) .

It should be understood that all beams may be all beams formed when a network device performs beamforming. The target downlink beam is a beam actually used or delivered by the network device.

It should be understood that the time-frequency domain resource may be a radio resource in two dimensions: time and frequency in a communication system. The time-frequency domain resource includes time allocation (such as radio frames, subframes, slots, and (OFDM) (Orthogonal Frequency Division Multiplexing, orthogonal frequency division multiplexing) symbols) and frequency allocation (for example, subcarriers and physical resource blocks) of a radio signal.

Optionally, the first set of time-frequency domain resources may include at least one third time-frequency domain resource. A first quantity may be a quantity of resources of at least one third time-frequency domain resource. The second set of time-frequency domain resources may include at least one fourth time-frequency domain resource, and the second quantity may be a quantity of resources of the at least one fourth time-frequency domain resource. The first quantity is less than the second quantity.

Optionally, that the network device sends the second indication information to the terminal device may be: The network device broadcasts the second indication information to the terminal device. Sending, by the network device, first indication information to the terminal device may include: The network device broadcasts the first indication information to the terminal device.

Optionally, receiving, by the terminal device, second indication information may include: receiving, by the terminal device, the second indication information at a first moment. Receiving, by the terminal device, first indication information may include: receiving, by the terminal device, the first indication information at a second moment. The first moment may be earlier than the second moment.

In the technical solution of this application, on the basis that time-frequency domain resources of all downlink beams are determined, the first indication information may be further received, to determine the first set of time-frequency domain resources, and the first set of time-frequency domain resources may be time-frequency domain resources of the target downlink beam. The quantity of resources in the first set of time-frequency domain resources is less than the quantity of resources in the second set of time-frequency domain resources, the second set of time-frequency domain resources is time-frequency domain resources of all downlink beams. The first set of time-frequency domain resources with a smaller quantity of time-frequency domain resources is used for random access, so that a relatively small quantity of time-frequency domain resources are actually used to perform random access. In a random access process, the network device needs to perform blind detection on the time-frequency domain resources. The reduced quantity of time-frequency domain resources can effectively reduce a quantity of blind detections by the network device, thereby effectively reducing blind detection pressure of the network device, and effectively saving energy.

As an optional implementation, the first indication information may include: a quantity of beams of the target downlink beam and resource configuration information of the target downlink beam. The target downlink beam is a beam actually sent by the network device, the quantity of beams is less than a total quantity of beams, and the total quantity of beams is a quantity of beams of all beams obtained by the network device through beamforming.

Optionally, the first indication information may further include an SSB index of the target downlink beam, so as to determine the quantity of beams of the target downlink beam by using the SSB index.

Optionally, the first indication information may be carried in a SIB1, and the SIB1 needs to be sent by using a beam. Therefore, the network device may further configure scanning periods of different beams, and indicate transmission of the SIB1 by using different scanning periods.

Compared with the prior art, PRACH resources may be increased or decreased according to parameters such as the actual quantity of downlink beams and the resource configuration information, thereby improving an energy-saving gain. Further, the processing unit 161 determines the first set of time-frequency domain resources based on the quantity of beams and the resource configuration information.

In a possible design, the resource configuration information may include a maximum quantity of time-frequency domain resources or a quantity of slots; and times of association between time-frequency domain resources and beams.

A PRACH resource is used as an example herein. For example, the maximum quantity of time-frequency domain resources may be a maximum quantity of resources of a PRACH occasion. The maximum quantity of PRACH resources is used by the terminal device to obtain corresponding PRACH resources.

Preferably, the maximum quantity of resources of the PRACH occasion may be indicated in the SIB1.

Further, the processing unit 161 may determine the first set of time-frequency domain resources based on the maximum quantity of time-frequency domain resources or the quantity of slots and the quantity of beams.

Alternatively, the processing unit 161 may determine the first set of time-frequency domain resources based on the quantity of times of association between the time-frequency domain resource and the beam and the quantity of beams.

Alternatively, the processing unit 161 may further determine the first set of time-frequency domain resources based on the quantity of times of association between the time-frequency domain resource and the beam, the maximum quantity of time-frequency domain resources or the quantity of slots, and the quantity of beams.

In still another possible design, the maximum quantity of time-frequency domain resources or the quantity of slots may be obtained by using a resource list or preset.

The transceiver unit 162 is further configured to obtain a resource list, where the resource list is a list formed by a time-frequency domain resource determined for each target downlink beam; and determine the maximum quantity of time-frequency domain resources or the quantity of slots according to the resource list; or obtain the maximum quantity or the quantity of slots preset for the time-frequency domain resource.

The resource list, the maximum quantity, or the slot quantity may be indicated by using signaling such as DCI.

In still another optional implementation, the first indication information includes: a preset target resource state, where the target resource state is a first resource state or a second resource state, the first resource state is a state in which the terminal device uses the first set of time-frequency domain resources, and the second resource state is a state in which the terminal device uses the second set of time-frequency domain resources.

Further, the processing unit 161 is further configured to, in a case where the target resource state is the second resource state, perform random access by using the second set of time-frequency domain resources; and in a case where the target resource state is the first resource state, perform random access by using the first set of time-frequency domain resources.

Optionally, the quantity of beams may be used to determine the target resource state. For example, when the cell with the first beam quantity is less than 1/2 of the quantity of all beams, a format with a small the PO is used, that is, the first set of time-frequency domain resources corresponding to the first resource state is used; otherwise, another format is used, that is, the second set of time-frequency domain resources corresponding to the second resource state is used. The other format is the format with more POs.

Optionally, a quantity of POs corresponding to the first resource state is less than a quantity of POs corresponding to the second resource state.

In this embodiment, the resource state is related to a quantity of actually delivered beams. A larger quantity of beams and a smaller quantity of beams use different resource states. In addition, the quantity of beams can reflect a busy degree of the network device, so that a time-frequency domain resource is dynamically adjusted based on a requirement. This prevents the network device from performing invalid blind detection, which improves the energy-saving gain.

In still another possible design, the first indication information includes: preamble allocation information and resource allocation information of each target downlink beam, where the target downlink beam is a beam actually sent by the network device.

Further, the processing unit 161 is further configured to: determine the first set of time-frequency domain resources based on the preamble allocation information and the resource allocation information of each target downlink beam.

Further, multiple pieces of preamble allocation information and multiple pieces of resource allocation information may be predefined. Some fields in the first indication information may be written into related information of the preamble allocation information of each target downlink beam and related information of the resource allocation information, so that preamble allocation information of each target downlink beam is determined based on the related information of the preamble allocation information of each target downlink beam, and the resource allocation information is determined based on related information of the resource allocation information.

For example, the related information may include: information such as an information identifier, an information address, and/or an information name. Different information may be distinguished between by related information. For example, related information of different resource allocation information is different, and related information of different preamble allocation information is different.

In a possible design, the preamble allocation information includes any one of the following:
a quantity of preambles of each target downlink beam;
a preamble proportion of each target downlink beam, where the preamble proportion is a proportion of a code quantity of preambles of each target downlink beam to a total quantity of preambles; and
the resource allocation information includes any one of the following:
   a quantity of time-frequency domain resources allocated to each target downlink beam; and
   a time-frequency domain resource allocated to each target downlink beam.

Optionally, the processing unit 161 is further configured to: determine the first set of time-frequency domain resources based on a quantity of preambles of each target downlink beam and a quantity of time-frequency domain resources allocated to each target downlink beam.

Alternatively, the first set of time-frequency domain resources is determined based on the preamble proportion of each target downlink beam and the time-frequency domain resource allocated to each target downlink beam.

Alternatively, the first set of time-frequency domain resources is determined based on the quantity of preambles of each target downlink beam and the time-frequency domain resource allocated to each target downlink beam.

Alternatively, the first set of time-frequency domain resources is determined based on the preamble proportion of each target downlink beam and the quantity of time-frequency domain resources allocated to each target downlink beam.

In the technical solution of this application, the preamble allocation information and the resource allocation information of each target downlink beam are used to adjust a time-frequency domain resource, so that a time-frequency domain resource is flexibly allocated to each target downlink beam, and a time-frequency domain resource allocation manner is improved. A more efficient allocation result is obtained, which effectively avoids blind detection on a non-downlink beam, and improves the energy-saving gain.

In still another optional implementation, the transceiver unit 162 is further configured to receive downlink control signaling, where the downlink control signaling carries first indication information, and the first indication information includes template indication information.

The processing unit 161 is further configured to determine a target resource template from at least one preconfigured resource template based on the template indication information, where the resource template is a time-frequency domain resource preconfigured for each target downlink beam; and determining the first set of time-frequency domain resources based on the target resource template.

Optionally, at least one resource template may be predefined, and each resource template refers to an allocation mode of a time-frequency domain resource. Quantities of time-frequency domain resources of different resource templates may be different, and resource allocation modes may also be different.

Optionally, the first indication information may include, for example, mode index information. The template indication information may be, for example, information including the mode index information. That is, the template index information may be a template index of the target resource template.

In a possible design, the template indication information includes:
a template identifier or a template index, and/or the quantity of beams of the target downlink beam, where the quantity of beams is used to determine the target resource template from the at least one resource template.

Compared with the prior art, resource reallocation is implemented through template allocation, and resource allocation is performed in a lighter manner, thereby effectively improving a PRACH resource allocation manner.

As still another optional implementation, the first indication information includes: beam information of the target downlink beam;
the first set of time-frequency domain resources are a time-frequency domain resource obtained by excluding, from the second set of time-frequency domain resources, a time-frequency domain resource on which the target downlink beam is not received; or the first set of time-frequency domain resources are a time-frequency domain resource on which the target downlink beam is received in the second set of time-frequency domain resources.

Optionally, the processing unit 161 is further configured to determine a time-frequency domain resource obtained after no time-frequency domain resource of the target downlink beam is received in the second set of time-frequency domain resources as a first set of time-frequency domain resources; and alternatively, determine a time-frequency domain resource on which the target downlink beam is received in the second set of time-frequency domain resources as a first set of time-frequency domain resources.

It should be understood that the first indication information may include beam information of the target downlink beam, for example, an SSB index of the target downlink beam. Therefore, a decrease in the target downlink beam, that is, a decrease in a quantity of actual beams, may directly cause a decrease in the time-frequency domain resource. It should be further understood that when PRACH resources of some SSBs are excluded, the network device does not detect these SSBs, thereby further reducing energy consumption.

In addition, the resource allocation apparatus 160 may further implement a corresponding operation of the terminal device in the method embodiment shown in FIG. 5. For example, the transceiver unit 162 may be configured to perform step 501 in the method 500, and the processing unit 161 may be configured to perform step 502 in the method 500. In addition, the units in the resource allocation apparatus 160 and the foregoing other operations and/or functions are respectively configured to implement corresponding procedures in the method embodiment shown in FIG. 5.

Specifically, when the resource allocation apparatus 160 is configured to perform the method 500 in FIG. 5, the transceiver unit 162 may be configured to receive second indication information, where the second indication information is configured to indicate the second set of time-frequency domain resources. The transceiver unit 162 may be configured to: receive third indication information. The third indication information is configured to indicate the third set of time-frequency domain resources.

The processing unit 161 is specifically configured to determine a third set of time-frequency domain resources based on the third indication information, where the third set of time-frequency domain resources is different from a second set of time-frequency domain resources, the second set of time-frequency domain resources is time-frequency domain resources of all downlink beams, and the third set of time-frequency domain resources is used for random access.

The processing unit 161 is specifically configured to determine the second set of time-frequency domain resources based on the second indication information.

Optionally, the third indication information may be configured to indicate the target channel configuration information of the time-frequency domain resource. The channel configuration information may be configured to configure a time-frequency domain resource of an initial access channel. The third set of time-frequency domain resources is a time-frequency domain resource determined by using the target channel configuration information, and may be specifically a time-frequency domain resource obtained after the time-frequency domain resource of the initial access channel is configured by using the target channel configuration information.

It should be understood that the channel configuration information of the time-frequency domain resource may be related to the quantity of users. Further, the network device may determine the channel configuration information of the time-frequency domain resource of each beam on the initial access channel based on the quantity of users in an area covered by each beam.

The transmission period in the channel configuration information is taken as an example, and the transmission period of the time-frequency domain resource is inversely proportional to the quantity of users. A larger quantity of users indicates more resources required. In this case, a smaller transmission period of the time-frequency domain resource is, a smaller quantity of users is, fewer time-frequency domain resources are required, and a larger transmission period of the time-frequency domain resource is required.

Optionally, the processing unit 161 may be further configured to determine a third set of time-frequency domain resources based on the target channel configuration information and the second set of time-frequency domain resources.

In the technical solution of this application, the network device may indicate the third indication information of different time-frequency domain resources to the user based on different requirements, and configure a new time-frequency domain resource, so that the time-frequency domain resource is more adapted to a use requirement, and flexibility of adjusting the time-frequency domain resource is improved. In addition, the time-frequency domain resource may be re-determined by using the indication of the third indication information, so that more lightweight resource scheduling may be implemented, and time-frequency domain resource scheduling efficiency may be improved.

In an optional implementation, the third set of time-frequency domain resources includes a first time-frequency domain resource and a second time-frequency domain resource, the first time-frequency domain resource belongs to or does not belong to the second set of time-frequency domain resources, and the second time-frequency domain resource does not belong to the second set of time-frequency domain resources.

It may be understood that, as the quantity of users decreases, the network device may re-indicate a new transmission period, to adjust a time-frequency domain resource by using the new transmission period, thereby implementing flexible adjustment of the time-frequency domain resource, and improving utilization of the time-frequency domain resource.

In the technical solution of this application, another time-frequency domain resource other than the second set of time-frequency domain resources is set, for example, a second time-frequency domain resource that does not belong to the second set of time-frequency domain resources, to implement re-divisioning of the time-frequency domain resource by using the third indication information, thereby improving the flexibility of time-frequency domain resource scheduling. As the quantity of users increases, more time-frequency domain resources may be set, so that setting of the time-frequency domain resource is related to the quantity of users, and invalid blind detection of the network device may be avoided, thereby implementing effective energy saving of the network device.

In still another optional implementation, the method further includes at least one of the following:
a transmission period of the third set of time-frequency domain resources is different from a transmission period of the second set of time-frequency domain resources;
a quantity of resources in the third set of time-frequency domain resources is different from a quantity of resources in the second set of time-frequency domain resources; and
a second time-frequency domain resource of the third set of time-frequency domain resources is different from a time-frequency domain resource of the second set of time-frequency domain resources.

Optionally, a first time-frequency domain resource in the third set of time-frequency domain resources is the same as or different from a time-frequency domain resource in the second set of time-frequency domain resources.

Optionally, a transmission period of the third set of time-frequency domain resources is less than a transmission period of the second set of time-frequency domain resources. A transmission period of the third set of time-frequency domain resources may be further greater than a transmission period of the second set of time-frequency domain resources. A quantity of resources in the third set of time-frequency domain resources may be less than a quantity of resources in the second set of time-frequency domain resources. A quantity of resources in the third set of time-frequency domain resources may be greater than a quantity of resources in the second set of time-frequency domain resources.

Through time-frequency domain resource adjustment, a transmission period, a resource quantity, and a time-frequency domain resource of the third set of time-frequency domain resources are changed, so that more time-frequency domain resources are provided, and the third set of time-frequency domain resources are changed. Therefore, a time of scanning a time-frequency domain resource by the network device changes accordingly, so that blind detection of the network device is more scientific, scanning efficiency of the network device is effectively improved, and energy saving is implemented efficiently.

In a possible design, the third indication information is carried in downlink control information DCI, a MAC-CE, or dedicated signaling.

It should be understood that a field may be set in the downlink control information DCI, the MAC-CE, or the dedicated signaling to carry the third indication information.

The following describes in detail a solution of adding a new time-frequency domain resource by using channel configuration information. In a related technology, the time-frequency domain resource may be configured by using a time domain allocation table. To quickly indicate the time-frequency domain resource, the target channel configuration information may be indicated by using the time domain allocation table.

In still another possible design, upon receiving the third indication information, the terminal device may further receive fourth indication information. Further, the terminal device may update the third set of time-frequency domain resources based on the fourth indication information. The updated third set of time-frequency domain resources may be used for random access.

It may be understood that the fourth indication information may be channel configuration information configured for the PRACH. For example, the fourth indication information may be information such as a preamble format, a subframe number/a subframe number.

In addition, the fourth indication information may be carried in DCI, a MAC-CE, or dedicated signaling.

In still another optional implementation, the third indication information is configured to indicate the target index in the time domain allocation table; and the processing unit 161 may be further configured to determine periodic channel configuration information corresponding to the target index as the target channel configuration information based on the time domain allocation table; and determine the third set of time-frequency domain resources based on the target channel configuration information.

In this embodiment of this application, a target index is indicated by using the time domain allocation table, and channel configuration information corresponding to the target index is determined as the target channel configuration information, to implement lighter and more flexible channel configuration information adjustment, so as to further indicate a new time-frequency domain resource by using the channel configuration information, thereby improving the adjustment efficiency of time-frequency domain resource.

In a possible design, the third indication information includes a target index, and the target index is any one of the following:
a first index in a time domain allocation table; and
a second index that meets a first constraint condition in the time domain allocation table.

It should be noted that, the target index is indicated by using the time domain allocation table, so that the target channel configuration information may be further determined to implement precise and lightweight indication of the target channel configuration information.

It should be noted that, when the channel configuration information of the PRACH is adjusted, a value of y in the channel configuration information in the target index in the time domain allocation table may be specifically adjusted. If the value of y becomes larger, a period corresponding to the PRACH is prolonged.

In still another possible design, when the target index is the second index, the second index that meets the first constraint condition in the time domain allocation table is any one of the following:
The second index is an index whose preamble format in the time domain allocation table is the first preamble format, and the first preamble format is indicated by the first message.

The second index is an index whose starting symbol in the time domain allocation table is a preset target symbol.

The second index is an index in the time domain allocation table whose subframe number is the same as the subframe number of the third index, and/or whose preamble format is the same as the preamble format of the third index, and the third index is indicated by the second message.

The second index is an index whose period is the same as the target period in the time domain allocation table. The target period may be obtained by performing multiple adjustment based on a period of the fourth index, and the fourth index is indicated by the third message.

Optionally, the first message, the second message, or the third message may be any one of a system message, for example, a SIB1, a master information block (Master Information Block, master information block), or a master system information block.

In the technical solution of this application, index indication is performed in an index constraint manner, so that channel configuration information is determined by using an indication index, and a new time-frequency domain resource is further configured by using the channel configuration information, thereby implementing flexible adjustment of the time-frequency domain resource.

In any embodiment of this application, the terminal device may be UE that meets a first communication standard. The terminal device may also be UE that meets a second communication standard. In addition, the terminal device may also be UE that meets the first communication standard and the second communication standard.

For example, the first communication standard may be an existing or existing communication standard. The second communication standard may be a latest communication standard. That is, a publication time of the first communication standard is earlier than a publication time of the second communication standard. For example, the first communication standard may be an R17 standard or an R18 standard, and the second communication standard may be an R19 standard.

Further, the terminal device may support the second set of time-frequency domain resources in the first communications standard, and may support the first set of time-frequency domain resources in the second communications standard.

In this implementation, a PRACH period corresponding to a legacy (legacy) terminal device is designed to be greater than a PRACH period corresponding to a new R19 terminal device, so that a PRACH occasion becomes dense in a same time period, and a PRACH resource of a legacy user is not affected. In addition, more PRACH occasions are provided for new terminal devices, so that PRACH resources are more compatible.

In still another possible design, the time domain allocation table includes at least one of the following: a first table, where the first table includes an existing time domain table and/or a newly added time domain table;
a second table, where the second table is a table that is selected from the first table and corresponding to M first indexes that meet the second constraint condition; and
a third table, where the third table is a table determined by using time domain configuration information.

It should be understood that the foregoing time domain allocation table may be, for example, the first table. The first table may include at least one list item, and the second table may be generated based on at least one list item of the first table. For example, the at least one list item may form an information format of the channel configuration information.

Optionally, the second table may be generated based on at least one list item in the first table. That is, new column information is added to the at least one list item in the first table. The column information may include data corresponding to the at least one list item.

It may be understood that when the time domain allocation table includes the third table, the time domain configuration information is carried in an RRC message or a system message.

Further, when the time domain allocation table includes the second table, the method further includes at least one of the following:
selecting a first index whose period is greater than a period threshold from the first table; and
selecting first indexes with the same subframe number and different periods from the first table.

Optionally, the processing unit 161 may be further configured to select, from the first table, a first index whose period is greater than the period threshold, to obtain a second table including channel configuration information corresponding to the first index. Alternatively, first indexes that have the same subframe number and different periods are selected from the first table, to obtain a second table including channel configuration information corresponding to the first index.

In still another possible design, the time domain configuration information includes configuration information separately corresponding to the at least one list item, the configuration information includes at least one value of the corresponding list item, and the processing unit 161 may be further configured to select a target value for each list item based on at least one value in the configuration information of each list item; and determine one piece of index content based on the target value respectively corresponding to the at least one list item, where the third table includes a plurality of pieces of index content.

Optionally, the index content may include a newly added index and channel configuration information corresponding to the newly added index. The channel configuration information corresponding to the newly added index may be a target value respectively corresponding to at least one list item.

It may be understood that, in actual application, the third set of time-frequency domain information may be determined based on at least one of the foregoing channel configuration information. In this embodiment, a type and a quantity of the at least one piece of information that participates in time-frequency domain resource adjustment are not limited too much.

It should be understood that specific processes in which the units perform the foregoing corresponding steps are described in detail in the foregoing method embodiments. For brevity, details are not described herein again.

It should be further understood that division of the modules in the embodiments of this application is merely an example for illustration, and is only logical function division, which may be other division in actual implementation. In addition, the functional modules in the embodiments of this application may be integrated into one processor or exist alone physically, or two or more modules may be integrated into one module. The foregoing integrated module may be implemented in the form of hardware, or may be implemented in a form of a software functional module.

It should be understood that the resource allocation apparatus 160 may correspond to the terminal device 1001 or the network device 1002 in the communications system shown in FIG. 1A. The processing unit 161 in the resource allocation apparatus 160 may correspond to a processor in the terminal device 1001 or the network device 1002, and the processor in the terminal device 1001 or the network device 1002 may invoke the instruction stored in the memory, to implement the foregoing functions, for example, a function such as determining each set of time-frequency domain resources; the transceiver unit 162 may correspond to an interface in the terminal device 1001 or the network device 1002, and may implement the foregoing functions of receiving and/or sending data in response to an instruction of the processor.

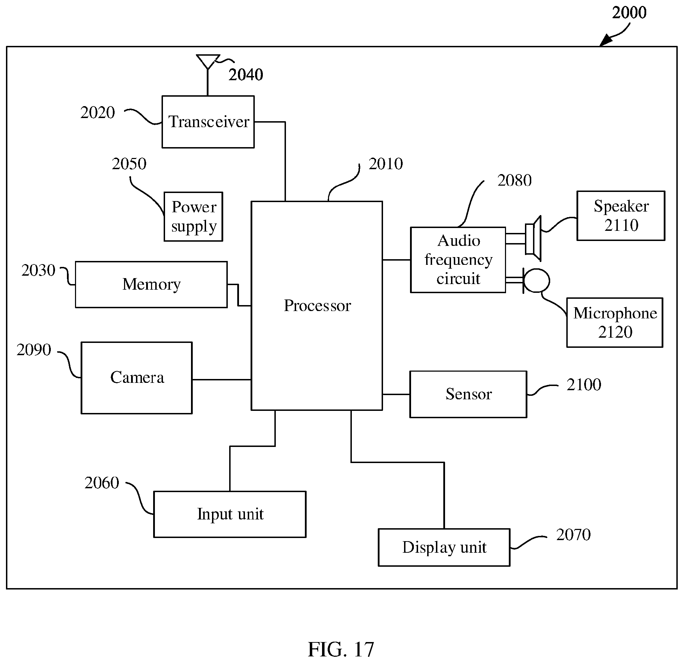

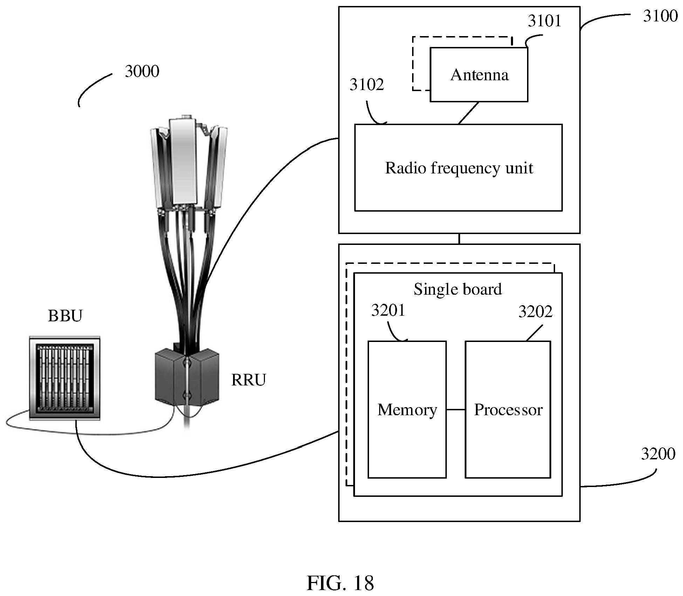

It should be further understood that when the transceiver unit 162 in the resource allocation apparatus 160 may be implemented via a transceiver or a communication interface, for example, correspond to the transceiver 2020 in the terminal device 2000 shown in FIG. 17 or the transceiver 3100 in the network device 3000 shown in FIG. 18. The processing unit 161 in the resource allocation apparatus 160 may be implemented by using at least one processor, for example, may correspond to the processor 2010 in the terminal device 2000 shown in FIG. 17 and the processor 3202 in the network device 3000 shown in FIG. 18.

FIG. 17 is a structural diagram of a terminal device 2000 according to an embodiment of this application. The terminal device 2000 may be applied to the system shown in FIG. 1A, and performs functions of the terminal device in the foregoing method embodiments. As shown in FIG. 17, the terminal device 2000 includes a processor 2010 and a transceiver 2020. Optionally, the terminal device 2000 further includes a memory 2030. The processor 2010, the transceiver 2020, and the memory 2030 may communicate with each other by using an internal connection path to transfer a control signal and/or a data signal. The memory 2030 is configured to store a computer program. The processor 2010 is configured to invoke and run the computer program from the memory 2030. so as to control the transceiver 2020 to receive and send signals. Optionally, the terminal device 2000 may further include an antenna 2040, configured to send, by using a wireless signal, uplink data or uplink control signaling output by the transceiver 2020.

The processor 2010 and the memory 2030 may be combined into one processing apparatus. The processor 2010 is configured to execute a program code stored in the memory 2030 to implement the foregoing functions. During specific implementation, the memory 2030 may alternatively be integrated into the processor 2010, or independent of the processor 2010. The processor 2010 may correspond to the processing unit 161 in FIG. 16.

The transceiver 2020 may correspond to the transceiver unit 162 in FIG. 16. The transceiver 2020 may include a receiver (or referred to as a receiver or a receiving circuit) and a transmitter (or referred to as a transmitter or a transmitting circuit). The receiver is configured to receive a signal, and the transmitter is configured to send a signal.

It should be understood that the terminal device 2000 shown in FIG. 17 can implement processes related to the terminal device in the method embodiments shown in FIG. 2 to FIG. 15. Operations and/or functions of modules in the terminal device 2000 are respectively configured to implement corresponding procedures in the foregoing method embodiments. For details, refer to the description in the foregoing method embodiments. To avoid repetition, detailed description is appropriately omitted herein.

The processor 2010 may be configured to perform actions internally implemented by the terminal device and described in the foregoing method embodiments, and the transceiver 2020 may be configured to perform actions sent by the terminal device to or received from the network device and described in the foregoing method embodiments. For details, refer to the descriptions in the foregoing method embodiments. The details are not described herein again.

Optionally, the terminal device 2000 may further include a power supply 2050, configured to supply power for various components or circuits in the terminal device.

In addition, to improve functions of the terminal device, the terminal device 2000 may further include one or more of an input unit 2060, a display unit 2070, an audio frequency circuit 2080, a camera 2090, a sensor 2100, and the like. The audio frequency circuit may further include a speaker 2082, a microphone 2084, and the like.

FIG. 18 is a structural diagram of a network device according to an embodiment of this application, for example, may be a structural diagram of a base station/CU. The base station 3000 may be applied to the system shown in FIG. 1A, and performs functions of the network device in the foregoing method embodiments. As shown in FIG. 18, the base station 3000 may include one or more radio frequency units, such as a remote radio unit (remote radio unit, RRU) 3100 and one or more baseband units (BBU) (also referred to as a distributed unit (DU)) 3200. The RRU 3100 may be referred to as a transceiver unit, and corresponds to the transceiver unit 162 in FIG. 16. Optionally, the transceiver unit 3100 may also be referred to as a transceiver, a transceiver circuit, or a transceiver, and may include at least an antenna 3101 and a radio frequency unit 3102. Optionally, the transceiver unit 3100 may include a receiving unit and a sending unit. The receiving unit may correspond to a receiver (or referred to as a receiver device or a receiver circuit), and the sending unit may correspond to a transmitter (or referred to as a transmitter device or a transmitting circuit). Part of the RRU 3100 is mainly configured to receive and send a radio frequency signal and convert the radio frequency signal and a baseband signal, for example, configured to send indication information to a terminal device. The BBU 3200 is mainly configured to perform baseband processing, control a base station, and the like. The RRU3100 and the BBU 3200 may be physically disposed together or physically separated, that is, a distributed base station.

The BBU 3200 is a control center of the base station, or referred to as a processing unit, which may correspond to the processing unit 161 in FIG. 16. The BBU is mainly configured to complete a baseband processing function, such as channel coding, multiplexing, modulation, and spreading. For example, the BBU (processing module) may be configured to control the base station to perform operation procedures related to the network device in the foregoing method embodiments, for example, to generate the foregoing indication information and the like.

In an example, the BBU 3200 may be formed by one or more single boards, and the plurality of single boards may jointly support a wireless access network (such as an LTE network) of a single access standard, or may respectively support wireless access networks of different access standards (such as an LTE network, a 5G network, or another network). The BBU 3200 further includes a memory 3201 and a processor 3202. The memory 3201 is configured to store necessary instructions and data. The processor 3202 is configured to control the base station to perform a necessary action, for example, to control the base station to perform an operation procedure related to the network device in the foregoing method embodiments. The memory 3201 and the processor 3202 may serve one or more single boards. In other words, a memory and a processor may be disposed on each single board. Alternatively, the plurality of single boards may share a same memory and a same processor. In addition, a necessary circuit may be further disposed on a single board.

It should be understood that the base station 3000 shown in FIG. 18 may implement each process related to the access network device in the method embodiments in FIG. 3 to FIG. 15. Operations and/or functions of the modules in the base station 3000 are respectively used to implement corresponding procedures in the foregoing method embodiments. For details, refer to the description in the foregoing method embodiments. To avoid repetition, detailed description is appropriately omitted herein.

The BBU 3200 may be configured to perform actions internally implemented by the network device and described in the foregoing method embodiments, and the RRU 3100 may be configured to perform actions sent by the network device to or received from the terminal device and described in the foregoing method embodiments. For details, refer to the descriptions in the foregoing method embodiments. The details are not described herein again.

It should be understood that the base station 3000 shown in FIG. 18 is merely a possible architecture of the network device, and should not constitute any limitation on this application. The method provided by this application is applicable to network devices of other architectures. For example, a network device including a CU, a DU, and an active antenna unit (active antenna unit, AAU). This application imposes no limitation on a specific architecture of the network device.

An embodiment of this application further provides a processing apparatus, including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps of the foregoing method may be implemented by using a hardware integrated logic circuit in the processor or instructions in a form of software. The steps of the method disclosed in combination with embodiments of this application may be directly performed by a hardware processor, or may be performed through a combination of hardware and software modules in the processor. The software module may be stored in a storage medium that is mature in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor. To avoid repetition, details are not described herein again.

It should be noted that the processor in the embodiments of this application may be an integrated circuit chip or a chip system having a signal processing capability. In an implementation process, the steps in the foregoing method embodiments may be completed by a hardware-integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component, and The methods, steps, and logical block diagrams disclosed in the embodiments of this application may be implemented or performed. The general-purpose processor may be a microprocessor, or the processor may be any conventional processor or the like. The steps of the methods disclosed with reference to embodiments of this application may be directly implemented by a hardware decoding processor, or may be implemented by a combination of hardware in the decoding processor and a software module. The software module may be stored in a storage medium that is mature in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor.

It may be understood that the memory in the embodiments of this application may be a volatile memory or a non-volatile memory, or may include both a volatile memory and a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. The volatile memory may be a random access memory (random access memory, RAM), used as an external cache. Through illustrative but not limited description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memories in the systems and methods described in this specification are intended to include but not limited to these memories and any memory of another proper type.

According to the method provided in embodiments of this application, an embodiment of this application further provides a computer program product. The computer program product includes a computer program code. When the computer program code is run on a computer, the computer is caused to perform the method according to any one of the method embodiments shown in FIG. 3 to FIG. 11.

Based on the method provided in the embodiments of this application, this application further provides a computer-readable storage medium. The computer-readable storage medium stores program code, and the program code, when run on a computer, causes the computer to perform the method according to any one of the embodiments shown in FIG. 3 to FIG. 11.

According to the method provided in the embodiments of this application, this application further provides a system, including the foregoing one or more terminal devices and one or more network devices.

The network device in the foregoing apparatus embodiments corresponds to the terminal device and the network device or the terminal device in the method embodiments, and corresponding modules or units perform corresponding steps. For example, a communication unit (transceiver) performs the receiving or sending steps in the method embodiments. Other steps except sending and receiving may be performed by a processing unit (processor). For functions of specific units, refer to the corresponding method embodiments. There may be one or more processors.

Terminologies such as "component", "module", and "system" used in this specification indicate computer-related entities, hardware, firmware, combinations of hardware and software, software, or software being executed. For example, the component may be, but is not limited to, a process that runs on a processor, a processor, an object, an executable file, an execution thread, a program, and/or a computer. As illustrated in figures, both a computing device and an application that runs on the computing device may be components. One or more components may reside within a process and/or a thread of execution, and a component may be located on one computer and/or distributed on two or more computers. In addition, these components may be executed in various computer-readable media storing various data structures. The components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that various illustrative logical blocks (illustrative logical block) and steps (step) described with reference to embodiments disclosed in this specification can be implemented by electronic hardware or a combination of computer software and electronic hardware. Whether the functions are executed by hardware or software depends on specific applications and design constraint conditions of the technical solutions. A person skilled in the art may use different methods to implement the described functions for each particular application, but it should not be considered that such an implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual coupling or direct coupling or communication connection may be through some interfaces, and the indirect coupling or communication connection of the apparatus or the unit may be in an electrical, mechanical, or other form.

The units described as separate parts may or may not be physically separate, and components shown as units may or may not be physical units, that is, may be located in one position, or may be distributed on a plurality of network units. Some or all of the units may be selected based on actual requirements to achieve the objectives of the solutions in the embodiments.

In addition, the functional units in embodiments of this application may be integrated in one processing unit, each of the units may stand alone physically, or two or more units may be integrated in one unit.

All or some of the functional units in the foregoing embodiments may be implemented by software, hardware, firmware, or any combination thereof. When software is used to implement the foregoing embodiments, all or some of the foregoing embodiments may be implemented in a form of a computer program product. A computer program product includes one or more computer instructions (programs). When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be sent from a computer-readable storage medium to another computer-readable storage medium. For example, the computer instructions may be sent from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

When the function is implemented in the form of a software functional unit and sold or used as an independent product, the integrated unit may be stored in a computer-readable storage medium. Based on such understanding, the technical solutions of this application essentially, or the part contributing to the prior art, or the part of the technical solutions may be implemented in a form of a software product. The computer software product is stored in a storage medium and includes several instructions for instructing a computer device (which may be a personal computer, a server, or a network device) to perform all or some of the steps of the methods in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource allocation method, comprising:
receiving first indication information, wherein the first indication information is used to indicate a first set of time-frequency domain resources; and
determining the first set of time-frequency domain resources based on the first indication information, wherein a quantity of resources in the first set of time-frequency domain resources is less than a quantity of resources in a second set of time-frequency domain resources, the second set of time-frequency domain resources is time-frequency domain resources of all downlink beams, the first set of time-frequency domain resources is a time-frequency domain resource of a target downlink beam, and the first set of time-frequency domain resources is used for random access.

2. The method according to claim 1, wherein the first indication information comprises:
a quantity of beams of the target downlink beam and resource configuration information of the target downlink beam;
the target downlink beam is a beam actually sent by a network device, the quantity of beams is less than a total quantity of beams, and the total quantity of beams is a quantity of all beams obtained by the network device through beamforming; and
the determining the first set of time-frequency domain resources based on the first indication information comprises:
determining the first set of time-frequency domain resources based on the quantity of beams and the resource configuration information.

3. The method according to claim 2, wherein the resource configuration information comprises at least one of the following:
a maximum quantity of time-frequency domain resources or a quantity of slots; and
a quantity of times of association between time-frequency domain resources and beams.

4. The method according to claim 3, further comprising:
obtaining a resource list, wherein the resource list is a list comprising time-frequency domain resources determined for each target downlink beam; and determining the maximum quantity of time-frequency domain resources or the quantity of slots based on the resource list; or,
obtaining the maximum quantity or the quantity of slots preset for the time-frequency domain resources.

5. The method according to claim 1, wherein the first indication information further comprises:
a preset target resource state, wherein the target resource state is a first resource state or a second resource state, the first resource state is a state of the first set of time-frequency domain resources used by a terminal device, and the second resource state is a state of the second set of time-frequency domain resources used by the terminal device.

6. The method according to claim 5, further comprising:
when the target resource state is the second resource state, performing random access by using the second set of time-frequency domain resources; and
when the target resource state is the first resource state, performing random access by using the first set of time-frequency domain resources.

7. The method according to claim 1, wherein the first indication information comprises:
preamble allocation information and resource allocation information of each target downlink beam, wherein the target downlink beam is a beam actually sent by a network device; and
the determining the first set of time-frequency domain resources based on the first indication information comprises:
determining the first set of time-frequency domain resources based on the preamble allocation information and the resource allocation information of each target downlink beam.

8. The method according to claim 7, wherein the preamble allocation information comprises any one of the following:
a quantity of preambles of each target downlink beam;
a preamble proportion of each target downlink beam, wherein the preamble proportion is a proportion of a code quantity of preambles of each target downlink beam to a total code quantity of the preambles; and
the resource allocation information comprises any one of the following:
a quantity of time-frequency domain resources allocated to each target downlink beam; and
a time-frequency domain resource allocated to each target downlink beam.

9. The method according to claim 1, wherein the receiving first indication information comprises:
receiving downlink control signaling, wherein the downlink control signaling carries the first indication information, and the first indication information comprises template indication information; and
the determining the first set of time-frequency domain resources based on the first indication information comprises:
determining a target resource template from at least one preconfigured resource template based on the template indication information, wherein the resource template is a time-frequency domain resource preconfigured for each target downlink beam; and
determining the first set of time-frequency domain resources based on the target resource template.

10. The method according to claim 9, wherein the template indication information comprises:
a template identifier or a template index, and/or a quantity of beams of the target downlink beam, wherein the quantity of beams is used to determine the target resource template from the at least one resource template.

11. The method according to claim 1, wherein the first indication information comprises: beam information of the target downlink beam;
the first set of time-frequency domain resources are a time-frequency domain resource obtained by excluding, from the second set of time-frequency domain resources, a time-frequency domain resource on which the target downlink beam is not received; or
the first set of time-frequency domain resources are a time-frequency domain resource on which the target downlink beam is received in the second set of time-frequency domain resources.

12. The method according to any one of claims 1 to 11, wherein the first indication information is carried in radio resource control RRC signaling, a media access control-control element MAC-CE, downlink control information DCI, a synchronization signal block SSB, a system information block SIB1, or a system message.

13. The method according to any one of claims 1 to 12, further comprising:
receiving second indication information; and
determining the second set of time-frequency domain resources based on the second indication information.

14. A resource allocation method, comprising:
receiving third indication information; and
determining a third set of time-frequency domain resources based on the third indication information, wherein the third set of time-frequency domain resources is different from a second set of time-frequency domain resources, the second set of time-frequency domain resources is time-frequency domain resources of all downlink beams, and the third set of time-frequency domain resources is used for random access.

15. The method according to claim 14, wherein the third set of time-frequency domain resources comprises a first time-frequency domain resource and a second time-frequency domain resource, the first time-frequency domain resource belongs to or does not belong to the second set of time-frequency domain resources, and the second time-frequency domain resource does not belong to the second set of time-frequency domain resources.

16. The method according to claim 14, further comprising at least one of the following:
a transmission period of the third set of time-frequency domain resources is different from a transmission period of the second set of time-frequency domain resources;
a resource quantity of the third set of time-frequency domain resources is different from a resource quantity of the second set of time-frequency domain resources; and
a second time-frequency domain resource of the third set of time-frequency domain resources is different from a time-frequency domain resource of the second set of time-frequency domain resources.

17. The method according to claim 14, wherein the third indication information is carried in a radio resource control RRC message, a system message, downlink control information DCI, an MAC-CE, or dedicated signaling.

18. The method according to claim 14, further comprising:
updating the third set of time-frequency domain resources based on fourth indication information, wherein the updated third set of time-frequency domain resources is used for random access.

19. The method according to claim 18, further comprising:
the fourth indication information is carried in DCI, an MAC-CE, or dedicated signaling.

20. The method according to any one of claims 14 to 19, wherein the third indication information is used to indicate a target index in a time domain allocation table; and
the method further comprises:
determining channel configuration information corresponding to the target index as target channel configuration information based on the time domain allocation table; and
determining the third set of time-frequency domain resources based on the target channel configuration information.

21. The method according to claim 20, wherein the third indication information comprises the target index, and the target index is any one of the following:
a first index in the time domain allocation table; and
a second index that meets a first constraint condition in the time domain allocation table.

22. The method according to claim 21, wherein when the target index is the second index, the second index that meets the first constraint condition in the time domain allocation table is any one of the following:
the second index is an index whose preamble format is a first preamble format in the time domain allocation table, and the first preamble format is indicated by a first message;
the second index is an index whose starting symbol is a preset target symbol in the time domain allocation table;
the second index is an index in the time domain allocation table whose subframe number is the same as a subframe number of a third index, and/or whose preamble format is the same as a preamble format of the third index, and the third index is indicated by a second message; and
the second index is an index whose period is the same as a target period in the time domain allocation table, the target period is obtained by performing multiple adjustment based on a period of a fourth index, and the fourth index is indicated by a third message.

23. The method according to claim 21, wherein the time domain allocation table comprises at least one of the following:
a first table, wherein the first table comprises an existing time domain table and/or a newly added time domain table;
a second table, wherein the second table is a table corresponding to M first indexes selected from the first table and meeting a second constraint condition; and
a third table, wherein the third table is a table determined by using time domain configuration information.

24. The method according to claim 23, wherein when the time domain allocation table comprises the second table, the method further comprises at least one of the following:
selecting a first index whose period is greater than a period threshold from the first table; and
selecting first indexes with a same subframe number and different periods from the first table.

25. The method according to claim 23, wherein when the time domain allocation table comprises the third table, the time domain configuration information is carried in the RRC message or the system message.

26. The method according to claim 25, wherein the time domain configuration information comprises configuration information respectively corresponding to at least one list item, the configuration information comprises at least one value of a corresponding list item, and the method further comprises:
selecting a target value for each list item based on at least one value in the configuration information of each list item; and
determining one piece of index content based on a target value respectively corresponding to the at least one list item, wherein the third table comprises a plurality of pieces of index content.

27. The method according to any one of claims 20 to 26, wherein the time domain allocation table comprises a plurality of indexes and channel configuration information associated with each index; and
each piece of channel configuration information comprises at least one of the following:
a preamble format;
a period, wherein the period is determined based on y, and y is a modulo operation result obtained by performing a modulo operation by using x as a modulo value;
a subframe number/subframe number;
a starting symbol;
the number of PRACH slots within a subframe;
the number of time-domain PRACH occasions within a PRACH slot; and
a PRACH duration.

28. A resource allocation method, comprising:
sending first indication information to a terminal device, wherein the first indication information is used to indicate a first set of time-frequency domain resources, a quantity of resources in the first set of time-frequency domain resources is less than a quantity of resources in a second set of time-frequency domain resources, the second set of time-frequency domain resources is time-frequency domain resources of all downlink beams, the first set of time-frequency domain resources are time-frequency domain resources of a target downlink beam, and the first set of time-frequency domain resources is used for random access.

29. A resource allocation method, comprising:
sending third indication information to a terminal device, wherein the third indication information is used to indicate a third set of time-frequency domain resources, the third set of time-frequency domain resources is different from a second set of time-frequency domain resources, the second set of time-frequency domain resources is time-frequency domain resources of all downlink beams, and the third set of time-frequency domain resources is used for random access.

30. A terminal device, comprising: a processor, a memory, and a transceiver, wherein
the memory stores computer-executable instructions; and the transceiver is configured to receive and transmit data; and
the processor executes the computer-executable instructions stored in the memory, so that the terminal device performs the method according to any one of claims 1 to 27.

31. A network device, comprising: a processor, a memory, and a transceiver, wherein
the memory stores computer-executable instructions; and the transceiver is configured to receive and transmit data; and
the processor executes the computer-executable instruction stored in the memory, so that the network device performs the method according to claim 28 or 29.

32. A computer-readable storage medium, storing a computer program, wherein when the computer program is executed by a processor, the method according to any one of claims 1 to 29 is implemented.

33. A chip system, comprising at least one processor and a communication interface, wherein the communication interface and the at least one processor are interconnected through a line, and the at least one processor is configured to run a computer program or instructions, to perform the method according to any one of claims 1 to 29.

34. A computer program product, comprising a computer program, wherein when the computer program is run, a computer is enabled to perform the method according to any one of claims 1 to 29.
